(19) **Europäisches Patentamt**
**European Patent Office**
**Office européen des brevets**

(11) **EP 4 317 515 A1**

(12) **EUROPEAN PATENT APPLICATION**
published in accordance with Art. 153(4) EPC

(43) Date of publication:
**07.02.2024 Bulletin 2024/06**

(51) International Patent Classification (IPC):
*C22C 38/22* (2006.01)    *C22C 38/24* (2006.01)
*C22C 38/26* (2006.01)    *C22C 38/28* (2006.01)
*C21D 8/02* (2006.01)

(21) Application number: **22779093.8**

(52) Cooperative Patent Classification (CPC):
**C21D 8/02; C22C 38/22; C22C 38/24; C22C 38/26; C22C 38/28**

(22) Date of filing: **31.03.2022**

(86) International application number:
**PCT/CN2022/084529**

(87) International publication number:
**WO 2022/206913 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.04.2021   CN 202110360132**
**02.04.2021   CN 202110360536**
**02.04.2021   CN 202110360516**
**02.04.2021   CN 202110360518**
**02.04.2021   CN 202110360153**
**02.04.2021   CN 202110360519**

(71) Applicant: **BAOSHAN IRON & STEEL CO., LTD.**
**Shanghai 201900 (CN)**

(72) Inventors:
• **WANG, Jian**
**Shanghai 201900 (CN)**
• **LI, Jun**
**Shanghai 201900 (CN)**

• **ZHANG, Liyang**
**Shanghai 201900 (CN)**
• **LIU, Huafei**
**Shanghai 201900 (CN)**
• **WANG, Junfei**
**Shanghai 201900 (CN)**
• **DU, Xiaofeng**
**Shanghai 201900 (CN)**
• **XIONG, Wei**
**Shanghai 201900 (CN)**
• **ZHANG, Baoping**
**Shanghai 201900 (CN)**
• **LU, Fengzhi**
**Shanghai 201900 (CN)**
• **MAO, Zhanhong**
**Shanghai 201900 (CN)**
• **GUAN, Chuang**
**Shanghai 201900 (CN)**

(74) Representative: **Kuhnen & Wacker**
**Patent- und Rechtsanwaltsbüro PartG mbB**
**Prinz-Ludwig-Straße 40A**
**85354 Freising (DE)**

(54) **DUAL-PHASE STEEL AND HOT-DIP GALVANIZED DUAL-PHASE STEEL HAVING TENSILE STRENGTH GREATER THAN OR EQUAL TO 980MPA AND METHOD FOR MANUFACTURING SAME BY MEANS OF RAPID HEAT TREATMENT**

(57)    A low-carbon and low-alloy dual-phase steel and hot-dip galvanized dual-phase steel having tensile strength greater than or equal to 980 MPa and a method for manufacturing by means of rapid heat treatment. The steel has the following chemical components in percentage by mass: C: 0.05~0.17%, Si: 0.1~0.7%, Mn: 1.4-2.8%, P≤0.020%, S≤0.005%, B≤0.005%, and Al: 0.02-0.055%, and may also contain two or more of Nb, Ti, Cr, Mo, and V, Cr+Mo+Ti+Nb+V≤1.1%, and the balance is Fe and other inevitable impurities. The method for manufacturing the steel comprises: smelting, casting, hot rolling, cold rolling and rapid heat treatment procedures. According to the present invention, the recovery, recrystallization and austenite transformation process of a deformed structure is changed by controlling the rapid heating, short-time heat preservation and rapid cooling process in a rapid heat treatment process, the nucleation rate is increased, the grain growth time is shortened, grains are refined, the strength of the material is improved, and the performance range of the material is expanded.

EP 4 317 515 A1

**Description**

Technical Field

The present disclosure relates to the field of rapid heat treatment of materials, and in particular relates to a dual-phase steel and hot-galvanized dual-phase steel having tensile strength ≥ 980MPa and a manufacturing method for the same by rapid heat treatment.

Background Art

With the gradual improvement of people's awareness of energy conservation and material service safety, many car manufacturers choose high-strength steel as automotive materials. The use of high-strength steel plate in automotive industry can reduce the thickness of the steel plate and improve dent resistance, durable strength, large deformation impact toughness and collision safety of the automobiles at the same time. Therefore, the automotive steel plate will inevitably develop in the direction of high strength, high toughness and easy forming.

Among the high-strength steels used in automobiles, dual-phase steels are the most widely used and have the best application prospects. Low-carbon low-alloy dual phase steel has the characteristics of small yield ratio, high initial work hardening rate and good matching of strength and plasticity, and has become widely used steel for stamping automotive structures with high strength and good formability.

Dual-phase steel is obtained from cold rolled low carbon steel or low alloy high strength steel by rapid cooling treatment after soaking annealing in critical zone or controlled rolling and cooling of hot rolling, and its microstructure is mainly composed of ferrite and martensite. Dual-phase steels use the principle of "composite materials" to maximize the advantages of each phase (ferrite and martensite) in steel, while reducing or eliminating the disadvantages or drawbacks of one phase due to the presence of other phases.

The mechanical properties of dual-phase steel mainly depend on the following three aspects:

1. The grain size of the matrix phase and the distribution of alloying elements;
2. The size, shape, distribution and volume fraction of the second phase;
3. The characteristics of the combination of the matrix and the second phase.

Therefore, how to obtain low-cost, high-performance dual-phase steel products with good matching of strength and plasticity has become the goal pursued by major steel companies, and has been widely concerned by steel companies and automobile users.

Cold-rolled dual-phase steel is obtained by a rapid cooling process after soaking at the critical zone temperature, wherein the process mainly comprises three steps:

Step 1: heating the strip steel to the critical zone temperature of ferrite and austenite for soaking and heat preservation;
Step 2: cooling the sample to a certain temperature between $M_s \sim M_f$ at a cooling rate higher than the critical cooling rate to obtain a certain amount of dual-phase structure of martensite and ferrite;
Step 3: heat preserving or heating the strip steel to a temperature not higher than $M_s$ for tempering to obtain a good microstructure matching of hard martensite and soft ferrite, and finally obtaining the dual-phase structure of martensite and ferrite.

At present, 980MPa grade cold-rolled dual-phase steel produced by traditional continuous annealing process has a relatively long heating time and soaking time due to its slow heating rate. The entire continuous annealing period takes 5-8min. The recovery, recrystallization and phase transition in the heating process are carried out sequentially, and generally do not overlap, so the ferrite recrystallization grains and austenite grains are nucleated and fully grown, respectively, and finally the grain size of dual-phase structure of ferrite and martensite is relatively large, usually about 5-10μm.

The main control means for dual-phase steel in the existing technology is to change the phase structure ratio and distribution of the dual-phase steel by adding alloying elements and adjusting the temperature and time of quenching and tempering processes in the annealing process, so as to obtain relatively optimized performance of the product.

Chinese patent application CN101802233B discloses "A dual-phase steel, a flat steel product prepared from the dual-phase steel, and a method for preparing the flat steel product". The chemical composition of the inventive high-strength dual-phase steel by weight percentage is: C: 0.1~0.2%, Si: 0.1~0.6%, Mn: 1.5~2.5%, Cr: 0.2~0.8%, Ti: 0.02~0.08%, Mo≤0.25%, P≤0.2%, S≤0.01%, Al≤0.1%, N≤0.012%, B≤0.002%, with a balance of Fe and other unavoidable impurity elements. This method is mainly based on the traditional continuous annealing method, and its fast cooling rate is required to be 0.5~30°C/s. The inventive steel has relatively high C, Mn, Cr and Mo elements with Ti and other alloying elements added. The alloying elements are complex and the content is relatively high. The resultant dual-phase steel has a yield strength of about 620~1070MPa, a tensile strength of about 980~1100MPa, and an elongation of about 10~15%. In order to obtain sufficient strength, the composition of the steel contains a variety of relatively high amount of alloying elements, such as: C, Mn, Cr, Mo, Ti and other elements, which will significantly increase the production cost and manufacturing difficulty, and affect the subsequent welding performance of the material.

Chinese patent application CN101768695B discloses "A preparing method of 1000MPa grade Ti microalloyed ultra-fine grain cold-rolled dual-phase steel". The inventive high strength dual-phase steel has a chemical composition by weight percentage of: C: 0.03~0.2%, Si: 0.2~0.8%, Mn: 1.2~2.0%, Ti: 0.03~0.15%, P≤0.02%, S≤0.015%, Al: 0.02~0.15%, with a balance of Fe and other unavoidable impurity elements. The patent is based on the traditional continuous annealing method. High C, Si, Ti and Al elements are comprised and the Mn content is not low. The increase of alloying elements not only increases the production cost and manufacturing difficulty, but also causes unevenness of structure and performance, which will also bring difficulties to subsequent users.

Chinese patent application CN108486477A discloses "A 1000MPa grade high work hardening index cold rolled high strength steel plate and a preparing method thereof". The inventive high strength dual-phase steel has a chemical composition by weight percentage of: C: 0.2~0.25%, Si: 1.4~1.6%, Mn: 1.8~2.0%, V: 0.08~0.12%, P≤0.01%, S≤0.012%, Al: 0.02~0.05%, with a balance of Fe and other unavoidable impurity elements. The patent is based on the traditional continuous annealing method. In order to obtain sufficient strength, its C, Si, Mn and V content are relatively high, which will increase the cost of producing alloys, and also bring difficulties to the manufacturing process. Meanwhile, too high content of elements will lead to the emergence of banded structure, reduce the uniformity of the final structure, reduce the welding performance of the material, and bring difficulties to processing and use of subsequent users.

The Chinese patent application CN105_543674B discloses "A manufacturing method for cold-rolled ultra-high strength dual-phase steel with high local forming performance", the chemical composition of the inventive high-strength dual-phase steel by weight percentage is: C: 0.08~0.12%, Si: 0.1~0.5%, Mn: 1.5~2.5%, Al: 0.015~0.05%, with a balance of Fe and other unavoidable impurities. The chemical composition is selected as a raw material and smelted into a casting slab. The casting slab is heated at 1150~1250 °C for 1.5-2 hours and then hot rolled. The initial rolling temperature for hot rolling is 1080~1150 °C, and the final rolling temperature is 880~930 °C. After rolling, the steel is cooled to 450~620 °C at a cooling rate of 50~200 °C/s for coiling, to obtain a hot-rolled steel plate with bainite as the main structure. The hot-rolled steel plate is cold-rolled, and then heated to 740~820°C at a speed of 50~300 °C/s for annealing with a holding time of 30s~3min, and cooled to 620~680°C at a cooling rate of 2~6°C/s, and then cooled to 250~350°C at a cooling rate of 30~100°C/s for over ageing treatment for 3~5min, thereby obtaining an ultra-high strength dual-phase steel with ferritic + martensitic dual-phase structure. The ultra-high strength dual phase steel has a yield strength of 650~680MPa, a tensile strength of 1023~1100MPa, an elongation of 12.3-13%, and it does not crack when bends 180° in the rolling direction.

The most important feature of the patent is the combination of the control of cooling conditions after hot rolling with rapid heating in the continuous annealing process, that is, by controlling the cooling process after hot rolling, the banded structure is eliminated to homogenize the structure; and rapid heating is adopted in the subsequent continuous annealing process to achieve structure refinement on the basis of ensuring structure uniformity. It can be seen that the patented technology adopts rapid heating annealing with a proviso that the hot-rolled raw material with bainite as the main structure is obtained after hot rolling. Its purpose is mainly to ensure the uniformity of the structure and avoid the appearance of banded structure which leads to uneven local deformation.

The main shortcomings of this patent are:

First, to obtain hot-rolled raw materials with bainite structure, the hot-rolled raw materials is required to have high strength and large deformation resistance, which brings great difficulties to the subsequent pickling and cold rolling production;

Second, its understanding of rapid heating is limited to the level of shortening the heating time and refining grains. Its heating rate is not differed according to the changes of material microstructure in different temperature sections. But all are heated at a rate of 50-300°C/s, resulting in an increase in the production cost of rapid heating;

Third, the soaking time is 30s-3min. The increase of soaking time will inevitably weaken a part of the refinement grain effect produced by rapid heating, which is not conducive to the improvement of material strength and toughness;

Fourth, it is necessary to carry out 3-5 minutes of over aging treatment in the method and it is actually too long and unnecessary for rapid heat treatment of DP steel. Moreover, the increase of soaking time and over-ageing time is not conducive to saving energy, reducing unit equipment investment and unit floor space, and is not conducive to the stable operation of strip at high-speed in the furnace, which is obviously not a rapid heat treatment process in the strict sense.

Chinese patent application 201711385126.5 discloses "a 780MPa grade low carbon low alloy TRIP steel". It has a chemical composition by mass percentage of: C: 0.16-0.22%, Si: 1.2-1.6%, Mn: 1.6-2.2%, with a balance of Fe and other unavoidable impurities, which is obtained by the following rapid heat treatment process:The strip steel is rapidly heated from room temperature to 790~830 °C of austenitic and ferritic dual-phase zone with a heating rate of 40~300 °C/s. The residence time in the heating target temperature range of the dual-phase zone is 60~100s. The strip steel is rapidly cooled from the temperature of the dual-phase zone to 410~430°C at a cooling rate of 40~100°C/s, and held in this temperature range for 200~300s. The strip steel is quickly cooled to room temperature from 410~430 °C. It is characterized in that: the metallographic structure of TRIP steel is a three-phase structure of bainite, ferrite and austenite. The TRIP steel has significantly refined average grain size, a tensile strength of 950~1050MPa, an elongation of 21~24% and a maximum product of strength and elongation up to 24GPa%.

The shortcomings of this patent are mainly as follows:

First, the patent discloses a 780MPa grade low-carbon low-alloy TRIP steel product and its process technology. But the tensile strength of the TRIP steel product is 950~1050MPa, which is too high for a 780MPa grade product since its use effect by the users may be not good, and too low for a 980MPa grade product since it cannot well meet the user's strength requirements;

Second, the patent adopts one-stage rapid heating, and the same rapid heating rate is adopted in the entire heating temperature range, which is not treated differently according to the requirement of material structure changes in different temperature sections. All heated rapidly at a rate of 40~300 °C/s will inevitably lead to an increase in the production cost of the rapid heating process;

Third, the soaking time in the patent is set at 60~100s, which is similar to the soaking time of the traditional continuous annealing, and the increase of the soaking time inevitably partially weakens the refinement grain effect produced by rapid heating and is very unfavorable to the improvement of material strength and toughness;

Fourth, it is required to perform bainite isothermal treatment for 200~300s in this patent, which is actually too long and unnecessary for rapid heat treatment products since it does not work as it should. Moreover, the increase of soaking time and isothermal treatment time is not conducive to saving energy, reducing unit equipment investment and unit floor space, and is not conducive to the stable operation of strip steel at high-speed in the furnace, which is obviously not a rapid heat treatment process in the strict sense.

Chinese patent application CN108774681A discloses "a rapid heat treatment method of high-strength steel", which uses ceramic sheet electric heating device to obtain a maximum heating rate of 400 °C/s, and adopts a fan for air cooling after heating to 1000~1200 °C. It is cooled to room temperature at a maximum cooling rate of nearly 3000 °C/s. In the inventive method, the heat treatment device using ceramic sheet electric heating has a processing speed of 50cm/min. The inventive steel is characterized in that it has a carbon content as high as 0.16~0.55%, and also comprises Si, Mn, Cr, Mo and other alloying elements. This method is mainly suitable for steel wire, wire rod or steel strip below 5mm. The patent describes a rapid heat treatment method by ceramic sheet electrical heating. The main purpose of the invention is to solve the problems of low heat treatment efficiency, waste of energy and environmental pollution of products such as high-strength steel wire and wire rod. The influence and effect of rapid heating on the microstructure and properties of materials are not mentioned. The invention does not combine the composition and microstructure characteristics of steel grades. The use of fan blowing air cooling provides a maximum cooling rate close to 3000 °C/s, which should refer to the instantaneous cooling rate of the high temperature section, and the average cooling rate is impossible to reach 3000 °C/s. At the same time, the use of too high cooling rate in the high temperature section to produce wide and thin strip steel will lead to problems such as excessive internal stress and poor steel plate shape, and it is not suitable for large-scale industrial continuous heat treatment production of wide and thin steel plate.

Chinese patent application CN106811698B discloses "A high-strength steel plate based on fine microstructure control and a manufacturing method thereof". The high-strength dual-phase steel has a chemical composition by weight percentage of: C: 0.08~0.40%, Si: 0.35~3.5%, Mn: 1.5~7.0%, P≤0.02%, S≤0.02%, Al: 0.02~3.0% and also comprises at least one of Cr: 0.50~1.5%, Mo: 0.25~0.60%, Ni: 0.5~2.5%, Cu: 0.20~0.50%, B: 0.001~0.005%, V: 0.10~0.5%, Ti: 0.02~0.20%, Nb: 0.02~0.20%, with a balance of Fe and other unavoidable impurities. Its mechanical properties are as follows: a tensile strength Rm is greater than 1000MPa, an elongation $A_{50mm}$ is greater than 28%. The content of the components C, Si and Mn of the invention is relatively high, and the steel strips with different components are recrystallized and annealed by removing the soaking and heat preservation section, i.e., performing soaking-free annealing on the traditional continuous annealing production line. The specific annealing parameter range is as follows: after rapid heating to 800~930°C at a rate of no less than 20°C/s, it is immediately cooled to the Ms-Mf point at a cooling rate of no less than 40°C/s, and then heated to Mf~Mf+100°C and held for 30s to 30min, and finally cooled to room temperature.

The main feature of the invention is characterized in that by controlling the morphology and structure of the high-strength phase of martensite, a fine martensite structure with fine needles and short rods is obtained, and by reheating to diffuse C atom into the residual austenite, a relatively stable residual austenite is obtained, so that it has a certain deformation ability, thereby improving plasticity and toughness of the high-strength steel.

The so-called rapid heating of the invention actually uses low heating rate, which is 20~60 °C/s and belongs to the medium heating rate, and a cooling rate of 40~100 °C/s. Its consideration of rapid heating, rapid cooling and omitting the soaking section is to shorten the residence time of high-strength steel in the high temperature section, ensure that the grains of steel are fine and the structure and chemical composition are not completely homogenized during the austenitization process, so as to ensure that plenty of large-size slat-like martensite is not generated after cooling, and a certain amount of membranous residual austenite structure is obtained at the same time. However, this inevitably leads to the difficulty in controlling the heating temperature, and the fluctuation of the structure and performance increases.

The method is still based on the heating technology and cooling technology of the existing traditional continuous annealing unit. By omitting the soaking section (shortening the soaking time to 0s), increasing the alloy content and performing quenching and tempering treatment, the high-strength steel product with a certain matching of strength and toughness is finally obtained. It has not been specifically developed for each strength grade of steel grade in this invention. Moreover, the heating rate is a medium heating rate. It does not belong to rapid heating and there is no soaking time. It does not reflect a true rapid heat treatment method and a complete annealing cycle. Therefore, there is no prospect of commercial application.

Chinese patent application CN107794357B and US patent application US2019/0153558A1 disclose "A method for producing ultra-high strength martensitic cold-rolled steel plate by ultra-fast heating process". The high-strength dual-phase steel has a chemical composition by weight percentage of: C: 0.10~0.30%, Mn: 0.5~2.5%, Si: 0.05~0.3%, Mo: 0.05~0.3%, Ti: 0.01~0.04%, Cr: 0.10~0.3%, B: 0.001~0.004%, P≤0.02%, S≤0.02%, with a balance of Fe and other unavoidable impurities. Its mechanical properties of the dual-phase steel are as follows: a yield strength $Rp_{0.2}$ of greater than 1 100MPa, a tensile strength $R_m$=1800-2300MPa, a maximum elongation of 12.3%, and a uniform elongation of 5.5~6%. The invention provides an ultra-rapid heating production process for ultra-high-strength martensitic cold-rolled steel plate, which comprises process characteristics of first heating the cold-rolled steel plate to 300~500°C at 1~10°C/s, and then reheating it to single-phase austenite zone of 850~950°C at a heating rate of 100~500°C/s; then immediately water-cooling the steel plate to room temperature after heat preservation for no more than 5s to obtain an ultra-high strength cold-rolled steel plate..

The deficiencies of the process described in the patent include:

First, the annealing temperature of the inventive steel has entered the ultra-high temperature range of the single-phase austenitic zone, and it also contains more alloying elements and has a yield strength and a tensile strength of more than 1000MPa. It brings great difficulties to the heat treatment process, the process before heat treatment and subsequent use by users;

Second, the ultra-rapid heating annealing method of the invention adopts a holding time of no more than 5s, which not only has poor controllability of heating temperature, but also leads to uneven distribution of alloying elements in the final product, resulting in uneven and unstable microstructure properties of the product;

Third, the final fast cooling for cooling to room temperature is performed by water quenching without necessary tempering treatment, so that the microstructure and performance of the final product and the distribution of alloying elements in the final structure cannot provide the product with optimized strength and toughness, resulting in excess strength of the final product, but insufficient plasticity and toughness;

Fourth, the method of the invention will cause problems such as poor steel plate shape and surface oxidation due to high cooling rate of water quenching.

In summary, it can be seen that the patented technology has no or little practical application value.

At present, limited by the equipment capacity of the traditional continuous annealing furnace production line, the research on cold-rolled dual-phase steel products and annealing process is based on that the strip steel is slowly heated at a heating rate (5~20°C/s) of the existing industrial equipment, so that it completes the recovery, recrystallization and austenitization phase transition in sequence. Therefore, the heating time and soaking time are relatively long, energy consumption is high, and the traditional continuous annealing production line also has problems such as long residence time of strip steel in the high-temperature furnace section and a large number of rolls passing through. According to the product outline and capacity requirements, the soaking time of the traditional continuous annealing unit is generally required to be 1~3min. For the traditional production line with a unit speed of about 180 m/min, the number of rolls in the high-temperature furnace section generally varies from 20 to 40, which increases the difficulty of strip steel surface quality control.

Summary

One object of the present disclosure is to provide a low carbon low alloy dual-phase steel and hot-galvanized dual-phase steel having a tensile strength of ≥ 980MPa and a manufacturing method for the same by rapid heat treatment. The rapid heat treatment changes the recovery, recrystallization and austenite phase transition process of deformation structure, increases the nucleation rate (including recrystallization nucleation rate and austenitic phase deformation nucleation rate), shortens the grain growth time and refines the grain. The resultant dual-phase steel has a yield strength of $\geq$ 590MPa, a tensile strength of $\geq$ 980MPa, an elongation of $\geq$ 7.5%, a product of strength and elongation of $\geq$ 9.0GPa% and superior molding performance; the resultant hot-galvanized dual-phase steel has a yield strength of $\geq$ 540MPa, a tensile strength of $\geq$ 980MPa, an elongation of $\geq$ 7.0%, and a product of strength and elongation of $\geq$ 10.0GPa%. The dual-phase steel obtained by this method has a low alloy content in the same grade of steel, and has good plasticity and toughness while the strength of the material is improved. At the same time, the rapid heat treatment process improves production efficiency, reduces production costs and energy consumption, significantly reduces the number of furnace rollers, and improves the surface quality of steel plates.

To achieve the above object, the technical solution of the present disclosure is as follows:

The low carbon low alloy dual-phase steel having a tensile strength of $\geq$ 980MPa or the low carbon low alloy hot-galvanized dual-phase steel having a tensile strength of $\geq$ 980MPa comprises the following chemical components in mass percentages: C: 0.05-0.17%, Si: 0.1-0.7%, Mn: 1.4-2.8%, P$\leq$0.020%, S$\leq$0.005%, B$\leq$0.005%, Al: 0.02~0.055%, optional two or more of Nb, Ti, Cr, Mo and V, and Cr+Mo+Ti+Nb+V$\leq$1.1%, with a balance of Fe and other unavoidable impurities.

In some embodiments, in the dual-phase steel or the hot-galvanized dual-phase steel, the content of C is 0.05~0.12%. In some embodiments, in the dual-phase steel or the hot-galvanized dual-phase steel, the content of C is 0.05~0.10%. In some embodiments, in the dual-phase steel or the hot-galvanized dual-phase steel, the content of C is 0.10~0.17%.

In some embodiments, in the dual-phase steel or the hot-galvanized dual-phase steel, the content of Si is 0.1~0.5%. In some embodiments, in the dual-phase steel or the hot-galvanized dual-phase steel, the content of Si is 0.2~0.7%.

In some embodiments, in the dual-phase steel or the hot-galvanized dual-phase steel, the content of Mn is 1.4~2.2%. In some embodiments, in the dual-phase steel or the hot-galvanized dual-phase steel, the content of Mn is 1.6~2.5%. In some embodiments, in the dual-phase steel or the hot-galvanized dual-phase steel, the content of Mn is 1.8~2.8%.

In some embodiments, the dual-phase steel or the hot-galvanized dual-phase steel comprises 0.002~0.005% of B.

In some embodiments, the dual-phase steel or the hot-galvanized dual-phase steel comprises 0.02~0.05% of Al.

In some embodiments, in the dual-phase steel or the hot-galvanized dual-phase steel, Cr+Mo+Ti+Nb+V$\leq$0.5%.

In some embodiments, in the dual-phase steel or the hot-galvanized dual-phase steel, Ti is <_0.07%, such as $\leq$0.05%. In some embodiments, the dual-phase steel or the hot-galvanized dual-phase steel comprises 0.01~0.05% or 0.02~0.07% of Ti.

In some embodiments, in the dual-phase steel or the hot-galvanized dual-phase steel, Nb is $\leq$0.07%, such as $\leq$0.04%. In some embodiments, the dual-phase steel or the hot-galvanized dual-phase steel comprises 0.02~0.07% of Nb. In some embodiments, the dual-phase steel or the hot-galvanized dual-phase steel comprises 0.02~0.04% of Nb.

In some embodiments, in the dual-phase steel or the hot-galvanized dual-phase steel, Cr is $\leq$0.9%, such as $\leq$0.6% or $\leq$0.4%. In some embodiments, the dual-phase steel or the hot-galvanized dual-phase steel comprises 0.2-0.6% or 0.3-0.9% of Cr.

In some embodiments, in the dual-phase steel or the hot-galvanized dual-phase steel, Mo is $\leq$0.4%, such as $\leq$0.15%. In some embodiments, the dual-phase steel or the hot-galvanized dual-phase steel comprises 0.1~0.4% of Mo.

In some embodiments, in the dual-phase steel or the hot-galvanized dual-phase steel, V is $\leq$0.05%.

In some embodiments, the dual-phase steel has a yield strength of $\geq$ 590MPa, a tensile strength of $\geq$ 980MPa, an elongation of $\geq$ 7.5%, and a product of strength and elongation of $\geq$ 9.0GPa%; the hot-galvanized dual-phase steel has a yield strength of $\geq$ 540MPa, a tensile strength of $\geq$ 980MPa, an elongation of $\geq$ 7.0%, and a product of strength and elongation of $\geq$ 10.0GPa%.

In some embodiments, the dual-phase steel comprises the following chemical components in mass percentages: C: 0.05~0.12%, Si: 0.1~0.5%, Mn: 1.4~2.2%, Nb: 0.02~0.04%, Ti: 0.03~0.05%, P$\leq$0.015%, S$\leq$0.003%, Al: 0.02~0.05%, optional two or more of Cr, Mo and V, and Cr+Mo+Ti+Nb+V$\leq$0.5%. Preferably, the content of C is 0.055~0.110%. Preferably, the content of Si is 0.15~0.45%. Preferably, the content of Mn is 1.6~2.0%. Preferably, the dual-phase steel has a microstructure of a uniformly distributed ferrite and martensitic dual-phase structure having an average grain size of 1~3$\mu$m. Preferably, the dual-phase steel has a yield strength of 590~750MPa, such as 598~749MPa, a tensile strength of 980~1100MPa, such as 1030~1090MPa, an elongation of 10.0~17.0%, such as 10.6~16.6%, a product of strength and elongation of 10.5~18.0GPa%, such as 10.9~17.4GPa%, and a strain hardening index $n_{90}$ value greater than 0.21.

In some embodiments, the dual-phase steel has a yield strength of $\geq$ 1180MPa, preferably comprises the following chemical components in mass percentages: C: 0.05~0.10%, Si: 0.1~0.5%, Mn: 1.6~2.5%, Cr: 0.2~0.6%, Mo: 0.1~0.4%, Ti: 0.01~0.05%, P$\leq$0.015%, S$\leq$0.003%, Al: 0.02~0.05%, optionally one or two of Nb and V, and Cr+Mo+Ti+Nb+V$\leq$0.5%, with a balance of Fe and other unavoidable impurities. Preferably, the content of C is 0.07~0.10%.

Preferably, the content of Si is 0.1~0.4%. Preferably, the content of Mn is 1.8~2.3%. Preferably, the content of Cr is 0.25~0.35%. Preferably, the content of Mo is 0.15~0.25%. Preferably, the dual-phase steel has a microstructure of a uniformly distributed ferrite and martensitic dual-phase structure having an average grain size of 1~5μm. Preferably, the dual-phase steel has a yield strength of 710~920MPa, such as 714~919 MPa, a tensile strength of 1180~1300 MPa, such as 1188~1296 MPa, an elongation of 10.0~13.0%, such as 10.4~12.8%, a product of strength and elongation of 12~16 GPa%.

In some embodiments, the dual-phase steel has a yield strength of ≥ 1260MPa, preferably comprises the following chemical components in mass percentages: C: 0.10~0.17%, Si: 0.2~0.7%, Mn: 1.8~2.8%, Cr: 0.3~0.9%, Nb: 0.02~0.07%, Ti: 0.02~0.07%, B: 0.002~0.005%, P≤0.02%, S≤0.005%, Al: 0.02~0.05%; optionally one or two of Mo and V, and Cr+Mo+Ti+Nb+V≤1.1%, with a balance of Fe and other unavoidable impurities. Preferably, the content of C is 0.055~0.110%. Preferably, the content of Si is 0.15~0.45%. Preferably, the content of Mn is 1.6~2.0%. Preferably, the content of Cr is 0.5~0.7%. Preferably, the content of Ti is 0.02~0.05%. Preferably, the content of Nb is 0.02~0.05%. Preferably, the dual-phase steel has a microstructure of a uniformly distributed ferrite and martensitic dual-phase structure having an average grain size of 1~3μm. Preferably, the dual-phase steel has a yield strength of 900~1120MPa, such as 902~1114 MPa, a tensile strength of 1260~1450 MPa, such as 1264~1443 MPa, an elongation of 7.0~10.0%, such as 7.0~9.8%%, a product of strength and elongation of 9.0-12.5 GPa%, such as 9.5~12.1GPa%.

In some embodiments, the dual phase steel according to any embodiment of the present disclosure is obtained by the following process:

1) Smelting, casting
wherein the above components are subjected to smelting and casting to form a slab;
2) hot rolling, coiling
wherein a hot rolling finishing temperature is ≥$A_{r3}$; and a coiling temperature is 550~680°C;
3) cold rolling
wherein a cold rolling reduction rate is 40~85%;
4) Rapid heat treatment

wherein the steel plate after cold rolling is rapidly heated to 750~845°C, wherein the rapid heating is performed in one stage or two stages; when the rapid heating is performed in one stage, a heating rate is 50~500 °C/s; when the rapid heating is performed in two stages, the steel plate is heated in the first stage from room temperature to 550~650°C at a heating rate of 15~500°C/s, heated in the second stage from 550~650°C to 750~845°C at a heating rate of 30~500°C/s (such as 50~500°C/s); then soaked at a soaking temperature of 750~845 °C for a soaking time of 10~60s;
wherein after soaking, the steel plate is slowly cooled to 670~770 °C at a cooling rate of 5~15°C/s, then rapidly cooled from 670~770 °C to room temperature at a cooling rate of 50~200°C/s;
or the steel plate is rapidly cooled from 670~770 °C to 230~280°C at a cooling rate of 50~200°C/s, and over-aged in the temperature range, wherein an over-ageing treating time is less than or equal to 200s, such as less than or equal to 175s; and finally cooled to room temperature at a cooling rate of 30~50°C/s.

Preferably, in step 2), the coiling temperature is 580~650°C.
Preferably, in step 3), the cold rolling reduction rate is 60~80%.
Preferably, in step 4), a total time of the rapid heat treatment is 41~297s, such as 41~295s.
Preferably, in step 4), when the rapid heating is performed in one stage, the heating rate is 50~300°C/s.
Preferably, in step 4), the rapid heating is performed in two stages, wherein the steel plate is heated in the first stage from room temperature to 550~650°C at a heating rate of 15~300°C/s, heated in the second stage from 550~650°C to 750~845°C at a heating rate of 50~300°C/s.
Preferably, in step 4), the rapid heating is performed in two stages, wherein the steel plate is heated in the first stage from room temperature to 550~650°C at a heating rate of 50~300°C/s, heated in the second stage from 550~650°C to 750~845°C at a heating rate of 80~300°C/s.
Preferably, in step 4), the soaking time is 10~40s.
Preferably, in step 4), the rapid cooling rate is 50~150°C/s.
Preferably, the over ageing time is 20~200s or 20~175s.
In some embodiments, the hot-galvanized dual-phase steel comprises the following chemical components in mass percentages: C: 0.05~0.12%, Si: 0.1~0.5%, Mn: 1.4~2.2%, Nb: 0.02~0.04%, Ti: 0.03~0.05%, P≤0.015%, S≤0.003%, Al: 0.02~0.055%, optionally one or two of Cr, Mo and V, and Cr+Mo+Ti+Nb+V≤0.5%, with a balance of Fe and other unavoidable impurities. Preferably, the content of C is 0.05~0.10%. Preferably, the content of Si is 0.15~0.45%. Preferably, the content of Mn is 1.6~2.0%. Preferably, Cr is ≤0.4%. Preferably, Mo is ≤0.15%. Preferably, V is ≤0.05%. Preferably, the hot-galvanized dual-phase steel has a metallographic structure of a uniformly distributed ferrite and martensitic dual-phase structure having an average grain size of 1~3μm. Preferably, the hot-galvanized dual-phase steel has a yield strength of 540~710MPa, such as 543~709 MPa, a tensile strength of 980~1110 MPa, such as 989~1108 MPa, an elongation of 11.0~15.5%, such as 11.9~15.2%, a product of strength and elongation of 12.0~15.5GPa%, such as 12.2~15.2GPa%.

In some embodiments, the hot-galvanized dual-phase steel has a tensile strength of ≥1180MPa, preferably comprises the following chemical components in mass percentages: C: 0.05~0.10%, Si: 0.15~0.45%, Mn: 2.0~2.5%, Nb: 0.02~0.04%, Ti: 0.02~0.04%, Cr: 0.3~0.6%, Mo: 0.2~0.4%, P≤0.015%, S≤0.005%, Al: 0.02~0.05%, with a balance of Fe and other unavoidable impurities. Preferably, the content of C is 0.07~0.10%. Preferably, the content of Si is 0.25~0.35%. Preferably, the content of Mn is 2.2~2.35%. Preferably, the content of Cr is 0.35%~0.50%. Preferably, the content of Mo is 0.25%~0.35%. Preferably, the hot-galvanized dual-phase steel has a metallographic structure of a uniformly distributed ferrite and martensitic dual-phase structure having an average grain size of 1~3μm. Preferably, the hot-galvanized dual-phase steel has a yield strength of 660~860MPa, such as 665~854 MPa, a tensile strength of 1180~1290 MPa, such as 1182~1285 MPa, an elongation of 11.0~13.0%, such as 11.5~12.8%, a product of strength and elongation of 13.0~15.5GPa%, such as 13.6~15.2GPa%.

In some embodiments, the hot-galvanized dual-phase steel has a tensile strength of ≥1280MPa, preferably comprises the following chemical components in mass percentages: C: 0.10~0.17%, Si: 0.2~0.7%, Mn: 1.8~2.8%, Cr: 0.3~0.9%, Nb: 0.02~0.07%, Ti: 0.02~0.07%, B: 0.002~0.005%, P≤0.02%, S≤0.005%, Al: 0.02~0.05%, optionally one or two of Mo and V, and Cr+Mo+Ti+Nb+V≤1.1%, with a balance of Fe and other unavoidable impurities. Preferably, the content of C is 0.10~0.15%. Preferably, the content of Si is 0.2~0.5%. Preferably, the content of Mn is 2.0~2.6%. Preferably, the content of Cr is 0.5%~0.7%. Preferably, the content of Ti is 0.02%~0.05%. Preferably, the content of Nb is 0.02%~0.05%. Preferably, Mo is ≤0.15%. Preferably, V is ≤0.055%. Preferably, the hot-galvanized dual-phase steel has a metallographic structure of a uniformly distributed ferrite and martensitic dual-phase structure having an average grain size of 1~3μm. Preferably, the hot-galvanized dual-phase steel has a yield strength of 960~1110MPa, such as 963~1109 MPa, a tensile strength of 1280~1450MPa, such as 1282~1443 MPa, an elongation of 7.0~9.0%, such as 7.1~8.8%, a product of strength and elongation of 10.0~12.0GPa%, such as 10.0~11.8GPa%.

In some embodiments, the dual-phase steel according to any embodiment of the present disclosure is slowly cooled to 670~770°C at a cooling rate of 5~15°C/s after soaking, then rapidly cooled to 460~470°C at a cooling rate of 50~150°C/s, and immersed in a zinc pot for hot galvanizing, thereby obtaining the hot-galvanized dual-phase steel descrbied in any embodiment of the present disclosure.

In some embodiments, the hot-galvanized dual phase steel according to any embodiment of the present disclosure is obtained by the following process:

A) Smelting, casting
wherein the above components are subjected to smelting and casting to form a slab;
B) Hot rolling, coiling
wherein a hot rolling finishing temperature is ≥A$_{r3}$; and a coiling temperature is 550~680°C;
C) Cold rolling
wherein a cold rolling reduction rate is 40~85%;
D) Rapid heat treatment, hot-galvanizing

wherein the steel plate after cold rolling is rapidly heated to 750~845°C, wherein the rapid heating is performed in one stage or two stages; when the rapid heating is performed in one stage, a heating rate is 50~500 °C/s; when the rapid heating is performed in two stages, the steel plate is heated in the first stage from room temperature to 550~650°C at a heating rate of 15~500°C/s, heated in the second stage from 550~650°C to 750~845°C at a heating rate of 30~500°C/s (such as 50~500°C/s); then soaked at a soaking temperature of 750~845 °C for a soaking time of 10~60s;
wherein after soaking, the steel plate is slowly cooled to 670~770 °C at a cooling rate of 5~15°C/s, then rapidly cooled to 460~470°C at a cooling rate of 50~150°C/s, and immersed in a zinc pot for hot galvanizing;
wherein after hot galvanizing, the steel plate is rapidly cooled to room temperature at a cooling rate of 30~150°C/s to obtain a hot dip galvanized GI product; or
after hot galvanizing, the steel plate is heated to 480~550°C at a heating rate of 30~200°C/s and alloyed for 10~20s; after alloying, the steel plate is rapidly cooled to room temperature at a cooling rate of 30~250°C/s to obtain an alloy galvannealed GA product.

Preferably, a total time of the rapid heat treatment and hot-galvanizing of step D) is 30~142s.
Preferably, in step B), the coiling temperature is 580~650°C.
Preferably, in step C), the cold rolling reduction rate is 60~80%.
Preferably, in step D), when the rapid heating is performed in one stage, the heating rate is 50~300°C/s.

Preferably, in step D), the rapid heating is performed in two stages, wherein the steel plate is heated in the first stage from room temperature to 550~650°C at a heating rate of 15~300°C/s, heated in the second stage from 550~650°C to 750~845°C at a heating rate of 50~300°C/s.

Preferably, in step D), the rapid heating is performed in two stages, wherein the steel plate is heated in the first stage from room temperature to 550~650°C at a heating rate of 30~300°C/s, heated in the second stage from 550~650°C to 750~845°C at a heating rate of 80~300°C/s.

Preferably, in step D), the final temperature after rapid heating is 790~845°C. In some embodiments, for example, in the manufacturing process of the hot-galvanized dual phase steel having a tensile strength of ≥1280MPa, the final temperature after rapid heating is 790~830°C.

Preferably, in the soaking process of step D), after the steel plate is heated to the target temperature of dual phase region of austenite and ferrite, the temperature is kept unchanged for soaking.

Preferably, in the soaking process of step D), the steel plate is slightly heated up or cooled down in the soaking time, wherein the temperature after heating is no more than 845°C and the temperature after cooling is no less than 750°C.

Preferably, the soaking time is 10~40s.

Preferably, in step D), the steel plate after alloying is rapidly cooled to room temperature at a cooling rate of 30~200°C/s, thereby obtaining the alloy galvannealed GA product.

In the composition and process design of the steel according to the present disclosure:

C: Carbon is the most common strengthening element in steel. Carbon increases the strength of steel and decreases its plasticity. However, cold stamped steel plates require low yield strength, high uniform elongation and high total elongation. Therefore, the carbon content should not be too high. Carbon in steel generally exists in two phases: ferrite and cementite. The carbon content has a great influence on the mechanical properties of steel. With the increase of carbon content, the number of strengthening phases such as pearlite will increase, so that the strength and hardness of steel will be greatly improved, but its plasticity and toughness will be significantly reduced. If the carbon content is too high, obvious network carbides will appear in steel, and the presence of network carbides will significantly reduce its strength, plasticity and toughness. The strengthening effect produced by the increase of carbon content in steel will also be significantly weakened, and the process performance of steel will be deteriorated. Therefore, the carbon content should be reduced as much as possible on the premise of ensuring strength.

For dual-phase steels, carbon mainly affects the volume fraction of austenite formed during annealing. The diffusion process of carbon in austenite or ferrite actually plays a role in controlling the growth of austenite grains during the formation of austenite. With the increase of carbon content or the heating temperature in the critical zone, the volume fraction of austenite increases, thus the martensitic phase structure formed after cooling increases, the strength of the material increases, but the plasticity decreases at the same time. The increase of carbon content will increase the manufacturing difficulty of the process before heat treatment. Comprehensively considering the matching of material strength and toughness, rapid heat treatment characteristics and the influence of carbon on the structure and performance of the final product, the carbon content of the present disclosure is controlled in the range of 0.05~0.17%.

Mn: Manganese can form a solid solution with iron, thereby improving the strength and hardness of ferrite and austenite in carbon steel, and providing finer pearlite with higher strength in the steel during the cooling process after hot rolling, and the content of pearlite will also increase with the increase of Mn content. Manganese is also a carbide-forming element, and the carbide of manganese can dissolve into the cementite, thereby indirectly enhancing the strength of pearlite. Manganese can also strongly enhance the hardenability of steel, thereby further improving its strength.

For dual-phase steels, manganese is one of the elements that obviously affects the dynamics of austenite formation during annealing in the critical zone. Manganese mainly affects the transition and growth to ferrite after formation of austenite and the final equilibrium process of austenite and ferrite. Since the diffusion rate of manganese in austenite is much slower than its diffusion rate in ferrite, austenite controlled by manganese diffusion takes long time to grow and manganese element takes longer time to achieve uniform distribution in austenite. When the critical zone is heated rapidly, if the holding time is short, the manganese element cannot achieve uniform distribution in austenite, and then when the cooling rate is insufficient, a relatively uniform martensitic-austenitic island (referred to as M-A island) structure cannot be obtained. In dual-phase steel produced by rapid heating process (such as continuous annealing production line with rapid induction heating or rapid direct heating by fire and water quenching), large amount of pearlite is present in the matrix because the manganese content is generally high. Thus, the austenite generated locally has a higher manganese content after its formation, which ensures the hardenability of the austenitic island, and is easy to obtain a more uniform martensitic-austenitic island (referred to as M-A island) structure and more uniform performance after cooling. In addition, manganese expands the $\gamma$ phase region and reduces the temperature of $A_{c1}$ and $A_{c3}$, so that manganese-containing steel will get a higher martensitic volume fraction than low carbon steel under the same heat treatment conditions. However, when the manganese content is further increased, there is a tendency to coarsen the grains in the steel and the overheating sensitivity of the steel is increased, and when the cooling is improper after smelting pouring and forging, it is easy to produce white spots in the carbon steel. The increase in manganese content will increase the manufacturing difficulty of the process before heat treatment. Considering the above factors, the manganese content is designed in the range of 1.4~2.8% in the present disclosure.

Si: Silicon forms a solid solution in ferrite or austenite, thereby enhancing the yield strength and tensile strength of steel. Silicon can increase the cold working deformation hardening rate of steel and is a beneficial element in alloy steel. In addition, silicon has obvious enrichment phenomenon on the surface of silicon-manganese steel along the crystal fracture, and the segregation of silicon at the grain boundary can alleviate the distribution of carbon and phosphorus along the grain boundary, thereby improving the embrittlement state of the grain boundary. Silicon can improve the strength, hardness and wear resistance of steel and will not significantly reduce the plasticity of steel within a certain range. Silicon has a strong deoxidation capacity and is a commonly used deoxidation agent in steelmaking. Silicon can also increase the fluidity of molten steel, so generally the steel contains silicon. But when the content of silicon in steel is too high, its plasticity and toughness will be significantly reduced.

For dual-phase steels, silicon has no obvious effect on the growing rate of austenite, but has a significant effect on the morphology and distribution of austenite. The increase of silicon content will increase the manufacturing difficulty of high-strength steel in the process before heat treatment. The silicon content should be controlled in the present disclosure in order to reduce the manufacturing difficulty in the process before heat treatment, reduce costs and improve welding performance. Considering the above factors, the silicon content is determined in the range of 0.1~0.7% in the present disclosure.

Nb: Nb is a forming element of carbide and nitride and can meet the requirement at relatively low concentrations. At room temperature, most of Nb in the steel exists in the form of carbide, nitride and carbonitride, and a small part is dissolved in ferrite. The addition of Nb can prevent the growth of austenite grains and increase the coarsening temperature of steel grains. Nb form very stable NbC with carbon. The addition of trace amount of Nb element to steel can improve the strength of the matrix by virtue of its precipitation strengthening effect. Nb has obvious hindering effect on the growth of ferrite recrystallization and the growth of austenite grains, which can refine the grains and improve the strength and toughness of steel. Nb can affect grain boundary mobility and also have an impact on phase transition behavior and carbide formation. Nb can increase the carbon content in the residual austenite, hinder the formation of bainite, promote martensite nucleation, obtain dispersed martensite structure and improve the stability of residual austenite. Dual-phase steel having a certain strength can be obtained by adding Nb elements to improve the strength of dual-phase steel under the conditions of low martensite content and low C content, thereby improving the strength and toughness of the dual-phase steel. At the same time, another benefit of adding Nb is that the strength of the steel can be improved over a wide annealing temperature range. In the present disclosure, the Nb element is an essential element. Considering the cost and other factors, the added amount of Nb should not be too much. In some embodiments, in the dual-phase steel or hot-dip galvanized dual-phase steel, Nb is $\leq 0.07\%$, such as $\leq 0.04\%$. In some embodiments, the dual-phase steel or hot-dip galvanized dual-phase steel comprises 0.02~0.07% of Nb. In some embodiments, the dual-phase steel or hot-dip galvanized dual-phase steel comprises 0.02~0.04% of Nb.

Ti: Ti is a microalloying element that belongs to the ferritic forming element in the closed $\gamma$ zone. It can increase the critical point of steel. Ti and C in steel can form very stable TiC. In the austenitization temperature range of common heat treatment, it is extremely difficult to dissolve TiC. Due to the refinement of austenite grains by TiC particles, the opportunity for the formation of new phase nuclei increases when austenite decomposes and transforms, which accelerates austenite transformation. In addition, Ti can form TiC, TiN precipitation phase with C, N, which is more stable than the carbonitride of Nb and V. It significantly reduces the diffusion rate of C in austenite and greatly reduces the formation rate of austenite. The formed carbonitride precipitates in the matrix, nails to the grain boundary of austenite, and hinders the growth of austenite grains. During the cooling process, the precipitated TiC has a precipitation strengthening effect. In the tempering process, Ti slows down the diffusion of C in $\alpha$ phase, alleviates the precipitation and growth of carbides of Fe and Mn and others, increases the tempering stability and can play a secondary hardening role by precipitating TiC. The high-temperature strength of steel can be improved by microalloying of Ti. Adding a trace amount of Ti to steel, first, can improve the strength while reducing the carbon equivalent content, and improve the welding performance of steel. Second, impure substances such as oxygen, nitrogen, sulfur, etc. are fixed, so as to improve the weldability of steel. Third, due to the action of its microparticles, such as the insolubility of TiN at high temperature, it can prevent the coarsening of grains in the heat-affected zone, improve the toughness of the heat-affected zone, and thus improve the welding performance of steel. In the present disclosure, the Nb element is an essential element. Considering the cost and other factors, the added amount of Ti should not be too much. In some embodiments, the Ti content is $\leq 0.07\%$. In some embodiments, the Ti content is $\leq 0.05\%$.

Cr: The main function of chromium in steel is to improve the hardenability, so that the steel has good comprehensive mechanical properties after quenching and tempering. Chromium and iron form a continuous solid solution and the austenitic phase area is reduced. Chromium and carbon form a variety of carbides and its affinity with carbon is greater than that of iron and manganese. Chromium and iron can form an intermetallic $\sigma$ phase (FeCr), which reduces the concentration of carbon in pearlite and the solubility limit of carbon in austenite. Chromium slows down the decomposition rate of austenite and significantly improves the hardenability of steel. However, it also has a tendency of increasing temper brittleness of steel. Chromium can improve the strength and hardness of steel, and when other alloying elements are added, the effect is more significant. Since Cr improves the quenching ability of steel during air cooling, it has an adverse effect on the welding performance of steel. However, when the chromium content is less than 0.3%, the adverse effect on weldability can be ignored. When it is greater than 0.3%, it is easy to produce defects such as cracks and slag inclusions during welding. When Cr and other alloying elements exist at the same time (such as coexisting with V), the adverse effect of Cr on weldability is greatly reduced. For example, when Cr, Mo, V and other elements exist in steel at the same time, even if the Cr content reaches 1.7%, there is no significant adverse effect on the welding performance of steel. In the present disclosure, the Cr element is a beneficial and inessential element. Considering the cost and other factors, the added amount of Cr should not be too much. In some embodiments, the Cr content is ≤ 0.9%, such as ≤ 0.6% or ≤0.4%. In some embodiments, the dual-phase steel or hot-dip galvanized dual-phase steel comprises 0.2 ~ 0.6% or 0.3 ~ 0.9% of Cr.

Mo: Molybdenum inhibits the self-diffusion of iron and the diffusion rate of other elements. The radius of Mo atom is larger than that of $\alpha$-Fe atom. When Mo is dissolved in $\alpha$ solid solution, the solid solution has strong lattice distortion. Meanwhile, Mo can increase the lattice atomic bond attraction and increase the recrystallization temperature of $\alpha$ ferrite. Mo has a significant strengthening effect in pearlitic, ferritic, martensitic and other steel grades, and even in high-alloy austenitic steel grades. The beneficial role of Mo in steel also depends on the interaction with other alloying elements in steel. When strong carbide-forming elements V, Nb and Ti are added to the steel, the solid-solution strengthening effect of Mo is more significant. This is because when the strong carbide-forming element combines with C to form a stable carbide, it can promote Mo to dissolve into the solid solution more efficiently, which is more conducive to the improvement of the hot strength of steel. The addition of Mo can also increase the hardenability of steel. Mo can inhibit the transition of pearlite region and accelerate the transition in the medium temperature zone, so that a certain amount of bainite can be formed in Mo-containing steel in the case of a large cooling rate and the formation of ferrite is eliminated. That is one of the reasons why Mo has a favorable effect on the hot strength of low alloy heat-resistant steel. Mo can also significantly reduce the hot embrittlement tendency of steel and reduce the spheroidization rate of pearlite. When the Mo content is no more than 0.15%, there is no adverse effect on the welding performance of steel. In the present disclosure, the Mo element is a beneficial and inessential element. Considering the cost and other factors, the added amount of Mo should not be too much. In some embodiments, the Mo content is ≤ 0.4%, such as ≤ 0.15%. In some embodiments, the dual-phase steel or hot-dip galvanized dual-phase steel comprises 0.1~0.4% of Mo.

V: V is a stabilizing element of ferrite and a strong carbide-forming element, which has a strong grain refinement effect and can provide dense structure of steel. The addition of V to steel can improve the strength, plasticity and toughness of steel at the same time. Vanadium can also improve the high-temperature strength of structural steel. Vanadium does not improve hardenability. Adding a trace amount of microalloying element V to steel can ensure that the steel has good weldability and other properties by dispersing and precipitating its carbide and nitride particles (particle size less than 5nm) and solid solution of V to refine grains, greatly improve the strength and toughness (especially low temperature toughness) of steel under the condition of low carbon equivalent. Adding a trace amount of V to steel, first, can improve the strength while reducing the carbon equivalent content, and improve the welding performance of steel. Second, impure substances such as oxygen, nitrogen, sulfur, etc. are fixed, so as to improve the weldability of steel. Third, due to the action of its microparticles, such as the insolubility of V (CN) at high temperature, it can prevent the coarsening of grains in the heat-affected zone, improve the toughness of the heat-affected zone, and thus improve the welding performance of steel. In the present disclosure, the microalloying element is a beneficial and inessential element. Considering the cost and other factors, the added amount should not be too much. In some embodiments, in the dual-phase steel or hot-dip galvanized dual-phase steel, Vis ≤0.05%.

B: B content in steel is extremely small and its main function is to increase the hardenability of steel. The effect of B is much greater than that of Cr, Mn and other alloying elements. The application of trace B element can save a lot of other rare metals, such as nickel, chromium, molybdenum and so on. For this purpose, its content is generally limited in the range of 0.001~0.005%. It can replace 1.6% of nickel, 0.3% of chromium or 0.2% of molybdenum. It should be noted that molybdenum can prevent or reduce tempering brittleness, while boron has a slight tendency to promote tempering brittleness, so boron cannot be completely replaced by molybdenum. Boron has a strong affinity with nitrogen and oxygen. Adding 0.007% of boron to boiling steel can eliminate the aging phenomenon of steel. However, only the presence of B element in solid solution has a beneficial effect on the hardenability of steel, and the presence of B in compound state has no effect on the hardenability of steel. Thus, the fixation of elements C and N should be considered when increasing the hardenability by B element

In the present disclosure, the recovery of deformed structure of rolled hard strip steel during heat treatment, recrystallization and phase change process are accurately controlled by rapid heat treatment process (including rapid heating, short-term heat preservation and rapid cooling process) and fine, uniform, dispersed distribution of various structures and a good matching of strength and plasticity are finally obtained.

The specific principle is that different heating rates are used at different temperature stages of the heating process. The recovery of deformed structure mainly occurs in the low temperature section, and a relatively low heating rate can be used to reduce energy consumption. The recrystallization and grain growth of different phase structures mainly occur in the high temperature section and it is necessary to use relatively high heating rate and short soaking time to shorten the residence time of the structure in the high temperature zone to ensure grain refinement. By controlling the heating rate in the heating process, the recovery of deformed structure and the ferrite recrystallization process during heating are suppressed, so that the recrystallization process overlaps with the austenite phase transition process. The nucleation points of recrystallized grains and austenite grains are increased and finally the grains are refined. By rapid heating, short-term heat preservation and rapid cooling, the grain growth time of the material in the high temperature process is shortened and the grain structure is small and evenly distributed.

The Chinese patent application CN106811698B discloses a heat treatment process and it does not distinguish the entire heating process. The heating rate adopted in the heating process is 20~60 °C/s, which belongs to the medium heating rate and is achieved based on the heating technology of the existing traditional continuous annealing unit. It is impossible to be regulated on a large scale according to the needs of microstructure transformation of the material.

In the heat treatment process disclosed in the Chinese patent application CN107794357B and the US patent application US2019/0153558A1, the heating process is also in stages: the steel is heated to 300~500 °C at a heating rate of 1-10 °C/s, and then heated to 850-950°C in single-phase austenitic region at a heating rate of 100-500 °C /s, held for no more than 5s and then water quenched to room temperature. The treatment process requires that the steel plate must be heated to the high-temperature zone of single-phase austenite, which improves the high temperature resistance requirements of the equipment, increases the manufacturing difficulty. At the same time, it adopts a cooling manner of water-cooling. Although the cooling rate is extremely high and the whole heat treatment process can greatly reduce the growth time of the grain structure in the high temperature zone, it will inevitably bring about uneven distribution of alloying elements in the final product, resulting in uneven and unstable microstructures and properties of the product. Too high cooling rate will also lead to a series of problems such as poor steel plate shape and surface oxidation and the like.

A product having an optimal matching of strength and toughness only can be obtained by integratedly controlling the whole heat treatment, including rapid heating (controlling heating rate in stages), short-term soaking and rapid cooling process to provide finely controlled optimal grain size and evenly distributed alloying elements and phase structures.

The average grain size of the dual-phase structure of ferrite and martensite obtained by the rapid heat treatment process of the present disclosure is $1\sim5\mu m$, which is more than 50% smaller than the grain size of the product produced by the existing traditional technology. The strength of the material is improved by grain refinement, while good plasticity and toughness are obtained, and the use performance of the material is improved. Moreover, the ferritic and martensitic structures obtained by the present disclosure have various forms such as blocks, strips, granules, etc., and the phase structure distribution is more uniform, so as to obtain better strength and plasticity.

The manufacturing process by rapid heat treatment of the low carbon low alloy dual phase steel having a tensile strength of ≥980MPa according to the present disclosure comprises the following steps:

1) Smelting, casting
wherein the above components are subjected to smelting and casting to form a slab;
2) hot rolling, coiling
wherein a hot rolling finishing temperature is $\geq A_{r3}$; and a coiling temperature is 550~680°C;
3) cold rolling
wherein a cold rolling reduction rate is 40~85%, thereby obtaining a rolled hard strip steel or steel plate;
4) Rapid heat treatment

a) Rapid heating
wherein the strip steel or steel plate after cold rolling is rapidly heated from room temperature to 750~845°C, which is the target temperature of the dual phase region of austenite and ferrite, wherein the rapid heating is performed in one stage or two stages; when the rapid heating is performed in one stage, a heating rate is 50~500 °C/s; when the rapid heating is performed in two stages, the steel plate is heated in the first stage from room temperature to 550~650°C at a heating rate of 15~500°C/s, heated in the second stage from 550~650°C to 750~845°C at a heating rate of 30~500°C/s (such as 50~500°C/s);
b) Soaking
wherein the strip steel or steel plate is soaked at a temperature of 750~845 °C, which is the target temperature of the dual phase region of austenite and ferrite, for a soaking time of 10~60s;
c) Cooling

wherein after soaking, the strip steel or steel plate is slowly cooled to 670~770 °C at a cooling rate of 5~15°C/s, then rapidly cooled from 670~770 °C to room temperature at a cooling rate of 50~200°C/s;
or the strip steel or steel plate is rapidly cooled from 670~770 °C to 230~280°C at a cooling rate of 50~200°C/s for over-ageing treatment, wherein an over-ageing treating time is less than or equal to 200s, such as less than or equal to 175s; after over-ageing treatment, it is finally cooled to room temperature at a cooling rate of 30~50°C/s.

Preferably, in step 4), a total time of the rapid heat treatment is 41~297s, such as 41~295s.

Preferably, in step 2), the coiling temperature is 580~650°C.

Preferably, in step 3), the cold rolling reduction rate is 60~80%.

Preferably, in step 4), when the rapid heating is performed in one stage, the heating rate is 50~300°C/s.

Preferably, in step 4), the rapid heating is performed in two stages, wherein the strip steel or steel plate is heated in the first stage from room temperature to 550~650°C at a heating rate of 15~300°C/s, heated in the second stage from 550~650°C to 750~845°C at a heating rate of 50~300°C/s.

Preferably, in step 4), the rapid heating is performed in two stages, wherein the strip steel or steel plate is heated in the first stage from room temperature to 550~650°C at a heating rate of 50~300°C/s, heated in the second stage from 550~650°C to 750~845°C at a heating rate of 80~300°C/s.

Preferably, in step 4), the final temperature after rapid heating is 790~845°C. In some embodiments, for example, in the technical solution of preparing the dual-phase steel having a tensile strength of ≥1180MPa according to the present application, the final temperature after rapid heating is 790~830°C.

Preferably, in step 4), the rapid cooling rate of the strip steel or steel plate is 50~150°C/s.

Preferably, in the soaking process of step 4), after the strip steel or steel plate is heated to the target temperature of dual phase region of austenite and ferrite, the temperature is kept unchanged for soaking;

Preferably, in the soaking process of step 4), the strip steel or steel plate is slightly heated up or cooled down in the soaking time, wherein the temperature after heating is no more than 845°C and the temperature after cooling is no less than 750°C.

Preferably, in step 4), the soaking time is 10~40s.

Preferably, the over ageing time is 20~200s or 20~175s.

The manufacturing process by rapid heat treatment of the low carbon low alloy hot-galvanized dual phase steel having a tensile strength of ≥980MPa according to the present disclosure comprises the following steps:

A) Smelting, casting
wherein the above components are subjected to smelting and casting to form a slab;
B) Hot rolling, coiling
wherein a hot rolling finishing temperature is ≥$A_{r3}$; and a coiling temperature is 550~680°C;
C) Cold rolling
wherein a cold rolling reduction rate is 40~85%, thereby obtaining a rolled hard strip steel or steel plate;
D) Rapid heat treatment, hot-galvanizing

a) rapid heating

wherein the strip steel or steel plate after cold rolling is rapidly heated to 750~845°C, which is the target temperature of dual phase region of austenite and ferrite, wherein the rapid heating is performed in one stage or two stages;
when the rapid heating is performed in one stage, a heating rate is 50~500 °C/s;
when the rapid heating is performed in two stages, the strip steel or steel plate is heated in the first stage from room temperature to 550~650°C at a heating rate of 15~500°C/s, heated in the second stage from 550~650°C to 750~845°C at a heating rate of 30~500°C/s (such as 50~500°C/s);

b) Soaking
wherein the strip steel or steel plate is soaked at a temperature of 750~845 °C, which is the target temperature of the dual phase region of austenite and ferrite, for a soaking time of 10~60s;
c) Cooling, hot-galvanizing
wherein after soaking, the strip steel or steel plate is slowly cooled to 670~770 °C at a cooling rate of 5~15°C/s, then rapidly cooled to 460~470°C at a cooling rate of 50~150°C/s and immersed in a zinc pot for hot galvanizing;
d) after hot galvanizing, the strip steel or steel plate is rapidly cooled to room temperature at a cooling rate of 50~150°C/s to obtain a hot dip galvanized GI product; or
after hot galvanizing, the strip steel or steel plate is heated to 480~550°C at a heating rate of 30~200°C/s and alloyed for 10~20s; after alloying, the strip steel or steel plate is rapidly cooled to room temperature at a cooling rate of 30~250°C/s to obtain an alloy galvannealed GA product.

Preferably, a total time of the rapid heat treatment and hot-galvanizing of step D) is 30~142s.

Preferably, in step B), the coiling temperature is 580~650°C.

Preferably, in step C), the cold rolling reduction rate is 60~80%.

Preferably, in step D), when the rapid heating is performed in one stage, the heating rate is 50~300°C/s.

Preferably, in step D), the rapid heating is performed in two stages, wherein the strip steel or steel plate is heated in the first stage from room temperature to 550~650°C at a heating rate of 15~300°C/s, heated in the second stage from 550~650°C to 750~845°C at a heating rate of 50~300°C/s.

Preferably, in step D), the rapid heating is performed in two stages, wherein the strip steel or steel plate is heated in the first stage from room temperature to 550~650°C at a heating rate of 30~300°C/s, heated in the second stage from 550~650°C to 750~845°C at a heating rate of 80~300°C/s.

Preferably, in step D), the final temperature after rapid heating is 790~845°C. In some embodiments, for example, in the technical solution of preparing the hot-galvanized dual-phase steel having a tensile strength of ≥1280MPa, the final temperature after rapid heating is 790~830°C.

Preferably, in the soaking process of step D), after the strip steel or steel plate is heated to the target temperature of dual phase region of austenite and ferrite, the temperature is kept unchanged for soaking.

Preferably, in the soaking process of step D), the strip steel or steel plate is slightly heated up or cooled down in the soaking time, wherein the temperature after heating is no more than 845°C and the temperature after cooling is no less than 750°C.

Preferably, the soaking time is 10~40s.

Preferably, in step D), the strip steel or steel plate after alloying is rapidly cooled to room temperature at a cooling rate of 30~200°C/s, thereby obtaining the alloy galvannealed GA product. In some embodiments, for example, in the technical solution of preparing the hot-galvanized dual-phase steel having a tensile strength of ≥1280MPa according to the present application, the strip steel or steel plate after alloying is rapidly cooled to room temperature at a cooling rate of 30~100°C/s, thereby obtaining the alloy galvannealed GA product.

In the manufacturing process by rapid heat treatment of the 980 Mpa grade low carbon low alloy dual-phase steel according to the present disclosure:

1. Heating rate control

The recrystallization kinetics of the continuous heating process can be quantitatively described by the relationship affected by the heating rate. The function of the volume fraction of ferrite recrystallization and the temperature T during continuous heating process is:

$$X(T) = 1 - \exp[-n / \beta^n \int_{T_{star}}^{T} b(T)(T - T_{star})^{n-1} dT]$$

where X(T) is the volume fraction of ferrite recrystallization; n is the Avrami index, which is related to the phase transition mechanism, depending on the decay period of the recrystallization nucleation rate, generally 1~4; T is the heat treatment temperature; $T_{star}$ is the recrystallization starting temperature; $\beta$ is the heating rate; b is a constant at given isothermal temperature and changes accordingly with the isothermal temperature, wherein b(T) is obtained by:

$$b = b_0 \exp(-Q / RT)$$

From the above formula and relevant experimental data, it can be concluded that with the increase of heating rate, the recrystallization starting temperature ($T_{star}$) and finishing temperature ($T_{fin}$) increase. When the heating rate is equal to or more than 50°C/s, the austenite phase transition overlaps the recrystallization process, and the recrystallization temperature increases to the dual-phase zone temperature. The faster the heating rate, the higher the ferrite recrystallization temperature.

Slow heating is adopted in the traditional heat treatment process due to limitation of the heating technology. In this case, the deformed matrix recovers, recrystallizes and the grain grows sequentially. Then the phase transition from ferrite to austenite occurs. The nucleus point of austenite phase is mainly at the grain boundary of the ferrite that has grown up and the nucleation rate is low. The grain structure of the final resultant dual-phase steel is relatively coarse.

Under the condition of rapid heating, the phase transformation of ferrite to austenite begins to occur as soon as the deformed matrix has completed recrystallization or has not yet completed recrystallization (or even not fully recovered). Because the grain is fine and the grain boundary area is large at this time, the phase deformation nucleation rate is significantly increased and the austenite grain is significantly refined. Especially when the ferrite recrystallization process overlaps with the austenite phase transition process, because a large number of crystal defects such as dislocations and the like are retained in the ferrite crystal, a large number of nucleation points are provided for austenite, so that the austenite nucleation is explosive and the austenite grains are further refined. In addition, these high-density dislocational line defects also become channels for the high-rate diffusion of carbon atoms to allow each austenite grain to be quickly generated and grow up, so the austenite grain is fine and the volume fraction increases.

The rapid heating process provides a good basis for the phase transition from austenite to martensite in the rapid cooling process. The final product structure with refined grains, reasonable elements and phase distribution can be obtained finally. Comprehensively considering the effect of rapid heating and grain refinement, manufacturing cost and manufacturability, the heating rate is set at 50~500 °C/s for one-stage rapid heating, and 15~500 °C/s when two-stage rapid heating is adopted in the present disclosure.

Due to the different effects of rapid heating on the microstructure evolution process of material recovery, recrystallization and grain growth in different temperature zones, in order to obtain optimal microstructure control, the preferred heating rate is different in different heating temperature zones: The heating rate has the greatest impact on the recovery process from 20 °C to 550~650 °C and the heating rate is controlled at 15~300 °C/s, and further preferably 50~300 °C/s. When the heating temperature is from 550~650 °C to austenitizing temperature 750~845 °C, the heating rate had the greatest effect on the nucleation rate and grain growth process and the heating rate is controlled at 50~300 °C/s, further preferably 80~300 °C/s.

2. Soaking temperature control

The selection of soaking temperature should be combined with the control of material microstructure evolution at each temperature stage of the heating process, and the evolution and control of the subsequent rapid cooling process should be considered, so as to finally obtain the preferred structure and distribution.

The soaking temperature usually depends on the C content. The C content of the dual-phase steel in the present disclosure is 0.05~0.12%, and the Aci and Acs of the steel in the present disclosure are about 730 °C and 870 °C, respectively. The strip steel is rapidly heated from room temperature to the temperature between $A_{C1}$ and $A_{C3}$ by rapid heat treatment process in the present disclosure. The use of rapid heating technology allows the material to retain a large number of dislocations in the ferrite that is not fully recrystallized, providing a greater nucleation driving force for austenite transformation. Therefore, compared with the traditional continuous annealing process, the rapid heat treatment process of the present disclosure can provide more and finer austenite structure.

With respect to the control of soaking temperature, the present disclosure first proposes rising and decreasing the soaking temperature within a certain range: that is, the soaking temperature rises slantwise and decreases slantwise in the soaking process, but the soaking temperature must be kept within a certain range. The advantage of this is that the rapid heating process in the temperature range of the two-phase region is actually to further increase the degree of superheat and the degree of supercooling to facilitate the rapid phase transition process. When the amplitude and rate of temperature ramp are large enough, the grains can be further refined by repeated ferrite to austenite phase transformation and austenite to ferrite phase transformation. At the same time, it has a certain influence on carbide formation and uniform distribution of alloying elements, finally forming a finer structure and alloying elements with uniform distribution.

After cold rolling, there are a large number of undissolved fine uniformly distributed carbides in dual-phase steel, which can not only become the nucleation point of austenite, but also mechanically impede the growth of austenite grains during heating and soaking process, and is conducive to refining the grain size of alloy steel. However, if the heating temperature is too high, the number of undissolved carbides will be greatly reduced and the size will increase, which weakens this impedance, increase the growth tendency of grains, and thereby reduce the strength of steel. When the number of undissolved carbides is too large, it may cause aggregation, resulting in uneven local distribution of chemical components, and when the carbon content at the aggregation is too high, it will also cause local overheating. Therefore, ideally, a small quantity of fine granular undissolved carbides should be evenly distributed in the steel, which can not only prevent the abnormal growth of austenite grains, but also increase the content of each alloying element in the matrix accordingly, so as to improve the mechanical properties such as strength and toughness of alloy steel.

The selection of soaking temperature should also be aimed at obtaining fine and uniform austenite grains, so that the purpose of obtaining fine martensitic structure after cooling can be achieved. Too high soaking temperature will make the austenite grains coarse, and the martensitic structure obtained after rapid cooling will also be coarse, resulting in poor mechanical properties of steel. It will also increase the amount of residual austenite, reduce the amount of martensite and reduce the hardness and wear resistance of steel. Too low soaking temperature not only reduces the amount of austenite, but also makes the content of carbon and alloying elements in austenite insufficient, so that the concentration of alloying elements in austenite is unevenly distributed, which greatly reduces the hardenability of steel and adversely affects the mechanical properties of steel. The soaking temperature of hypoeutectoid steel should be $A_{c3}+30~50°C$. For ultra-high-strength steels, the presence of carbide-forming elements will impede the transformation of carbides, so the soaking temperature can be appropriately increased. Based on the above factors, the soaking temperature is selected to be 750~845 °C in the present disclosure and it is expected to obtain a more ideal and reasonable final structure.

3. Soaking time control

Since rapid heating is adopted in the present disclosure, the material in the dual-phase region contains a large number of dislocations, which provide a large number of nucleation points for austenite formation, and provide a rapid diffusion channel for carbon atoms, so that austenite can be formed extremely quickly. Moreover, the shorter the soaking time, the shorter the diffusion distance of carbon atoms, the greater the carbon concentration gradient in austenite, and the more residual austenite carbon content is retained at the end. However, if the holding time is too short, the distribution of alloying elements in the steel will be uneven, resulting in insufficient austenitization. If the holding time is too long, it is easy to lead to coarse austenite grains. The soaking time is also influenced by the content of carbon and alloying elements in steel. When the content of carbon and alloying elements in steel increases, it will not only lead to a decrease in thermal conductivity of steel, but also significantly delay the microstructure transformation of steel because the diffusion rate of alloying elements is slower than carbon element, and it is necessary to appropriately extend the holding time at this time. Therefore, the control of soaking time needs to be determined by strictly combining with soaking temperature and comprehensively considering rapid cooling and rapid heating process, in order to finally obtain the ideal structure and element distribution. In summary, the soaking time is set to be 10~60s in the present disclosure.

4. Rapid cooling rate control

In order to obtain the martensitic strengthening phase, the cooling rate of the material upon rapid cooling must be greater than the critical cooling rate to obtain martensite structure. The critical cooling rate mainly depends on the material composition. The optimized Si content in the present disclosure is 0.1~0.7%. The Mn content is 1.4~2.8%. Mn greatly strengthens the hardenability of dual-phase steel and reduces the requirements of critical cooling rate.
The selection of cooling rate also needs to comprehensively consider the microstructure evolution of heating process and soaking process and alloy diffusion distribution results, so as to finally obtain a reasonable distribution of each phase and alloying elements and ensure that the ideal phase structure and reasonable element distribution of the material structure are finally obtained. Too low cooling rate cannot provide martensitic structure. It will lead to a decrease in strength and thus the mechanical properties cannot meet the requirements. Too high cooling rate will produce large quenching stress (i.e. structure stress and thermal stress), resulting in poor plate shape, and it is even easy to lead to serious deformation and cracking of the sample. Therefore, the rapid cooling rate is set at 50~200 °C/s in the present disclosure.

5. Over ageing treatment

After traditional heat treatment, the over ageing is mainly to temper the hardened martensite to improve the comprehensive properties of dual-phase steel. Improper setting of the over ageing temperature and time will cause decomposition of martensite, which directly deteriorates the mechanical properties of dual-phase steel. The setting of over ageing temperature and time should comprehensively consider martensitic morphology and distribution, element content and distribution, and the size and distribution of other structures. Therefore, the control of over ageing needs to be determined by integrating the parameters of the previous heating process, soaking process and cooling process. Considering the microstructure evolution and element distribution of rapid heating, short-term heat preservation and rapid cooling process, the over ageing temperature is set to be 230~280 °C in the present disclosure. The over ageing time is controlled to be less than or equal to 200s, usually 20~200s or 20~175s.

6. Hot-dip galvanizing and alloying control

In the present disclosure, by modifying the traditional continuous annealing hot galvanizing unit through rapid heating and rapid cooling process to realize a rapid heat treatment hot-dip galvanizing process, the length of the heating and soaking section of the annealing furnace (at least one-third shorter than the traditional continuous annealing furnace) can be greatly shortened, the production efficiency of traditional continuous annealing hot-dip galvanizing units can be improved, the production cost and energy consumption are reduced, and the number of continuous annealing hot-dip galvanizing furnace rollers, especially the number of high-temperature furnace rollers, can be significantly reduced, so as to improve the surface quality control ability of strip steel and provide strip products with high surface quality.
For high-strength hot-dip galvanized products, the rapid heat treatment process reduces the residence time of the strip steel in the high-temperature furnace, so the enrichment of alloying elements on the surface of the high-strength strip steel is significantly reduced during the heat treatment process, which is conducive to improving the platability of high-strength hot-dip galvanized products, reducing surface skip plating defects and improving corrosion resistance, thereby improving the yield rate.

At the same time, by establishing a new continuous annealing hot-dip galvanizing unit with rapid heat treatment hot-dip galvanizing process technology, the purpose of providing a short and compact unit with flexible material transition and strong control ability can be realized. For product materials, strip grains can be refined to further improve material strength, reduce alloy cost and manufacturing difficulty in the process before heat treatment hot-dip galvanizing process, and improve the use performance of materials such as forming and welding.

Advantages of the present disclosure over traditional techniques are as follows:

(1) In the present disclosure, the recovery of deformed structure and ferrite recrystallization during heat treatment process is inhibited by rapid heat treatment, so that the recrystallization overlaps with the austenite phase transition. It increases the nucleation points of the recrystallized grain and austenite grain, shortens the grain growth time and refines the grain. The resultant microstructure of the dual-phase steel is the dual-phase structure of ferrite and martensite with the average grain size of $1\sim3\mu m$, which is reduced by more than 50% of the grain size of the product produced by the existing traditional technology (usually $5\sim10\mu m$). Moreover, the ferritic and martensitic structures obtained by the present disclosure have a variety of forms such as block, strip, granular, etc., and the distribution of ferrite and martensite is more uniform, so that better strength and plasticity can be obtained. While the strength of the material is improved, good plasticity and toughness are obtained and the performance of the material is improved.

(2) Compared with the dual-phase steel obtained by traditional heat treatment, the grain size of the dual-phase steel obtained by the present disclosure is reduced by no less than 50%, the strength and toughness of the material are significantly improved. The yield strength is $\geq 590MPa$ and the tensile strength is $\geq980MPa$, both of which can be controlled within a small range, and the stability of the mechanical properties of the product is significantly improved. The elongation is $\geq 7.5\%$ and can be maintained at a high level of $10.6\sim16.6\%$. The product of strength and elongation is $\geq9.0GPa\%$.

(3) According to the rapid heat treatment process of dual-phase steel described in the present disclosure, the total time of heat treatment can be shortened to $40\sim295s$, which greatly reduces the time of the entire heat treatment process (the time of traditional continuous annealing process is usually 5-8min), improves production efficiency and reduces energy consumption and production costs.

(4) Compared with the traditional dual-phase steel and its heat treatment process, the heating section time and soaking section time of the rapid heat treatment process of the present disclosure are shortened by $60\sim80\%$. The processing time of strip steel at high temperature and the entire heat treatment process time are shortened. It can reduce energy consumption, significantly reduce the one-time investment of furnace equipment, and significantly reduce the cost of production operation and equipment maintenance. In addition, the production of products with the same strength grade through rapid heat treatment can reduce the alloy content, the production cost of heat treatment and the process before heat treatment, and the manufacturing difficulty of each process before heat treatment.

(5) Compared with the dual-phase steel obtained by the traditional continuous annealing treatment, the rapid heat treatment process technology reduces the time of heating process and soaking process, shortens the length of the furnace, and reduces the number of furnace rolls by $35\sim90\%$, so that the probability of surface defects generated in the furnace is reduced and thus the surface quality of the product is significantly improved. In addition, due to the refinement of the product grain and the reduction of alloy content in the material, the workability and forming properties such as the hole-expanding performance and bending performance of the dual-phase steel obtained by the technology of the present disclosure and the use performance such as welding performance have also been improved.

The dual-phase steel and hot-dip galvanized dual-phase steel obtained by the present disclosure are of great value to the development of a new generation of lightweight automobiles, trains, ships, aircrafts and other vehicles and the healthy development of corresponding industries and advanced manufacturing industries.

Description of the Drawings

Fig. 1 is a microstructure photo of a dual-phase steel produced from test steel A of Example I according to Example 1 of the present disclosure.
Fig. 2 is a microstructure photo of a dual-phase steel produced from test steel A of Example I according to Traditional process 1 of the present disclosure.
Fig. 3 is a microstructure photo of a dual-phase steel produced from test steel F of Example I according to Example 6 of the present disclosure.

Fig. 4 is a microstructure photo of a dual-phase steel produced from test steel M of Example I according to Example 12 of the present disclosure.

Fig. 5 is a microstructure photo of a dual-phase steel produced from test steel S of Example I according to Example 23 of the present disclosure.

Fig. 6 is a microstructure photo of a dual-phase steel produced from test steel M of Example I according to Example 24 of the present disclosure.

Fig. 7 is a microstructure photo of a dual-phase steel produced from test steel A of Example II according to Example 1 of the present disclosure.

Fig. 8 is a microstructure photo of a dual-phase steel produced from test steel A of Example II according to Traditional process 1 of the present disclosure.

Fig. 9 is a microstructure photo of a dual-phase steel produced from test steel F of Example II according to Example 6 of the present disclosure.

Fig. 10 is a microstructure photo of a dual-phase steel produced from test steel M of Example II according to Example 12 of the present disclosure.

Fig. 11 is a microstructure photo of a dual-phase steel produced from test steel S of Example II according to Example 23 of the present disclosure.

Fig. 12 is a microstructure photo of a dual-phase steel produced from test steel M of Example II according to Example 24 of the present disclosure.

Fig. 13 is a microstructure photo of a dual-phase steel produced from test steel A of Example III according to Example 1 of the present disclosure.

Fig. 14 is a microstructure photo of a dual-phase steel produced from test steel A of Example III according to Traditional process 1 of the present disclosure.

Fig. 15 is a microstructure photo of a dual-phase steel produced from test steel F of Example III according to Example 6 of the present disclosure.

Fig. 16 is a microstructure photo of a dual-phase steel produced from test steel M of Example III according to Example 12 of the present disclosure.

Fig. 17 is a microstructure photo of a dual-phase steel produced from test steel S of Example III according to Example 23 of the present disclosure.

Fig. 18 is a microstructure photo of a dual-phase steel produced from test steel M of Example III according to Example 24 of the present disclosure.

Fig. 19 is a microstructure photo of a hot dip galvanized dual-phase steel (GI) produced from test steel A of Example IV according to Example 1 of the present disclosure.

Fig. 20 is a microstructure photo of a hot dip galvanized dual-phase steel (GI) produced from test steel A of Example IV according to Traditional process 1 of the present disclosure.

Fig. 21 is a microstructure photo of an alloy galvannealed dual-phase steel (GA) produced from test steel I of Example IV according to Example 17 of the present disclosure.

Fig. 22 is a microstructure photo of a hot dip galvanized dual-phase steel (GI) produced from test steel D of Example IV according to Example 22 of the present disclosure.

Fig. 23 is a microstructure photo of an alloy galvannealed dual-phase steel (GA) produced from test steel I of Example IV according to Example 34 of the present disclosure.

Fig. 24 is a microstructure photo of a hot dip galvanized dual-phase steel (GI) produced from test steel A of Example V according to Example 1 of the present disclosure.

Fig. 25 is a microstructure photo of a hot dip galvanized dual-phase steel (GI) produced from test steel A of Example V according to Traditional process 1 of the present disclosure.

Fig. 26 is a microstructure photo of an alloy galvannealed dual-phase steel (GA) produced from test steel I of Example V according to Example 17 of the present disclosure.

Fig. 27 is a microstructure photo of a hot dip galvanized dual-phase steel (GI) produced from test steel D of Example V according to Example 22 of the present disclosure.

Fig. 28 is a microstructure photo of an alloy galvannealed dual-phase steel (GA) produced from test steel I of Example V according to Example 34 of the present disclosure.

Fig. 29 is a microstructure photo of a hot dip galvanized dual-phase steel (GI) produced from test steel A of Example VI according to Example 1 of the present disclosure.

Fig. 30 is a microstructure photo of a hot dip galvanized dual-phase steel (GI) produced from test steel A of Example VI according to Traditional process 1 of the present disclosure.

Fig. 31 is a microstructure photo of an alloy galvannealed dual-phase steel (GA) produced from test steel I of Example VI according to Example 17 of the present disclosure.

Fig. 32 is a microstructure photo of a hot dip galvanized dual-phase steel (GI) produced from test steel D of Example VI according to Example 22 of the present disclosure.

Fig. 33 is a microstructure photo of an alloy galvannealed dual-phase steel (GA) produced from test steel I of Example VI according to Example 34 of the present disclosure.

Detailed Description

The present disclosure is further explained below in reference to the Examples and the accompanying drawings. The Examples are implemented in accordance with the technical solution of the present disclosure. Detailed embodiments and specific operation process are provided, but the protection scope of the present disclosure is not limited to the Examples described below.

In the Examples, yield strength, tensile strength and elongation were tested on P7 specimen transversely according to GB/T228.1-2010 Metallic materials-Tensile testing-Part 1: Method of test at room temperature. n90 was tested on the P7 specimen transversely according to GB/T228.1-2010 Metallic materials-Tensile testing-Part 1: Method of test at room temperature and n90 value was obtained according to GBT 5028-2008 Metallic materials - Sheet and strip - Determination of tensile strain hardening exponent.

Example I

The composition of the test steel of this Example is shown in Table 1. The specific parameters of the present example and the traditional processes are shown in Table 2 and Table 3. The main performances of the steel prepared from the test steel composition of the present disclosure according to the examples and the traditional processes are listed in Table 4 and Table 5.

It can be seen from Table 1-Table 5 that the process of the present disclosure can reduce the alloy content in the same grade of steel, refine grains, and obtain a matching of material structure and composition with strength and toughness. The dual-phase steel obtained by the process of the present disclosure has a yield strength of 598~749MPa, a tensile strength of 1030~1096MPa, an elongation of 10.6~16.6%, a product of strength and elongation of 10.9~17.4GPa%, and a strain hardening index $n_{90}$ value of greater than 0.21, which is higher than that of the dual-phase steel produced by the traditional process.

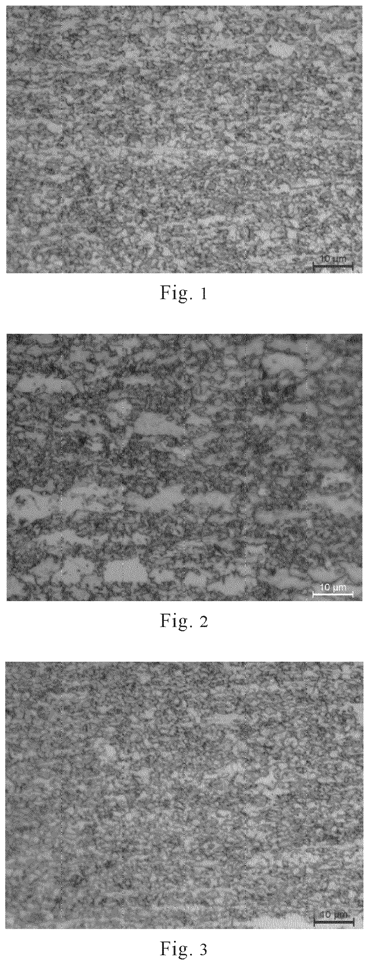

Figure 1 is a structure photo of A steel having a typical composition obtained by Example 1, and Figure 2 is a structure photo of A steel having a typical composition obtained by traditional process 1. It can be seen from the figures that there are very large differences in the structures treated by different heat treatment methods. The microstructure of the dual phase steel obtained after the rapid heat treatment process of this example is composed of a fine, uniform martensitic structure and a small amount of carbide dispersed in ferrite matrix. The grain structure of ferrite and martensite and carbide are very fine and evenly distributed in the matrix, which is very beneficial to the improvement of the strength and plasticity of the material. The dual-phase steel obtained by the traditional process treatment has a typical dual-phase steel microstructure, that is, there is a small amount of black martensite structure on the grain boundary of white ferrite, wherein the ferrite structure is relatively coarse and the distribution of martensite and carbide is quite uneven. The microstructure treated by the traditional process is characterized in that the ferrite grain is relatively coarse, and the distribution of dual-phase structure of ferrite and martensite is uneven.

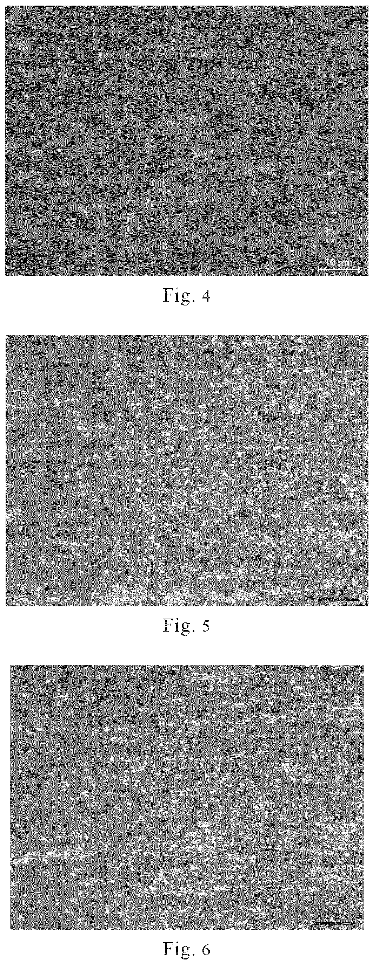

Figure 3 is a structure photo of F steel having a typical composition obtained by Example 6 (over ageing treatment), and Figure 4 is a structure photo of M steel having a typical composition obtained by Example 12 (without over ageing treatment). Figure 5 is a structure photo of S steel having a typical composition obtained by Example 23, and Figure 6 is a structure photo of M steel having a typical composition obtained by Example 24. Examples 6, 12, 23, 24 all adopt processes with short heat treatment cycles. It can be seen from the figures that by the removal of the over ageing treatment segment in the process of the present disclosure can also provide very uniform, fine, dispersed distribution of each phase structure. Therefore, the manufacturing process of the dual-phase steel of the present disclosure can refine grains, and make the structure of each phase of the material evenly distributed in the matrix, thereby improving the material structure and the material properties.

Table 1 unit: mass percentage

| Test steel | C | Si | Mn | Ti | Nb | Cr | Mo | V | P | S | Al |
|---|---|---|---|---|---|---|---|---|---|---|---|
| A | 0.05 | 0.45 | 2.00 | 0.0419 | 0.0231 | / | / | / | 0.0135 | 0.0015 | 0.0314 |
| B | 0.07 | 0.20 | 1.91 | 0.0303 | 0.0298 | 0.2 | / | / | 0.0079 | 0.002 | 0.0316 |
| C | 0.103 | 0.33 | 1.62 | 0.0325 | 0.0355 | / | / | / | 0.0144 | 0.0009 | 0.0269 |
| D | 0.120 | 0.42 | 1.43 | 0.0358 | 0.0332 | 0.4 | / | / | 0.0148 | 0.0012 | 0.0314 |

(continued)

| Test steel | C | Si | Mn | Ti | Nb | Cr | Mo | V | P | S | Al |
|---|---|---|---|---|---|---|---|---|---|---|---|
| E | 0.055 | 0.44 | 1.41 | 0.0500 | 0.0205 | 0.253 | 0.12 | / | 0.0118 | 0.0011 | 0.034 |
| F | 0.068 | 0.35 | 1.63 | 0.0307 | 0.0225 | / | 0.13 | 0.041 | 0.0118 | 0.0015 | 0.020 |
| G | 0.092 | 0.25 | 1.50 | 0.0382 | 0.0273 | 0.181 | 0.12 | / | 0.0115 | 0.0006 | 0.0297 |
| H | 0.099 | 0.42 | 1.44 | 0.0398 | 0.0360 | / | / | / | 0.0064 | 0.0028 | 0.0294 |
| I | 0.110 | 0.26 | 1.61 | 0.0314 | 0.0356 | 0.305 | / | 0.035 | 0.0143 | 0.0003 | 0.0358 |
| J | 0.103 | 0.43 | 1.23 | 0.0322 | 0.0256 | / | 0.1 | / | 0.0136 | 0.0018 | 0.0286 |
| K | 0.083 | 0.27 | 1.45 | 0.0500 | 0.0264 | / | / | / | 0.0097 | 0.003 | 0.050 |
| L | 0.095 | 0.35 | 1.52 | 0.0427 | 0.0253 | / | / | / | 0.0095 | 0.0028 | 0.0403 |
| M | 0.078 | 0.45 | 1.40 | 0.0356 | 0.0235 | / | 0.11 | 0.025 | 0.0099 | 0.003 | 0.0429 |
| N | 0.069 | 0.50 | 2.20 | 0.0351 | 0.0345 | / | 0.12 | / | 0.0134 | 0.0008 | 0.0367 |
| O | 0.105 | 0.10 | 1.71 | 0.0458 | 0.0282 | / | / | / | 0.0099 | 0.0017 | 0.029 |
| P | 0.094 | 0.23 | 1.82 | 0.0423 | 0.0241 | / | / | 0.05 | 0.0124 | 0.0012 | 0.0259 |
| Q | 0.089 | 0.15 | 1.72 | 0.0331 | 0.0344 | / | / | / | 0.0096 | 0.0011 | 0.0319 |
| R | 0.095 | 0.18 | 1.83 | 0.0314 | 0.0400 | / | / | 0.032 | 0.0075 | 0.0015 | 0.0285 |
| S | 0.096 | 0.31 | 1.65 | 0.0327 | 0.0347 | / | / | 0.03 | 0.0066 | 0.0007 | 0.0495 |

Table 2

| | Hot rolling Coiling temperature °C | Cold rolling reduction rate % | Rapid heating rate (one stage) °C/s | Rapid heat treatment (one stage) | | | | | | | | | Total time of rapid heat treatments |
|---|---|---|---|---|---|---|---|---|---|---|---|---|---|
| | | | | Soaking | | Slow cooling | | Rapid cooling | | Overageing treatment | | Final cooling rate °C/s | |
| | | | | Soaking temperature °C | Soaking time s | Cooling rate °C/s | Temperature after cooling °C | Cooling rate °C/s | Temperature after cooling °C | Overageing temperature °C | Overageing time s | | |
| Ex. 1 | 680 | 45 | 50 | 750 | 60 | 15 | 670 | 50 | 240 | 240 | 180 | 30 | 275.87 |
| Ex. 2 | 650 | 85 | 80 | 770 | 50 | 13 | 690 | 60 | 230 | 230 | 200 | 40 | 278.45 |
| Ex. 3 | 610 | 75 | 150 | 790 | 40 | 11 | 700 | 80 | 235 | 235 | 150 | 50 | 213.43 |
| Ex. 4 | 580 | 65 | 300 | 800 | 30 | 9 | 730 | 100 | 260 | 260 | 120 | 35 | 171.93 |
| Ex. 5 | 550 | 70 | 500 | 815 | 10 | 6 | 770 | 120 | 280 | 280 | 110 | 38 | 140.02 |
| Ex. 6 | 590 | 40 | 250 | 845 | 20 | 5 | 750 | 150 | 250 | 250 | 100 | 45 | 150.74 |
| Ex. 7 | 640 | 50 | 350 | 795 | 55 | 12 | 695 | 140 | 238 | 238 | 80 | 43 | 153.88 |
| Ex. 8 | 600 | 68 | 400 | 790 | 45 | 8 | 740 | 130 | 252 | 252 | 60 | 48 | 121.76 |
| Ex. 9 | 570 | 60 | 230 | 815 | 35 | 10 | 710 | 110 | 270 | 270 | 40 | 33 | 100.53 |
| Ex. 10 | 630 | 80 | 100 | 830 | 25 | 14 | 680 | 200 | 245 | 245 | 20 | 30 | 73.49 |
| Ex. 11 | 660 | 77 | 180 | 820 | 30 | 7 | 720 | 170 | 20 | / | / | / | 52.85 |
| Ex. 12 | 550 | 55 | 200 | 835 | 20 | 6 | 760 | 180 | 20 | / | / | / | 40.69 |
| Traditional process 1 | 680 | 85 | 11 | 750 | 160 | 10 | 675 | 100 | 230 | 230 | 290 | 30 | 535.3 1 |
| Traditional process 2 | 650 | 75 | 10 | 770 | 130 | 9 | 675 | 80 | 250 | 250 | 260 | 30 | 488.53 |
| Traditional process 3 | 610 | 65 | 11 | 790 | 110 | 10 | 675 | 75 | 240 | 240 | 230 | 30 | 434.63 |
| Traditional process 4 | 580 | 55 | 13 | 820 | 90 | 8 | 675 | 60 | 260 | 260 | 160 | 30 | 344.58 |
| Traditional process 5 | 550 | 40 | 15 | 845 | 70 | 12 | 675 | 50 | 280 | 280 | 180 | 30 | 559.73 |

Table 3

| | Hot rolling coiling temperature °C | Cold rolling reduction rate % | Rapid heat treatment (two-stage) | | | | | | | | | | | | Total time of rapid heat treatment s |
| | | | Rapid heating (two-stage) | | | Soaking | | Slow cooling | | Rapid cooling | | Over ageing treatment | | Final cooling rate °C/s | |
| | | | Heating rate in the first stage °C/s | Temperature after heating in the first stage °C | Heating rate in the second stage °C/s | Soaking temperature °C | Soaking time s | Cooling rate °C/s | Temperature after cooling °C | Cooling rate °C/s | Temperature after cooling °C | Over ageing temperature °C | Over ageing time s | | |
|---|---|---|---|---|---|---|---|---|---|---|---|---|---|---|---|
| Ex. 13 | 680 | 45 | 15 | 550 | 500 | 810 | 60 | 15 | 695 | 50 | 240 | 240 | 175 | 30 | 294.95 |
| Ex. 14 | 650 | 85 | 30 | 570 | 300 | 790 | 50 | 13 | 670 | 60 | 230 | 230 | 150 | 40 | 240.88 |
| Ex. 15 | 610 | 75 | 80 | 600 | 150 | 770 | 40 | 11 | 650 | 80 | 235 | 235 | 160 | 50 | 228.78 |
| Ex. 16 | 580 | 65 | 150 | 630 | 80 | 750 | 30 | 9 | 650 | 100 | 260 | 260 | 120 | 35 | 177.43 |
| Ex. 17 | 550 | 70 | 300 | 640 | 50 | 815 | 10 | 6 | 700 | 120 | 280 | 280 | 140 | 38 | 185.08 |
| Ex. 18 | 590 | 40 | 500 | 650 | 30 | 820 | 20 | 5 | 710 | 150 | 250 | 250 | 100 | 45 | 157.10 |
| Ex. 19 | 640 | 50 | 450 | 647 | 400 | 845 | 55 | 12 | 700 | 140 | 238 | 238 | 80 | 43 | 157.34 |
| Ex. 20 | 600 | 68 | 350 | 635 | 450 | 830 | 45 | 8 | 690 | 130 | 252 | 252 | 60 | 48 | 132.89 |
| Ex. 21 | 570 | 60 | 400 | 640 | 350 | 825 | 35 | 10 | 700 | 110 | 270 | 270 | 40 | 33 | 101.06 |
| Ex. 22 | 630 | 80 | 250 | 620 | 250 | 815 | 25 | 14 | 680 | 200 | 245 | 245 | 20 | 30 | 67.50 |
| Ex. 23 | 660 | 77 | 100 | 580 | 150 | 800 | 30 | 7 | 690 | 170 | 20 | / | / | / | 56.72 |
| Ex. 24 | 550 | 55 | 200 | 610 | 200 | 790 | 20 | 9 | 680 | 160 | 20 | / | / | / | 40.20 |
| Traditional process 6 | 680 | 85 | 11 | 150 | 8 | 750 | 160 | 10 | 675 | 100 | 230 | 230 | 290 | 30 | 555.77 |
| Traditional process 7 | 650 | 75 | 10 | 150 | 7 | 770 | 130 | 9 | 675 | 80 | 250 | 250 | 260 | 30 | 515.11 |
| Traditional process 8 | 610 | 65 | 11 | 180 | 6 | 800 | 110 | 10 | 675 | 75 | 240 | 240 | 230 | 30 | 483.51 |
| Traditional process 9 | 580 | 55 | 13 | 210 | 5 | 830 | 90 | 8 | 675 | 60 | 260 | 260 | 160 | 30 | 422.91 |

EP 4 317 515 A1

(continued)

| Hot rolling coiling temperature °C | Cold rolling reduction rate % | Rapid heat treatment (two-stage) | | | | | | | | | | | | |
| | | Rapid heating (two-stage) | | | Soaking | | Slow cooling | | Rapid cooling | | Over ageing treatment | | Final cooling rate °C/s | Total time of rapid heat treatment s |
| | | Heating rate in the first stage °C/s | Temperature after heating in the first stage °C | Heating rate in the second stage °C/s | Soaking temperature °C | Soaking time s | Cooling rate °C/s | Temperature after cooling °C | Cooling rate °C/s | Temperature after cooling °C | Over ageing temperature °C | Over ageing time s | | |
| 550 | 40 | 15 | 250 | 5 | 845 | 70 | 12 | 675 | 50 | 280 | 280 | 400 | 30 | 635.07 |

Traditional process 10

Table 4

| No. | Test steel | Main process parameters (Rapid heating-one stage) | Yield strength MPa | Tensile strength MPa | Elongation % | Product of strength and elongation MPa% | $n_{90}$ value |
|---|---|---|---|---|---|---|---|
| 1 | A | Traditional process 1 | 482 | 793 | 17.2 | 13639.6 | 0.158 |
| 2 | A | Ex. 1 | 637 | 1057 | 15.2 | 16066.4 | 0.212 |
| 3 | B | Traditional process 2 | 522 | 816 | 19.7 | 16075.2 | 0.169 |
| 4 | B | Ex. 2 | 631 | 1045 | 15.8 | 16511 | 0.221 |
| 5 | C | Traditional process 3 | 508 | 823 | 19.8 | 16295.4 | 0.177 |
| 6 | C | Ex. 3 | 623 | 1046 | 15.2 | 15899.2 | 0.223 |
| 7 | D | Traditional process 4 | 513 | 821 | 18.1 | 14860.1 | 0.164 |
| 8 | D | Ex. 4 | 629 | 1033 | 16.4 | 16941.2 | 0.216 |
| 9 | E | Traditional process 5 | 494 | 808 | 19.5 | 15756 | 0.165 |
| 10 | E | Ex. 5 | 605 | 1037 | 16.1 | 16695.7 | 0.213 |
| 11 | O | Ex. 6 | 612 | 1049 | 15.2 | 15944.8 | 0.211 |
| 12 | O | Traditional process 4 | 487 | 791 | 20.4 | 16136.4 | 0.164 |
| 13 | L | Ex. 7 | 616 | 1047 | 16.6 | 17380.2 | 0.234 |
| 14 | L | Traditional process 3 | 480 | 799 | 20.8 | 16619.2 | 0.17 |
| 15 | H | Ex. 4 | 598 | 1062 | 16.4 | 17416.8 | 0.237 |
| 16 | H | Traditional process 4 | 488 | 794 | 20.6 | 16356.4 | 0.171 |
| 17 | Q | Ex. 2 | 634 | 1096 | 15.1 | 16549.6 | 0.231 |
| 18 | Q | Traditional process 2 | 494 | 800 | 20.5 | 16400 | 0.165 |
| 19 | I | Ex. 3 | 629 | 1064 | 16.4 | 17449.6 | 0.224 |
| 20 | J | Ex. 4 | 616 | 1054 | 16.4 | 17285.6 | 0.231 |
| 21 | N | Ex. 5 | 654 | 1048 | 15.1 | 15824.8 | 0.228 |
| 22 | F | Ex. 6 | 618 | 1065 | 15.7 | 16720.5 | 0.235 |
| 23 | K | Ex. 7 | 657 | 1046 | 14.6 | 15271.6 | 0.228 |
| 24 | R | Ex. 8 | 643 | 1048 | 14.8 | 15510.4 | 0.223 |
| 25 | G | Ex. 9 | 669 | 1080 | 15.4 | 16632 | 0.228 |
| 26 | P | Ex. 10 | 638 | 1051 | 15.9 | 16710.9 | 0.231 |
| 27 | S | Ex. 11 | 654 | 1078 | 15.1 | 16277.8 | 0.219 |
| 28 | M | Ex. 12 | 628 | 1065 | 15.7 | 16720.5 | 0.228 |

Table 5

| No. | Test steel | Main process parameters (Rapid heating-two stage) | Yield strength MPa | Tensile strength MPa | Elongation % | Product of strength and elongation MPa% | $n_{90}$ value |
|---|---|---|---|---|---|---|---|
| 1 | A | Traditional process 6 | 468 | 880 | 12.4 | 10912 | 0.165 |
| 2 | A | Ex. 13 | 619 | 1030 | 10.6 | 10918 | 0.224 |

(continued)

| No. | Test steel | Main process parameters (Rapid heating-two stage) | Yield strength MPa | Tensile strength MPa | Elongation % | Product of strength and elongation MPa% | $n_{90}$ value |
|---|---|---|---|---|---|---|---|
| 3 | B | Traditional process 7 | 475 | 903 | 11.4 | 10294 | 0.173 |
| 4 | B | Ex. 14 | 645 | 1090 | 11.7 | 12753 | 0.266 |
| 5 | C | Traditional process 8 | 465 | 878 | 12.2 | 10712 | 0.163 |
| 6 | C | Ex. 15 | 701 | 1088 | 11.7 | 12729.6 | 0.271 |
| 7 | D | Traditional process 9 | 480 | 898 | 12 | 10776 | 0.175 |
| 8 | D | Ex. 16 | 654 | 1044 | 11.4 | 11901.6 | 0.226 |
| 9 | E | Traditional process 10 | 483 | 827 | 15.9 | 13149 | 0.174 |
| 10 | E | Ex.17 | 737 | 1090 | 13.4 | 14606 | 0.233 |
| 11 | O | Ex.18 | 744 | 1033 | 12.5 | 12912.5 | 0.222 |
| 12 | O | Traditional process 9 | 510 | 848 | 15.1 | 12805 | 0.166 |
| 13 | L | Ex.19 | 739 | 1060 | 13.4 | 14204 | 0.246 |
| 14 | L | Traditional process 8 | 487 | 865 | 14.3 | 12370 | 0.173 |
| 15 | H | Ex.16 | 677 | 1052 | 11.7 | 12308.4 | 0.220 |
| 16 | H | Traditional process 9 | 468 | 827 | 16.8 | 13894 | 0.176 |
| 17 | Q | Ex. 14 | 749 | 1022 | 13.2 | 13490.4 | 0.224 |
| 18 | Q | Traditional process 7 | 484 | 865 | 14.1 | 12197 | 0.174 |
| 19 | I | Ex.15 | 717 | 1061 | 13.6 | 14429.6 | 0.224 |
| 20 | J | Ex.16 | 724 | 1056 | 13.7 | 14467.2 | 0.222 |
| 21 | N | Ex.17 | 726 | 1086 | 13.9 | 15095.4 | 0.223 |
| 22 | F | Ex.18 | 737 | 1058 | 13.9 | 14706.2 | 0.236 |
| 23 | K | Ex.19 | 729 | 1068 | 13 | 13884 | 0.224 |
| 24 | R | Ex.20 | 727 | 1070 | 14 | 14980 | 0.214 |
| 25 | G | Ex.21 | 746 | 1068 | 13.2 | 14097.6 | 0.236 |
| 26 | P | Ex.22 | 745 | 1072 | 13 | 13936 | 0.216 |
| 27 | S | Ex.23 | 748 | 1051 | 13.8 | 14503.8 | 0.223 |
| 28 | M | Ex.24 | 749 | 1056 | 14 | 14784 | 0.223 |

Example II

The composition of the test steel of this Example is shown in Table 6. The specific parameters of the present example and the traditional processes are shown in Table 7 and Table 8. The main performances of the steel prepared from the test steel composition of the present disclosure according to the examples and the traditional processes are listed in Table 9 and Table 10.

It can be seen from Table 6-Table 10 that the process of the present disclosure can reduce the alloy content in the same grade of steel, refine grains, and obtain a matching of material structure and composition with strength and toughness. The dual-phase steel obtained by the process of the present disclosure has a yield strength of 714~919MPa, a tensile strength of 1188~1296MPa, an elongation of 10.4~12.8%, a product of strength and elongation of 12~16GPa%, which is higher than that of the dual-phase steel produced by the traditional process.

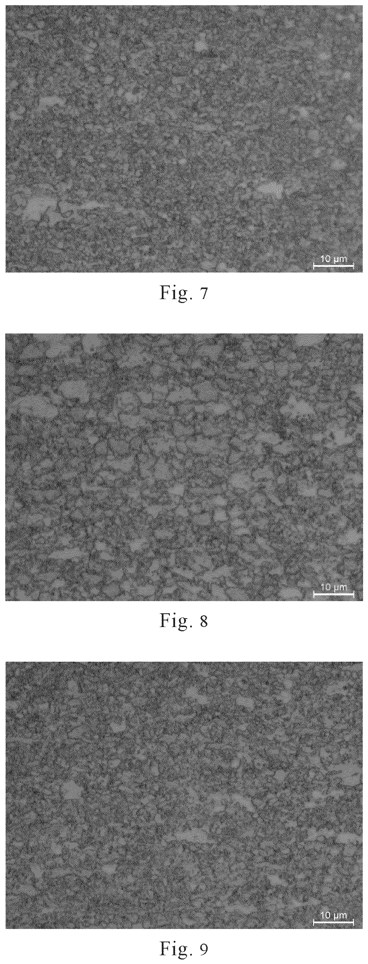

Figure 7 is a structure photo of A steel having a typical composition obtained by Example 1, and Figure 8 is a structure photo of A steel having a typical composition obtained by traditional process 1. It can be seen from the figures that there are very large differences in the structures treated by different heat treatment methods. The microstructure of the dual phase steel obtained after the rapid heat treatment process of this example is composed of ferrite, martensite and a small amount of carbide. The grain structure of ferrite and martensite and carbide are very fine and evenly distributed in the matrix, which is very beneficial to the improvement of the strength and plasticity of the material. The dual-phase steel obtained by the traditional process treatment has a typical dual-phase steel microstructure comprising coarse grain and a certain amount of banded structure with martensite and carbide distributed in a network along the ferrite grain boundaries, wherein the ferrite grain is relatively coarse and the distribution of dual-phase structure of martensite and carbide is uneven.

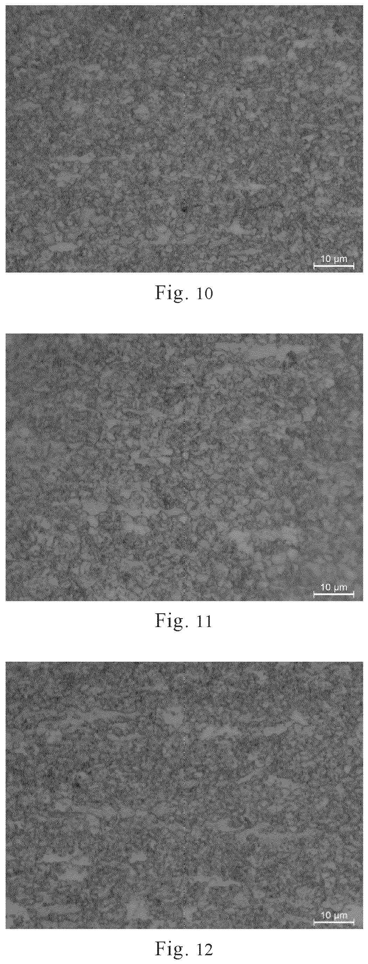

Figure 9 is a structure photo of F steel having a typical composition obtained by Example 6, and Figure 10 is a structure photo of M steel having a typical composition obtained by Example 12. Figure 11 is a structure photo of S steel having a typical composition obtained by Example 23, and Figure 12 is a structure photo of M steel having a typical composition obtained by Example 24. Examples 6, 12, 23, 24 all adopt processes with short heat treatment cycles. It can be seen from the figures that the removal of the over ageing treatment segment in the process of the present disclosure can also provide very uniform, fine, dispersed distribution of each phase structure. Therefore, the manufacturing process of the dual-phase steel of the present disclosure can refine grains, and make the structure of each phase of the material evenly distributed in the matrix, thereby improving the material structure and the material properties.

Table 6 (unit: mass percentage)

| Test steel | C | Si | Mn | Cr | Mo | Ti | Nb | V | P | S | Al |
|---|---|---|---|---|---|---|---|---|---|---|---|
| A | 0.051 | 0.151 | 2.500 | 0.231 | 0.219 | 0.0231 | / | / | 0.0150 | 0.0019 | 0.0321 |
| B | 0.069 | 0.212 | 1.911 | 0.301 | 0.350 | 0.0328 | / | / | 0.0099 | 0.0029 | 0.0274 |
| C | 0.093 | 0.134 | 1.721 | 0.415 | 0.325 | 0.0451 | / | / | 0.0118 | 0.0014 | 0.0398 |
| D | 0.091 | 0.422 | 1.613 | 0.600 | 0.358 | 0.0412 | / | / | 0.0115 | 0.0029 | 0.0332 |
| E | 0.100 | 0.490 | 1.812 | 0.553 | 0.323 | 0.0155 | 0.0232 | / | 0.0114 | 0.0019 | 0.0400 |
| F | 0.058 | 0.112 | 1.663 | 0.312 | 0.107 | 0.0125 | 0.0194 | 0.031 | 0.0116 | 0.0020 | 0.0391 |
| G | 0.062 | 0.122 | 1.723 | 0281 | 0.242 | 0.0273 | 0.0312 | / | 0.0061 | 0.0024 | 0.0217 |
| H | 0.079 | 0.424 | 2.441 | 0.511 | 0.198 | 0.0500 | / | / | 0.0099 | 0.0017 | 0.0253 |
| I | 0.056 | 0.261 | 2.051 | 0.405 | 0.114 | 0.0356 | / | 0.025 | 0.0141 | 0.0029 | 0.0278 |
| J | 0.093 | 0.282 | 2.232 | 0.454 | 0.235 | 0.0246 | 0.0232 | / | 0.0077 | 0.0023 | 0.0359 |
| K | 0.0893 | 0.314 | 2.428 | 0.567 | 0.139 | 0.0299 | / | / | 0.0147 | 0.0020 | 0.0208 |
| L | 0.0584 | 0.255 | 2.500 | 0.496 | 0.227 | 0.0278 | / | / | 0.0128 | 0.0017 | 0.0500 |
| M | 0.0588 | 0.146 | 2.414 | 0.376 | 0.106 | 0.0235 | 0.0243 | 0.023 | 0.0108 | 0.0027 | 0.0315 |
| N | 0.099 | 0.245 | 2.345 | 0.473 | 0.251 | 0.0245 | 0.04 | / | 0.0083 | 0.0015 | 0.046 |
| O | 0.071 | 0.185 | 2.471 | 0.538 | 0.400 | 0.0182 | / | / | 0.0136 | 0.0011 | 0.0364 |
| P | 0.072 | 0.163 | 1.829 | 0.482 | 0.123 | 0.0241 | / | 0.025 | 0.0120 | 0.0020 | 0.0346 |
| Q | 0.070 | 0.239 | 1.972 | 0.584 | 0.181 | 0.0344 | / | / | 0.0096 | 0.0023 | 0.0255 |
| R | 0.082 | 0.431 | 2.483 | 0.388 | 0.114 | 0.0400 | / | 0.033 | 0.0142 | 0.0026 | 0.0454 |
| S | 0.0721 | 0.326 | 2.465 | 0.264 | 0.127 | 0.0347 | / | 0.021 | 0.0118 | 0.0028 | 0.0303 |

Table 7

Rapid heat treatment (one stage)

| | Hot rolling coiling temperature °C | Cold rolling reduction rate % | Rapid heating rate (one stage) °C/s | Soaking | | Slow cooling | | Rapid cooling | | Over ageing treatment | | Final cooling rate °C/s | Total time of rapid heat treatment s |
|---|---|---|---|---|---|---|---|---|---|---|---|---|---|
| | | | | Soaking temperature °C | Soaking time s | Cooling rate °C/s | Temperature after cooling °C | Cooling rate °C/s | Temperature after cooling °C | Over ageing temperature °C | Over ageing time s | | |
| Ex.1 | 680 | 45 | 50 | 750 | 60 | 15 | 670 | 50 | 240 | 240 | 180 | 30 | 275.87 |
| Ex.2 | 650 | 85 | 80 | 770 | 50 | 13 | 690 | 60 | 230 | 230 | 200 | 40 | 278.45 |
| Ex.3 | 610 | 75 | 150 | 790 | 40 | 11 | 700 | 80 | 235 | 235 | 150 | 50 | 213.43 |
| Ex.4 | 580 | 65 | 300 | 800 | 30 | 9 | 730 | 100 | 260 | 260 | 120 | 35 | 171.93 |
| Ex.5 | 550 | 70 | 500 | 815 | 10 | 6 | 770 | 120 | 280 | 280 | 110 | 38 | 140.02 |
| Ex.6 | 590 | 40 | 250 | 845 | 20 | 5 | 750 | 150 | 250 | 250 | 100 | 45 | 150.74 |
| Ex.7 | 640 | 50 | 350 | 795 | 55 | 12 | 695 | 140 | 238 | 238 | 80 | 43 | 153.88 |
| Ex. 8 | 600 | 68 | 400 | 790 | 45 | 8 | 740 | 130 | 252 | 252 | 60 | 48 | 121.76 |
| Ex.9 | 570 | 60 | 230 | 815 | 35 | 10 | 710 | 110 | 270 | 270 | 40 | 33 | 100.53 |
| Ex. 10 | 630 | 80 | 100 | 830 | 25 | 14 | 680 | 200 | 245 | 245 | 20 | 30 | 73.49 |
| Ex.11 | 660 | 77 | 180 | 820 | 30 | 7 | 720 | 170 | 20 | 20 | / | 30 | 52.85 |
| Ex. 12 | 550 | 55 | 200 | 835 | 20 | 6 | 760 | 180 | 20 | 20 | / | 30 | 40.69 |
| Traditional process 1 | 680 | 85 | 11 | 750 | 160 | 10 | 675 | 100 | 230 | 230 | 290 | 30 | 535.31 |
| Traditional process 2 | 650 | 75 | 10 | 770 | 130 | 9 | 675 | 80 | 250 | 250 | 260 | 30 | 488.53 |
| Traditional process 3 | 610 | 65 | 11 | 790 | 110 | 10 | 675 | 75 | 240 | 240 | 230 | 30 | 434.63 |
| Traditional process 4 | 580 | 55 | 13 | 820 | 90 | 8 | 675 | 60 | 260 | 260 | 160 | 30 | 344.58 |
| Traditional process 5 | 550 | 40 | 15 | 845 | 70 | 12 | 675 | 50 | 280 | 280 | 180 | 30 | 559.73 |

Table 8

| | Hot rolling coiling temperature °C | Cold rolling reduction rate % | Rapid heat treatment (two-stage) | | | | | | | | | | | Final cooling rate °C/s | Total time of rapid heat treatment s |
| | | | Rapid heating (two-stage) | | | Soaking | | Slow cooling | | Rapid cooling | | Over ageing treatment | | | |
| | | | Heating rate in the first stage °C/s | Temperature after heating in the first stage °C | Heating rate in the second stage °C/s | Soaking temperature °C | Soaking time s | Cooling rate °C/s | Temperature after cooling °C | Cooling rate °C/s | Temperature after cooling °C | Over ageing temperature °C | Over ageing time s | | |
|---|---|---|---|---|---|---|---|---|---|---|---|---|---|---|---|
| Ex. 13 | 680 | 45 | 15 | 550 | 500 | 750 | 60 | 15 | 670 | 50 | 240 | 240 | 180 | 30 | 297.00 |
| Ex.14 | 650 | 85 | 30 | 570 | 300 | 770 | 50 | 13 | 690 | 60 | 230 | 230 | 200 | 40 | 288.07 |
| Ex. 15 | 610 | 75 | 80 | 600 | 150 | 790 | 40 | 11 | 700 | 80 | 235 | 235 | 150 | 50 | 216.81 |
| Ex.16 | 580 | 65 | 150 | 630 | 80 | 800 | 30 | 9 | 730 | 100 | 260 | 260 | 120 | 35 | 175.53 |
| Ex.17 | 550 | 70 | 300 | 640 | 50 | 815 | 10 | 6 | 770 | 120 | 280 | 280 | 110 | 38 | 143.99 |
| Ex.18 | 590 | 40 | 500 | 650 | 30 | 845 | 20 | 5 | 750 | 150 | 250 | 250 | 100 | 45 | 155.20 |
| Ex.19 | 640 | 50 | 450 | 647 | 400 | 795 | 55 | 12 | 695 | 140 | 238 | 238 | 80 | 43 | 153.43 |
| Ex.20 | 600 | 68 | 350 | 635 | 450 | 790 | 45 | 8 | 740 | 130 | 252 | 252 | 60 | 48 | 121.94 |
| Ex.21 | 570 | 60 | 400 | 640 | 350 | 815 | 35 | 10 | 710 | 110 | 270 | 270 | 40 | 33 | 99.13 |
| Ex.22 | 630 | 80 | 250 | 620 | 250 | 830 | 25 | 14 | 680 | 200 | 245 | 245 | 20 | 30 | 68.63 |
| Ex.23 | 660 | 77 | 100 | 580 | 150 | 820 | 30 | 7 | 720 | 170 | 20 | / | / | 30 | 55.60 |
| Ex.24 | 550 | 55 | 200 | 610 | 200 | 835 | 20 | 6 | 760 | 180 | 20 | / | / | 30 | 40.69 |
| Traditional process 6 | 680 | 85 | 11 | 150 | 8 | 750 | 160 | 10 | 675 | 100 | 230 | 230 | 290 | 30 | 555.77 |
| Traditional process 7 | 650 | 75 | 10 | 150 | 7 | 770 | 130 | 9 | 675 | 80 | 250 | 250 | 260 | 30 | 515.11 |
| Traditional process 8 | 610 | 65 | 11 | 180 | 6 | 790 | 110 | 10 | 675 | 75 | 240 | 240 | 230 | 30 | 480.85 |
| Traditional process 9 | 580 | 55 | 13 | 210 | 5 | 820 | 90 | 8 | 675 | 60 | 260 | 260 | 160 | 30 | 419.66 |

| | Hot rolling coiling temperature °C | Cold rolling reduction rate % | Rapid heat treatment (two-stage) | | | | | | | | | | | | | Total time of rapid heat treatment s |
|---|---|---|---|---|---|---|---|---|---|---|---|---|---|---|---|---|
| | | | Rapid heating (two-stage) | | | Soaking | | Slow cooling | | Rapid cooling | | Over ageing treatment | | Final cooling rate °C/s | | |
| | | | Heating rate in the first stage °C/s | Temperature after heating in the first stage °C | Heating rate in the second stage °C/s | Soaking temperature °C | Soaking time s | Cooling rate °C/s | Temperature after cooling °C | Cooling rate °C/s | Temperature after cooling °C | Over ageing temperature °C | Over ageing time s | | | |
| Traditional process 10 | 550 | 40 | 15 | 250 | 5 | 845 | 70 | 12 | 675 | 50 | 280 | 280 | 180 | 30 | | 415.07 |

Table 9

| No. | Test steel | Main process parameters (Rapid heating-one stage) | Yield strength MPa | Tensile strength MPa | Elongation % | Product of strength and elongation MPa% |
|---|---|---|---|---|---|---|
| 1 | A | Traditional process 1 | 658 | 1088 | 13.7 | 14905.6 |
| 2 | A | Ex.1 | 859 | 1238 | 11.9 | 14732.2 |
| 3 | B | Traditional process 2 | 626 | 1087 | 12.4 | 13478.8 |
| 4 | B | Ex.2 | 842 | 1243 | 11.3 | 14045.9 |
| 5 | C | Traditional process 3 | 665 | 1073 | 14.7 | 15773.1 |
| 6 | C | Ex. 3 | 837 | 1249 | 12.8 | 15987.2 |
| 7 | D | Traditional process 4 | 627 | 1085 | 13.1 | 14213.5 |
| 8 | D | Ex.4 | 847 | 1247 | 12.2 | 15213.4 |
| 9 | E | Traditional process 5 | 600 | 1069 | 12.8 | 13683.2 |
| 10 | E | Ex.5 | 794 | 1188 | 12.3 | 14612.4 |
| 11 | O | Ex.6 | 871 | 1234 | 11.8 | 14561.2 |
| 12 | O | Traditional process 4 | 649 | 1092 | 14.2 | 15506.4 |
| 13 | L | Ex.7 | 838 | 1253 | 11.4 | 14284.2 |
| 14 | L | Traditional process 3 | 668 | 1088 | 13.8 | 15014.4 |
| 15 | H | Ex.4 | 860 | 1256 | 11.4 | 14318.4 |
| 16 | H | Traditional process 4 | 679 | 1101 | 13.1 | 14423.1 |
| 17 | Q | Ex.2 | 833 | 1238 | 11.3 | 13989.4 |
| 18 | Q | Traditional process 2 | 664 | 1074 | 12.7 | 13639.8 |
| 19 | I | Ex.3 | 820 | 1230 | 12.2 | 15006 |
| 20 | J | Ex.4 | 851 | 1252 | 11.5 | 14398 |
| 21 | N | Ex.5 | 831 | 1226 | 10.9 | 13363.4 |
| 22 | F | Ex.6 | 865 | 1266 | 11.5 | 14559 |
| 23 | K | Ex.7 | 877 | 1251 | 11.7 | 14636.7 |
| 24 | R | Ex. 8 | 861 | 1263 | 12.5 | 15787.5 |
| 25 | G | Ex.9 | 852 | 1255 | 11.3 | 14181.5 |
| 26 | P | Ex.10 | 861 | 1259 | 11.7 | 14730.3 |
| 27 | S | Ex.11 | 872 | 1235 | 11.6 | 14326 |
| 28 | M | Ex.12 | 882 | 1253 | 11.5 | 14409.5 |

Table 10

| No. | Test steel | Main process parameters (Rapid heating-two stage) | Yield strength MPa | Tensile strength MPa | Elongation % | Product of strength and elongation MPa% |
|---|---|---|---|---|---|---|
| 1 | A | Traditional process 6 | 687 | 1054 | 10 | 10540 |
| 2 | A | Ex. 13 | 852 | 1220 | 10.6 | 12932 |
| 3 | B | Traditional process 7 | 656 | 1001 | 9.1 | 9109.1 |

(continued)

| No. | Test steel | Main process parameters (Rapid heating-two stage) | Yield strength MPa | Tensile strength MPa | Elongation % | Product of strength and elongation MPa% |
|---|---|---|---|---|---|---|
| 4 | B | Ex.14 | 849 | 1218 | 11.7 | 14250.6 |
| 5 | C | Traditional process 8 | 667 | 1048 | 8.47 | 8876.56 |
| 6 | C | Ex.15 | 899 | 1230 | 10.8 | 13284 |
| 7 | D | Traditional process 9 | 679 | 1068 | 8.7 | 9291.6 |
| 8 | D | Ex.16 | 867 | 1241 | 12.4 | 15388.4 |
| 9 | E | Traditional process 10 | 820 | 1278 | 12.3 | 15719.4 |
| 10 | E | Ex.17 | 714 | 1191 | 11.2 | 13339.2 |
| 11 | O | Ex.18 | 842 | 1289 | 11.3 | 14565.7 |
| 12 | O | Traditional process 9 | 659 | 1018 | 13.1 | 13335.8 |
| 13 | L | Ex.19 | 837 | 1249 | 10.8 | 13489.2 |
| 14 | L | Traditional process 8 | 709 | 1050 | 13.3 | 13965 |
| 15 | H | Ex.16 | 871 | 1234 | 11.8 | 14561.2 |
| 16 | H | Traditional process 9 | 745 | 1067 | 13.7 | 14617.9 |
| 17 | Q | Ex.14 | 882 | 1260 | 11.6 | 14616 |
| 18 | Q | Traditional process 7 | 733 | 1063 | 13.2 | 14031.6 |
| 19 | I | Ex.15 | 860 | 1256 | 10.4 | 13062.4 |
| 20 | J | Ex.16 | 838 | 1253 | 11.4 | 14284.2 |
| 21 | N | Ex.17 | 888 | 1292 | 11.3 | 14599.6 |
| 22 | F | Ex.18 | 881 | 1280 | 11.1 | 14208 |
| 23 | K | Ex.19 | 876 | 1283 | 11 | 14113 |
| 24 | R | Ex.20 | 919 | 1286 | 12.5 | 16075 |
| 25 | G | Ex.21 | 892 | 1296 | 10.8 | 13996.8 |
| 26 | P | Ex.22 | 900 | 1285 | 11.4 | 14649 |
| 27 | S | Ex.23 | 912 | 1255 | 12.3 | 15436.5 |
| 28 | M | Ex.24 | 909 | 1266 | 11.3 | 14305.8 |

Example III

The composition of the test steel of this Example is shown in Table 11. The specific parameters of the present example and the traditional processes are shown in Table 12 and Table 13. The main performances of the steel prepared from the test steel composition of the present disclosure according to the examples and the traditional processes are listed in Table 14 and Table 15.

It can be seen from Table 11-Table 15 that the process of the present disclosure can reduce the alloy content in the same grade of steel, refine grains, and obtain a matching of material structure and composition with strength and toughness. The dual-phase steel obtained by the process of the present disclosure has a yield strength of 902~1114MPa, a tensile strength of 1264~1443MPa, an elongation of 7-9.8%, a product of strength and elongation of 9.5~12.1GPa%, which is higher than that of the dual-phase steel produced by the traditional process.

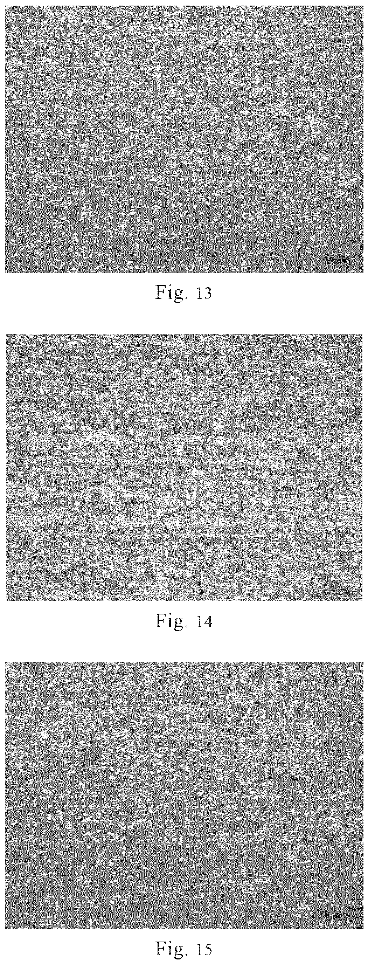

Figure 13 is a structure photo of A steel having a typical composition obtained by Example 1, and Figure 14 is a structure photo of A steel having a typical composition obtained by traditional process 1. It can be seen from the figures that there are very large differences in the structures treated by different heat treatment methods. The microstructure of the dual phase steel obtained after the rapid heat treatment process of this example is composed of a fine, uniform martensitic structure and a small amount of carbide dispersed in ferrite matrix. The grain structure of ferrite and martensite and carbide are very fine and evenly distributed in the matrix, which is very beneficial to the improvement of the strength and plasticity of the material. The dual-phase steel obtained by the traditional process treatment has a typical dual-phase steel microstructure, i.e., there is a small amount of black martensite structure on the grain boundary of white ferrite. Due to element segregation and other reasons, the material structure treated by the traditional process shows a certain directionality with its ferrite structure distributed in long strips along the rolling direction. The dual-phase steel obtained by the traditional process treatment has a microstructure comprising coarse grain and a certain amount of banded structure with martensite and carbide distributed in a network along the ferrite grain boundaries, wherein the ferrite grain is relatively coarse and the distribution of dual-phase structure of martensite and carbide is uneven.

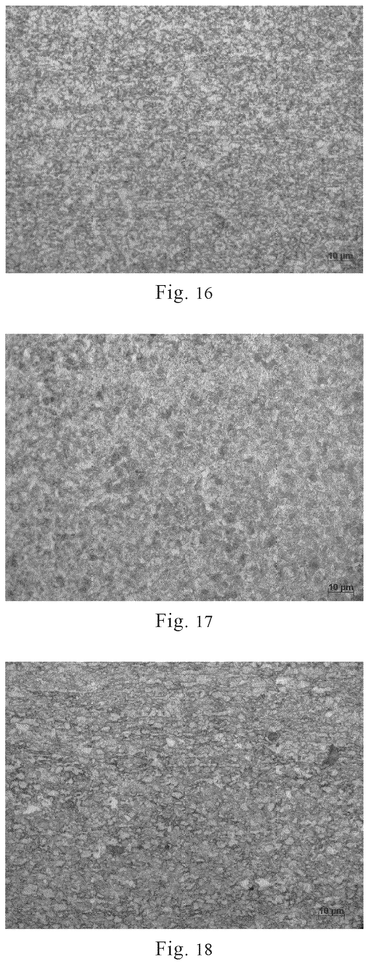

Figure 15 is a structure photo of F steel having a typical composition obtained by Example 6, and Figure 16 is a structure photo of M steel having a typical composition obtained by Example 12. Figure 17 is a structure photo of S steel having a typical composition obtained by Example 23, and Figure 18 is a structure photo of M steel having a typical composition obtained by Example 24. Examples 6, 12, 23, 24 all adopt processes with short heat treatment cycles. It can be seen from the figures that the removal of the ageing treatment segment in the process of the present disclosure can also provide very uniform, fine, dispersed distribution of each phase structure. Therefore, the manufacturing process of the dual-phase steel of the present disclosure can refine grains, and make the structure of each phase of the material evenly distributed in the matrix, thereby improving the material structure and the material properties.

Table 11 (unit: mass percentage)

| Test steel | C | Si | Mn | Cr | Ti | Nb | B | Mo | V | P | S | Al |
|---|---|---|---|---|---|---|---|---|---|---|---|---|
| A | 0.101 | 0.652 | 2.65 | 0.331 | 0.0219 | 0.0431 | 0.0025 | / | / | 0.0195 | 0.0020 | 0.0317 |
| B | 0.121 | 0.531 | 2.80 | 0.300 | 0.0303 | 0.0398 | 0.0020 | / | / | 0.0099 | 0.0023 | 0.0353 |
| C | 0.133 | 0.700 | 2.72 | 0.410 | 0.0325 | 0.0455 | 0.0036 | / | / | 0.0096 | 0.0027 | 0.0295 |
| D | 0.170 | 0.421 | 2.41 | 0.521 | 0.0658 | 0.0332 | 0.0027 | / | / | 0.0075 | 0.0011 | 0.0296 |
| E | 0.155 | 0.243 | 1.81 | 0.353 | 0.0700 | 0.0305 | 0.0043 | 0.13 | / | 0.0066 | 0.0004 | 0.0319 |
| F | 0.168 | 0.353 | 2.13 | 0.412 | 0.0401 | 0.0325 | 0.0029 | 0.14 | 0.0411 | 0.0116 | 0.0004 | 0.0323 |
| G | 0.112 | 0.258 | 1.967 | 0.481 | 0.0382 | 0.0473 | 0.0038 | 0.12 | / | 0.0061 | 0.0020 | 0.0294 |
| H | 0.129 | 0.421 | 2.44 | 0.621 | 0.0298 | 0.0361 | 0.0024 | / | / | 0.0099 | 0.0011 | 0.0307 |
| I | 0.141 | 0.265 | 2.61 | 0.505 | 0.0314 | 0.0356 | 0.0044 | / | 0.0315 | 0.0141 | 0.0007 | 0.0293 |
| J | 0.153 | 0.443 | 1.93 | 0.554 | 0.0500 | 0.0200 | 0.0035 | 0.11 | / | 0.0077 | 0.0012 | 0.0337 |
| K | 0.126 | 0.278 | 2.12 | 0.567 | 0.0309 | 0.0464 | 0.0050 | / | / | 0.0087 | 0.0017 | 0.0347 |
| L | 0.125 | 0.335 | 2.58 | 0.596 | 0.0327 | 0.0353 | 0.0035 | / | / | 0.0100 | 0.0012 | 0.0323 |
| M | 0.132 | 0.451 | 2.21 | 0.676 | 0.0356 | 0.0335 | 0.0028 | 0.13 | 0.0225 | 0.0100 | 0.0011 | 0.0337 |
| N | 0.147 | 0.501 | 1.812 | 0.573 | 0.0451 | 0.0345 | 0.0044 | 0.14 | / | 0.0074 | 0.0015 | 0.0299 |
| O | 0.115 | 0.601 | 2.24 | 0.638 | 0.0408 | 0.0682 | 0.0042 | / | / | 0.0062 | 0.0012 | 0.0285 |
| P | 0.124 | 0.265 | 2.32 | 0.722 | 0.0323 | 0.0341 | 0.0037 | / | 0.055 | 0.0067 | 0.0013 | 0.0396 |
| Q | 0.127 | 0.215 | 2.72 | 0.884 | 0.0531 | 0.0700 | 0.0025 | / | / | 0.0086 | 0.0007 | 0.0276 |
| R | 0.135 | 0.268 | 2.43 | 0.588 | 0.0314 | 0.0400 | 0.0048 | / | 0.0332 | 0.0061 | 0.0013 | 0.0303 |
| S | 0.132 | 0.315 | 2.65 | 0.564 | 0.0327 | 0.0347 | 0.0034 | / | 0.0343 | 0.0056 | 0.0014 | 0.0290 |

Table 12

| | Hot rolling coiling temperatu re °C | Cold rolling reduction rate % | Rapid heat treatment (one stage) | | | | | | | | | | | Total time of rapid heat treatment s |
| | | | Rapid heating rate (one stage) °C/s | Soaking | | Slow cooling | | Rapid cooling | | Over ageing treatment | | Final cooling rate °C/s | |
| | | | | Soakin g temper ature °C | Soaking time s | Cooling rate °C/s | Temperatur e after cooling °C | Cooling rate °C/s | Temperatu re after cooling °C | Over ageing temperatur e °C | Over ageing time s | | |
|---|---|---|---|---|---|---|---|---|---|---|---|---|---|
| Ex.1 | 680 | 45 | 50 | 750 | 60 | 15 | 670 | 50 | 240 | 240 | 180 | 30 | 275.87 |
| Ex.2 | 650 | 85 | 80 | 770 | 50 | 13 | 690 | 60 | 230 | 230 | 200 | 40 | 278.45 |
| Ex.3 | 610 | 75 | 150 | 790 | 40 | 11 | 700 | 80 | 235 | 235 | 150 | 50 | 213.43 |
| Ex.4 | 580 | 65 | 300 | 800 | 30 | 9 | 730 | 100 | 260 | 260 | 120 | 35 | 171.93 |
| Ex.5 | 550 | 70 | 500 | 815 | 10 | 6 | 770 | 120 | 280 | 280 | 110 | 38 | 140.02 |
| Ex.6 | 590 | 40 | 250 | 845 | 20 | 5 | 750 | 150 | 250 | 250 | 100 | 45 | 150.74 |
| Ex.7 | 640 | 50 | 350 | 795 | 55 | 12 | 695 | 140 | 238 | 238 | 80 | 43 | 153.88 |
| Ex.8 | 600 | 68 | 400 | 790 | 45 | 8 | 740 | 130 | 252 | 252 | 60 | 48 | 121.76 |
| Ex.9 | 570 | 60 | 230 | 815 | 35 | 10 | 710 | 110 | 270 | 270 | 40 | 33 | 100.53 |
| Ex.10 | 630 | 80 | 100 | 830 | 25 | 14 | 680 | 200 | 245 | 245 | 20 | 30 | 73.49 |
| Ex.11 | 660 | 77 | 180 | 820 | 30 | 7 | 720 | 170 | 20 | / | / | / | 52.85 |
| Ex. 12 | 550 | 55 | 200 | 835 | 20 | 6 | 760 | 180 | 20 | / | / | / | 40.69 |
| Traditional process 1 | 680 | 85 | 11 | 750 | 160 | 10 | 675 | 100 | 230 | 230 | 290 | 30 | 535.31 |
| Traditional process 2 | 650 | 75 | 10 | 770 | 130 | 9 | 675 | 80 | 250 | 250 | 260 | 30 | 488.53 |
| Traditional process 3 | 610 | 65 | 11 | 790 | 110 | 10 | 675 | 75 | 240 | 240 | 230 | 30 | 434.63 |
| Traditional process 4 | 580 | 55 | 13 | 820 | 90 | 8 | 675 | 60 | 260 | 260 | 160 | 30 | 344.58 |
| Traditional process 5 | 550 | 40 | 15 | 845 | 70 | 12 | 675 | 50 | 280 | 280 | 180 | 30 | 559.73 |

Table 13

| | Hot rolling coiling temperature °C | Cold rolling reduction rate % | Rapid heating (two-stage) | | | Soaking | | Slow cooling | | Rapid cooling | | Over ageing treatment | | Final cooling rate °C/s | Total time of rapid heat treatment s |
|---|---|---|---|---|---|---|---|---|---|---|---|---|---|---|---|
| | | | Heating rate in the first stage °C/s | Temperature after heating in the first stage °C | Heating rate in the second stage °C/s | Soaking temperature °C | Soaking time s | Cooling rate °C/s | Temperature after cooling °C | Cooling rate °C/s | Temperature after cooling °C | Over ageing temperature °C | Over ageing time s | | |
| Ex.13 | 680 | 45 | 15 | 550 | 500 | 750 | 60 | 15 | 670 | 50 | 240 | 240 | 180 | 30 | 297.00 |
| Ex.14 | 650 | 85 | 30 | 570 | 300 | 770 | 50 | 13 | 690 | 60 | 230 | 230 | 200 | 40 | 288.07 |
| Ex.15 | 610 | 75 | 80 | 600 | 150 | 790 | 40 | 11 | 700 | 80 | 235 | 235 | 150 | 50 | 216.81 |
| Ex.16 | 580 | 65 | 150 | 630 | 80 | 800 | 30 | 9 | 730 | 100 | 260 | 260 | 120 | 35 | 175.53 |
| Ex.17 | 550 | 70 | 300 | 640 | 50 | 815 | 10 | 6 | 770 | 120 | 280 | 280 | 110 | 38 | 143.99 |
| Ex.18 | 590 | 40 | 500 | 650 | 30 | 845 | 20 | 5 | 750 | 150 | 250 | 250 | 100 | 45 | 155.20 |
| Ex.19 | 640 | 50 | 450 | 647 | 400 | 795 | 55 | 12 | 695 | 140 | 238 | 238 | 80 | 43 | 153.43 |
| Ex.20 | 600 | 68 | 350 | 635 | 450 | 790 | 45 | 8 | 740 | 130 | 252 | 252 | 60 | 48 | 121.94 |
| Ex.21 | 570 | 60 | 400 | 640 | 350 | 815 | 35 | 10 | 710 | 110 | 270 | 270 | 40 | 33 | 99.13 |
| Ex.22 | 630 | 80 | 250 | 620 | 250 | 830 | 25 | 14 | 680 | 200 | 245 | 245 | 20 | 30 | 68.63 |
| Ex.23 | 660 | 77 | 100 | 580 | 150 | 820 | 30 | 7 | 720 | 170 | 20 | / | / | / | 55.60 |
| Ex.24 | 550 | 55 | 200 | 610 | 200 | 835 | 20 | 6 | 760 | 180 | 20 | / | / | / | 40.69 |
| Traditional process 6 | 680 | 85 | 11 | 150 | 8 | 750 | 160 | 10 | 675 | 100 | 230 | 230 | 290 | 30 | 555.77 |
| Traditional process 7 | 650 | 75 | 10 | 150 | 7 | 770 | 130 | 9 | 675 | 80 | 250 | 250 | 260 | 30 | 515.11 |
| Traditional process 8 | 610 | 65 | 11 | 180 | 6 | 790 | 110 | 10 | 675 | 75 | 240 | 240 | 230 | 30 | 480.85 |
| Traditional process 9 | 580 | 55 | 13 | 210 | 5 | 820 | 90 | 8 | 675 | 60 | 260 | 260 | 160 | 30 | 419.66 |

(continued)

| | Hot rolling coiling temperature °C | Cold rolling reduction rate % | Rapid heat treatment (two-stage) | | | | | | | | | | | | Total time of rapid heat treatment s |
| --- | --- | --- | --- | --- | --- | --- | --- | --- | --- | --- | --- | --- | --- | --- | --- |
| | | | Rapid heating (two-stage) | | | Soaking | | Slow cooling | | Rapid cooling | | Over ageing treatment | | Final cooling rate °C/s | |
| | | | Heating rate in the first stage °C/s | Temperature after heating in the first stage °C | Heating rate in the second stage °C/s | Soaking temperature °C | Soaking time s | Cooling rate °C/s | Temperature after cooling °C | Cooling rate °C/s | Temperature after cooling °C | Over ageing temperature °C | Over ageing time s | | |
| Traditional process 10 | 550 | 40 | 15 | 250 | 5 | 845 | 70 | 12 | 675 | 50 | 280 | 280 | 180 | 30 | 415.07 |

Table 14

| No. | Test steel | Main process parameters (Rapid heating-one stage) | Yield strength MPa | Tensile strength MPa | Elongation % | Product of strength and elongation MPa% |
|---|---|---|---|---|---|---|
| 1 | A | Traditional process 1 | 961 | 1128 | 7.9 | 8911.2 |
| 2 | A | Ex.1 | 1054 | 1326 | 8.3 | 11005.8 |
| 3 | B | Traditional process 2 | 935 | 1222 | 8.4 | 10264.8 |
| 4 | B | Ex.2 | 929 | 1301 | 8.6 | 11188.6 |
| 5 | C | Traditional process 3 | 897 | 1197 | 8.8 | 10533.6 |
| 6 | C | Ex.3 | 965 | 1283 | 8.8 | 11290.4 |
| 7 | D | Traditional process 4 | 900 | 1214 | 9.8 | 11897.2 |
| 8 | D | Ex.4 | 971 | 1306 | 9.3 | 12145.8 |
| 9 | E | Traditional process 5 | 976 | 1291 | 9.1 | 11748.1 |
| 10 | E | Ex.5 | 1019 | 1323 | 8.4 | 11113.2 |
| 11 | O | Ex.6 | 938 | 1325 | 8.3 | 10997.5 |
| 12 | O | Traditional process 4 | 849 | 1210 | 9.4 | 11374 |
| 13 | L | Ex.7 | 965 | 1288 | 8.3 | 10690.4 |
| 14 | L | Traditional process 3 | 909 | 1213 | 8.6 | 10431.8 |
| 15 | H | Ex.4 | 1036 | 1333 | 8.1 | 10797.3 |
| 16 | H | Traditional process 4 | 938 | 1231 | 8 | 9848 |
| 17 | Q | Ex.2 | 1060 | 1332 | 7.1 | 9457.2 |
| 18 | Q | Traditional process 2 | 954 | 1238 | 7 | 8666 |
| 19 | I | Ex.3 | 918 | 1301 | 9 | 11709 |
| 20 | J | Ex.4 | 1049 | 1331 | 8.2 | 10914.2 |
| 21 | N | Ex.5 | 910 | 1290 | 8.7 | 11223 |
| 22 | F | Ex.6 | 939 | 1288 | 8.7 | 11205.6 |
| 23 | K | Ex.7 | 1049 | 1321 | 7.8 | 10303.8 |
| 24 | R | Ex. 8 | 950 | 1273 | 8.8 | 11202.4 |
| 25 | G | Ex.9 | 1005 | 1295 | 8.4 | 10878 |
| 26 | P | Ex.10 | 972 | 1266 | 9 | 11394 |
| 27 | S | Ex.11 | 902 | 1264 | 8.7 | 10996.8 |
| 28 | M | Ex.12 | 978 | 1314 | 8.8 | 11563.2 |

Table 15

| No. | Test steel | Main process parameters (Rapid heating-two stage) | Yield strength MPa | Tensile strength MPa | Elongation % | Product of strength and elongation MPa% |
|---|---|---|---|---|---|---|
| 1 | A | Traditional process 6 | 951 | 1282 | 8.8 | 11281.6 |
| 2 | A | Ex.13 | 1031 | 1388 | 8.5 | 11798 |
| 3 | B | Traditional process 7 | 928 | 1305 | 8.6 | 11223 |

(continued)

| No. | Test steel | Main process parameters (Rapid heating-two stage) | Yield strength MPa | Tensile strength MPa | Elongation % | Product of strength and elongation MPa% |
|---|---|---|---|---|---|---|
| 4 | B | Ex.14 | 1112 | 1441 | 7.3 | 10519.3 |
| 5 | C | Traditional process 8 | 981 | 1321 | 7.6 | 10039.6 |
| 6 | C | Ex.15 | 1104 | 1415 | 7.87 | 11131.33 |
| 7 | D | Traditional process 9 | 962 | 1290 | 8.5 | 10965 |
| 8 | D | Ex.16 | 1056 | 1381 | 8.13 | 11229.42 |
| 9 | E | Traditional process 10 | 1045 | 1368 | 7.9 | 10807.2 |
| 10 | E | Ex.17 | 1045 | 1328 | 7.6 | 10092.8 |
| 11 | O | Ex.18 | 1052 | 1435 | 7.77 | 11147.76 |
| 12 | O | Traditional process 9 | 1006 | 1317 | 7.8 | 10272.6 |
| 13 | L | Ex.19 | 1050 | 1341 | 7.2 | 9655.2 |
| 14 | L | Traditional process 8 | 1013 | 1319 | 7.7 | 10156.3 |
| 15 | H | Ex.16 | 1068 | 1407 | 7.95 | 11185.65 |
| 16 | H | Traditional process 9 | 1082 | 1331 | 7.3 | 9716.3 |
| 17 | Q | Ex.14 | 1109 | 1422 | 7.3 | 10383.03 |
| 18 | Q | Traditional process 7 | 1014 | 1327 | 8.4 | 11146.8 |
| 19 | I | Ex.15 | 1098 | 1391 | 7.4 | 10293.4 |
| 20 | J | Ex.16 | 1018 | 1401 | 7 | 9807 |
| 21 | N | Ex.17 | 1041 | 1378 | 7.5 | 10335 |
| 22 | F | Ex.18 | 1090 | 1382 | 8.1 | 11194.2 |
| 23 | K | Ex.19 | 1034 | 1390 | 7.1 | 9869 |
| 24 | R | Ex.20 | 963 | 1383 | 7.3 | 10095.9 |
| 25 | G | Ex.21 | 1069 | 1358 | 7.5 | 10185 |
| 26 | P | Ex.22 | 1075 | 1351 | 7.1 | 9592.1 |
| 27 | S | Ex.23 | 1114 | 1443 | 7.97 | 11493.24 |
| 28 | M | Ex.24 | 1106 | 1419 | 7.97 | 11306.8 |

Example IV

The composition of the test steel of this Example is shown in Table 16. The specific parameters of the present example and the traditional processes are shown in Table 17 (heating in one stage) and Table 18 (heating in two stages). The main performances of the hot-dip galvanized dual phase steel GI and GA prepared from the test steel composition of the present disclosure according to the examples and the traditional processes in Table 17 and Table 18 are listed in Table 19 and Table 20.

It can be seen from Table 16-Table 20 that the process of the present disclosure can reduce the alloy content in the same grade of steel, refine grains, and obtain a matching of material structure and composition with strength and toughness. The dual-phase steel obtained by the process of the present disclosure has a yield strength of 543~709MPa, a tensile strength of 989~1108MPa, an elongation of 11.9~15.2%, a product of strength and elongation of 12.2~15.2GPa%.

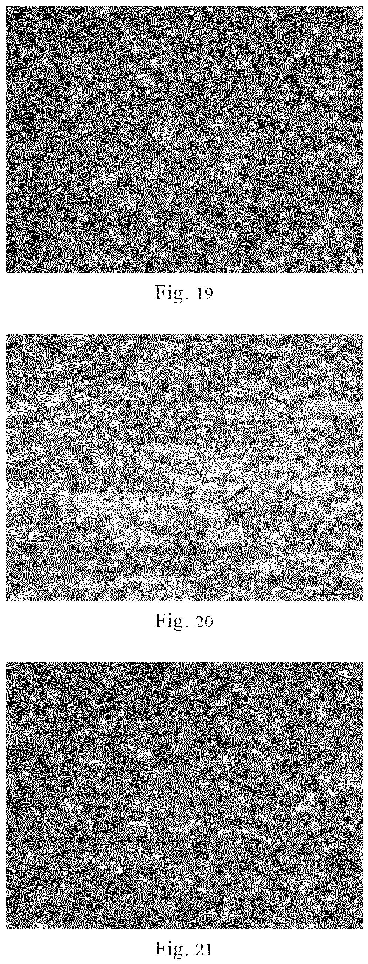

Figure 19 and Figure 20 are structure photos of A steel having a typical composition obtained by Example 1 and Comparative Traditional process 1. It can be seen from the figures that there are very big differences in the structure after hot-dip galvanizing. The microstructure of the A steel obtained after the rapid heat treatment process of the present disclosure is composed of a fine, uniform martensitic structure and carbide dispersed in fine ferrite matrix. The grain structure of ferrite and martensite and carbide are very fine and evenly distributed in the matrix, which is very beneficial to the improvement of the strength and plasticity of the material. The A steel obtained by the traditional process treatment has a typical microstructure of dual-phase steel (Fig. 20), which comprises a small amount of black martensitic structure on the grain boundary of large white ferritic structure. Due to element segregation and other reasons, the material structure treated by the traditional process shows a certain directionality with its ferrite structure distributed in long strips along the rolling direction. The steel obtained by the traditional process treatment has a microstructure comprising coarse grain and a certain amount of banded structure with martensite and carbide distributed in a network along the ferrite grain boundaries, wherein the ferrite grain is relatively coarse and the distribution of dual-phase structure of martensite and carbide is uneven.

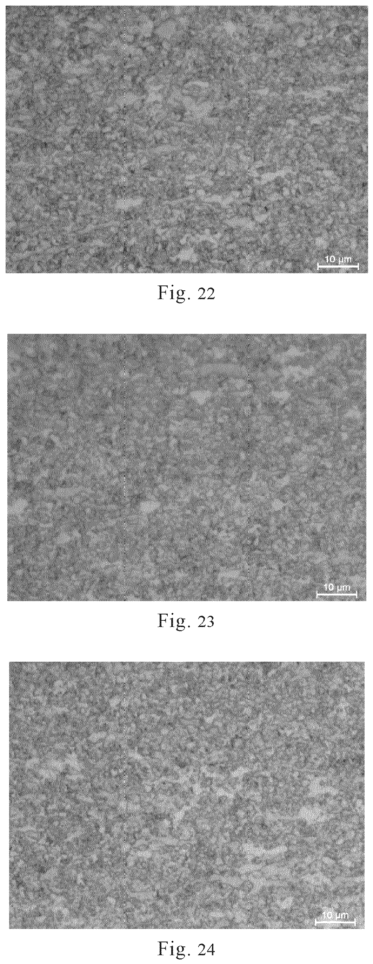

Figure 21 is a structure photo of I steel having a typical composition obtained by Example 17 (GA), and Figure 22 is a structure photo of D steel having a typical composition obtained by Example 22 (GI). Figure 23 is a structure photo of I steel having a typical composition obtained by Example 34 (GA). Examples 17, 22, 34 all adopt processes with short heat treatment cycles. It can be seen from the figures that the hot-dip galvanizing process by rapid heat treatment of the present disclosure can also provide a very uniform, fine, dispersed distribution of each phase structure after alloying (FIG. 21, FIG. 23). The manufacturing process of the hot-galvanized dual-phase steel of the present disclosure can refine grains, and make the structure of each phase of the material evenly distributed in the matrix, thereby improving the material structure and the material properties.

Table 21 (unit: mass percentage)

| Test steel | C | Si | Mn | Ti | Nb | Cr | Mo | V | P | S | Al |
|---|---|---|---|---|---|---|---|---|---|---|---|
| A | 0.05 | 0.45 | 2.00 | 0.0319 | 0.0231 | / | / | / | 0.0135 | 0.0015 | 0.0314 |
| B | 0.07 | 0.20 | 1.91 | 0.0403 | 0.0398 | 0.2 | / | / | 0.0079 | 0.0020 | 0.0316 |
| C | 0.103 | 0.33 | 1.62 | 0.0325 | 0.0255 | / | / | / | 0.0174 | 0.0009 | 0.0269 |
| D | 0.120 | 0.42 | 1.46 | 0.0358 | 0.0332 | 0.33 | / | / | 0.0148 | 0.0012 | 0.0314 |
| E | 0.055 | 0.44 | 1.41 | 0.0500 | 0.0305 | 0.253 | 0.12 | / | 0.0118 | 0.0011 | 0.0340 |
| F | 0.068 | 0.35 | 1.63 | 0.0307 | 0.0225 | / | 0.13 | 0.041 | 0.0118 | 0.0015 | 0.0366 |
| G | 0.092 | 0.25 | 1.50 | 0.0382 | 0.0273 | 0.181 | 0.12 | / | 0.0115 | 0.0006 | 0.0297 |
| H | 0.099 | 0.42 | 1.44 | 0.0398 | 0.0360 | / | / | / | 0.0064 | 0.0028 | 0.0294 |
| I | 0.110 | 0.26 | 1.61 | 0.0414 | 0.0356 | 0.305 | / | 0.035 | 0.0163 | 0.0003 | 0.0358 |
| J | 0.103 | 0.43 | 1.53 | 0.0300 | 0.0200 | / | 0.1 | / | 0.0136 | 0.0018 | 0.0286 |
| K | 0.083 | 0.27 | 1.40 | 0.0309 | 0.0264 | / | / | / | 0.0097 | 0.0033 | 0.0276 |
| L | 0.095 | 0.35 | 1.52 | 0.0427 | 0.0253 | / | / | / | 0.0095 | 0.0028 | 0.0303 |
| M | 0.078 | 0.45 | 1.48 | 0.0456 | 0.0335 | 0.276 | 0.11 | / | 0.0099 | 0.0003 | 0.0290 |
| N | 0.069 | 0.50 | 2.20 | 0.0351 | 0.0345 | / | 0.12 | 0.025 | 0.0134 | 0.0008 | 0.0367 |
| O | 0.105 | 0.10 | 1.71 | 0.0308 | 0.0282 | / | / | / | 0.0099 | 0.0017 | 0.0290 |
| P | 0.094 | 0.23 | 1.82 | 0.0323 | 0.0241 | / | / | 0.05 | 0.0124 | 0.0012 | 0.0259 |
| Q | 0.089 | 0.15 | 1.72 | 0.0471 | 0.0344 | / | / | / | 0.0096 | 0.0011 | 0.0319 |
| R | 0.095 | 0.18 | 1.83 | 0.0314 | 0.0400 | / | / | 0.032 | 0.0075 | 0.0015 | 0.0285 |
| S | 0.096 | 0.31 | 1.65 | 0.0327 | 0.0347 | / | / | 0.03 | 0.0066 | 0.0007 | 0.0495 |

Table 22

| | Hot roll-ing coil-ing tem-per ature °C | Cold rolling reducti on rate % | Rapid heat treatment (one stage) | | | | | | | | | | | | | Total time of rapid heat treatment s |
|---|---|---|---|---|---|---|---|---|---|---|---|---|---|---|---|---|
| | | | Rapid heating rate (one stage) °C/s | Soaking | | Slow cooling | | Rapid cooling | | Hot-dip galvanizi ng temperat ure °C | Alloying | | | Final cooling rate °C/s | | |
| | | | | Soaking tempera ture °C | Soakin g time s | Cooling rate °C/s | Temperat ure after cooling °C | Cooling rate °C/s | Temperat ure after cooling °C | | Heating rate °C/s | Tempera ture °C | Time s | | |
| Ex. 1 | 680 | 40 | 50 | 750 | 60 | 15 | 670 | 50 | 460 | 460 | / | / | / | 100 | 88.53 |
| Ex.2 | 650 | 85 | 80 | 770 | 50 | 13 | 690 | 60 | 465 | 465 | / | / | / | 80 | 74.84 |
| Ex. 3 | 610 | 70 | 150 | 790 | 40 | 11 | 700 | 80 | 470 | 470 | / | / | / | 75 | 62.19 |
| Ex.4 | 580 | 60 | 300 | 800 | 30 | 9 | 730 | 100 | 466 | 466 | / | / | / | 60 | 50.45 |
| Ex. 5 | 550 | 65 | 500 | 840 | 10 | 15 | 770 | 120 | 467 | 467 | / | / | / | 50 | 29.58 |
| Ex.6 | 590 | 45 | 250 | 845 | 20 | 5 | 750 | 150 | 461 | 461 | / | / | / | 30 | 58.93 |
| Ex.7 | 640 | 55 | 350 | 795 | 55 | 12 | 695 | 140 | 468 | 468 | / | / | / | 140 | 70.37 |
| Ex. 8 | 590 | 63 | 400 | 790 | 45 | 8 | 670 | 130 | 469 | 469 | / | / | / | 150 | 66.46 |
| Ex.9 | 570 | 55 | 230 | 815 | 35 | 10 | 675 | 100 | 460 | 460 | / | / | / | 120 | 58.27 |
| Ex. 10 | 560 | 75 | 100 | 830 | 25 | 14 | 710 | 200 | 470 | 470 | / | / | / | 100 | 48.39 |
| Ex.11 | 600 | 72 | 180 | 820 | 30 | 7 | 675 | 170 | 465 | 465 | / | / | / | 130 | 61.36 |
| Ex. 12 | 550 | 50 | 200 | 835 | 20 | 6 | 720 | 180 | 470 | 470 | / | / | / | 150 | 49.11 |
| Ex. 13 | 680 | 40 | 50 | 750 | 60 | 15 | 670 | 50 | 460 | 460 | 30 | 480 | 20 | 30 | 122.93 |
| Ex. 14 | 650 | 85 | 80 | 770 | 50 | 13 | 690 | 60 | 465 | 465 | 50 | 490 | 17 | 60 | 95.36 |
| Ex. 15 | 610 | 70 | 150 | 790 | 40 | 11 | 710 | 80 | 470 | 470 | 100 | 510 | 15 | 90 | 76.25 |
| Ex.16 | 580 | 60 | 300 | 820 | 30 | 9 | 730 | 100 | 466 | 466 | 150 | 530 | 12 | 150 | 61.13 |
| Ex. 17 | 550 | 65 | 500 | 845 | 10 | 6 | 770 | 120 | 467 | 467 | 200 | 550 | 10 | 250 | 39.21 |
| Traditional process 1 | 680 | 80 | 11 | 770 | 160 | 10 | 675 | 100 | 470 | 470 | / | / | / | 30 | 254.05 |
| Traditional process 2 | 650 | 76 | 10 | 790 | 130 | 9 | 675 | 80 | 465 | 465 | / | / | / | 60 | 229.82 |

EP 4 317 515 A1

(continued)

| | Hot rolling coiling temperature °C | Cold rolling reduction rate % | Rapid heat treatment (one stage) | | | | | | | | | | | Total time of rapid heat treatment s |
|---|---|---|---|---|---|---|---|---|---|---|---|---|---|---|
| | | | Rapid heating rate (one stage) °C/s | Soaking | | Slow cooling | | Rapid cooling | | Hot-dip galvanizing temperature °C | Alloying | | | Final cooling rate °C/s | |
| | | | | Soaking temperature °C | Soaking time s | Cooling rate °C/s | Temperature after cooling °C | Cooling rate °C/s | Temperature after cooling °C | | Heating rate °C/s | Temperature °C | Time s | | |
| Traditional process 3 | 610 | 70 | 11 | 810 | 110 | 10 | 675 | 75 | 460 | 460 | / | / | / | 90 | 203.07 |
| Traditional process 4 | 580 | 65 | 13 | 830 | 90 | 8 | 675 | 60 | 470 | 470 | / | / | / | 120 | 178.85 |
| Traditional process 5 | 550 | 60 | 15 | 845 | 70 | 12 | 675 | 50 | 470 | 470 | / | / | / | 150 | 146.27 |
| Traditional process 6 | 680 | 80 | 12 | 770 | 160 | 10 | 675 | 100 | 470 | 470 | 12 | 480 | 20 | 30 | 270.22 |
| Traditional process 7 | 650 | 76 | 14 | 790 | 130 | 9 | 675 | 80 | 465 | 465 | 16 | 490 | 17 | 60 | 226.80 |
| Traditional process 8 | 610 | 70 | 10 | 810 | 110 | 10 | 675 | 75 | 460 | 460 | 10 | 510 | 15 | 90 | 230.81 |
| Traditional process 9 | 580 | 65 | 11 | 830 | 90 | 8 | 675 | 60 | 470 | 470 | 20 | 530 | 12 | 120 | 205.68 |
| Traditional process 10 | 550 | 60 | 15 | 845 | 70 | 12 | 675 | 50 | 470 | 470 | 25 | 550 | 10 | 150 | 160.00 |

Table 23

| | Hot rolling coiling temperature °C | Cold rolling reduction rate % | Rapid heating (two-stage) | | | Soaking | | Slow cooling | | Rapid cooling | | Hot-dip galvanizing temperature °C | Alloying | | | Final cooling rate °C/s | Total time of rapid heat treatment s |
|---|---|---|---|---|---|---|---|---|---|---|---|---|---|---|---|---|---|
| | | | Heating rate in the first stage °C/s | Temperature after heating in the first stage °C | Heating rate in the second stage °C/s | Soaking temperature °C | Soaking time s | Cooling rate °C/s | temperature after cooling °C | Cooling rate °C/s | temperature after cooling °C | | Heating rate °C/s | Temperature °C | Time s | | |
| Ex. 18 | 680 | 40 | 15 | 550 | 500 | 750 | 60 | 15 | 670 | 50 | 460 | 460 | / | / | / | 100 | 109.67 |
| Ex. 19 | 650 | 85 | 30 | 570 | 300 | 770 | 50 | 13 | 690 | 60 | 465 | 465 | / | / | / | 80 | 84.47 |
| Ex.20 | 610 | 70 | 80 | 600 | 150 | 790 | 40 | 11 | 700 | 80 | 470 | 470 | / | / | / | 75 | 65.57 |
| Ex.21 | 580 | 60 | 150 | 630 | 80 | 800 | 30 | 9 | 730 | 100 | 466 | 466 | / | / | / | 60 | 54.04 |
| Ex.22 | 550 | 65 | 300 | 640 | 50 | 840 | 10 | 15 | 770 | 120 | 467 | 467 | / | / | / | 50 | 32.20 |
| Ex.23 | 590 | 45 | 500 | 650 | 30 | 845 | 20 | 5 | 750 | 150 | 461 | 461 | / | / | / | 30 | 63.39 |
| Ex.24 | 640 | 55 | 250 | 647 | 200 | 795 | 55 | 12 | 695 | 140 | 468 | 468 | / | / | / | 140 | 71.40 |
| Ex.25 | 590 | 63 | 350 | 635 | 450 | 790 | 45 | 8 | 670 | 130 | 469 | 469 | / | / | / | 150 | 66.64 |
| Ex.26 | 570 | 55 | 400 | 640 | 350 | 815 | 35 | 10 | 675 | 100 | 460 | 460 | / | / | / | 120 | 56.87 |
| Ex.27 | 560 | 75 | 250 | 620 | 250 | 830 | 25 | 14 | 710 | 200 | 470 | 470 | / | / | / | 100 | 43.01 |
| Ex.28 | 600 | 72 | 100 | 580 | 150 | 820 | 30 | 7 | 675 | 170 | 465 | 465 | / | / | / | 130 | 63.60 |
| Ex.29 | 550 | 50 | 200 | 610 | 200 | 835 | 20 | 6 | 720 | 180 | 470 | 470 | / | / | / | 150 | 48.23 |
| Ex.30 | 680 | 40 | 15 | 550 | 500 | 750 | 60 | 15 | 670 | 50 | 460 | 460 | 30 | 480 | 20 | 30 | 141.27 |
| Ex.31 | 650 | 85 | 30 | 570 | 300 | 770 | 50 | 13 | 690 | 60 | 465 | 465 | 50 | 490 | 17 | 60 | 104.24 |
| Ex.32 | 610 | 70 | 80 | 600 | 150 | 790 | 40 | 11 | 710 | 80 | 470 | 470 | 100 | 510 | 15 | 90 | 79.63 |
| Ex.33 | 580 | 60 | 150 | 630 | 80 | 820 | 30 | 9 | 730 | 100 | 466 | 466 | 150 | 530 | 12 | 150 | 64.91 |
| Ex.34 | 550 | 65 | 300 | 640 | 50 | 845 | 10 | 6 | 770 | 120 | 467 | 467 | 200 | 550 | 10 | 250 | 43.73 |
| Traditional process 11 | 680 | 80 | 11 | 150 | 8 | 770 | 160 | 10 | 675 | 100 | 470 | 470 | / | / | / | 30 | 275.87 |

| | Hot rolling coiling temperature °C | Cold rolling reduction rate % | Rapid heat treatment (two-stage) | | | | | | | | | | | | | | Total time of rapid heat treatment s |
| | | | Rapid heating (two-stage) | | | Soaking | | Slow cooling | | Rapid cooling | | Hot-dip galvanizing temperature° C | Alloying | | | Final cooling rate °C/s | |
| | | | Heating rate in the first stage °C/s | Temperature after heating in the first stage °C | Heating rate in the second stage °C/s | Soaking temperature °C | Soaking time s | Cooling rate °C/s | temperature after cooling °C | Cooling rate °C/s | temperature after cooling °C | | Heating rate °C/s | Temperature °C | Time s | | |
| Traditional process 12 | 650 | 76 | 10 | 150 | 7 | 790 | 130 | 9 | 675 | 80 | 465 | 465 | / | / | / | 60 | 257.25 |
| Traditional process 13 | 610 | 70 | 11 | 180 | 6 | 810 | 110 | 10 | 675 | 75 | 460 | 460 | / | / | / | 90 | 250.80 |
| Traditional process 14 | 580 | 65 | 13 | 210 | 5 | 830 | 90 | 8 | 675 | 60 | 470 | 470 | / | / | / | 120 | 255.16 |
| Traditional process 15 | 550 | 60 | 15 | 250 | 5 | 845 | 70 | 12 | 675 | 50 | 470 | 470 | / | / | / | 150 | 225.60 |
| Traditional process 16 | 680 | 80 | 11 | 150 | 8 | 770 | 160 | 10 | 675 | 100 | 470 | 470 | 12 | 480 | 20 | 30 | 297.03 |
| Traditional process 17 | 650 | 76 | 10 | 150 | 7 | 790 | 130 | 9 | 675 | 80 | 465 | 465 | 16 | 490 | 17 | 60 | 276.23 |
| Traditional process 18 | 610 | 70 | 11 | 180 | 6 | 810 | 110 | 10 | 675 | 75 | 460 | 460 | 10 | 510 | 15 | 90 | 271.36 |
| Traditional process 19 | 580 | 65 | 13 | 210 | 5 | 830 | 90 | 8 | 675 | 60 | 470 | 470 | 20 | 530 | 12 | 120 | 270.66 |
| Traditional process 20 | 550 | 60 | 15 | 250 | 5 | 845 | 70 | 12 | 675 | 50 | 470 | 470 | 25 | 550 | 10 | 150 | 239.33 |

EP 4 317 515 A1

Table 24

| No. | Test steel | Products | Main process parameters (Rapid heating-one stage) | Yield strength MPa | Tensile strength MPa | Elongation % | Product of strength and elongation MPa% |
|---|---|---|---|---|---|---|---|
| 1 | A | Hot dip galvanized GI | Traditional process 1 | 488 | 872 | 17 | 14824 |
| 2 | A | | Ex.1 | 562 | 989 | 14.5 | 14340.5 |
| 3 | B | | Traditional process 2 | 499 | 897 | 16.5 | 14800.5 |
| 4 | B | | Ex.2 | 584 | 992 | 14.8 | 14681.6 |
| 5 | C | | Traditional process 3 | 508 | 900 | 16.3 | 14670 |
| 6 | C | | Ex.3 | 598 | 1003 | 14.9 | 14944.7 |
| 7 | D | | Traditional process 4 | 497 | 912 | 16.1 | 14683.2 |
| 8 | D | | Ex.4 | 599 | 1004 | 15.1 | 15160.4 |
| 9 | E | | Traditional process 5 | 501 | 898 | 16.3 | 14637.4 |
| 10 | E | | Ex.5 | 600 | 998 | 15.1 | 15069.8 |
| 11 | N | | Ex.6 | 604 | 1016 | 14.1 | 14325.6 |
| 12 | F | | Ex.7 | 662 | 1086 | 13.7 | 14878.2 |
| 13 | K | | Ex.8 | 608 | 996 | 14.4 | 14342.4 |
| 14 | R | | Ex.9 | 709 | 1051 | 12.6 | 13242.6 |
| 15 | G | | Ex. 10 | 612 | 997 | 14.8 | 14755.6 |
| 16 | P | | Ex. 11 | 635 | 1032 | 12.7 | 13106.4 |
| 17 | S | | Ex. 12 | 619 | 1006 | 14.7 | 14788.2 |
| 18 | O | Alloy galvannealed GA | Ex. 13 | 646 | 1035 | 14.3 | 14800.5 |
| 19 | O | | Traditional process 6 | 516 | 934 | 16.1 | 15037.4 |
| 20 | L | | Ex. 14 | 695 | 1065 | 12.4 | 13206 |
| 21 | L | | Traditional process 7 | 495 | 901 | 15.9 | 14325.9 |
| 22 | H | | Ex.15 | 638 | 1020 | 14.9 | 15198 |
| 23 | H | | Traditional process 8 | 499 | 918 | 15.4 | 14137.2 |
| 24 | Q | | Ex. 16 | 668 | 1031 | 14 | 14434 |
| 25 | Q | | Traditional process 9 | 469 | 924 | 14.1 | 13028.4 |
| 26 | I | | Ex. 17 | 624 | 1029 | 13.7 | 14097.3 |
| 27 | J | | Traditional process 10 | 513 | 897 | 15.6 | 13993.2 |

Table 25

| No. | Test steel | Products | Main process parameters (Rapid heating-two stage) | Yield strength MPa | Tensile strength MPa | Elongation % | Product of strength and elongation MPa% |
|---|---|---|---|---|---|---|---|
| 1 | A | | Traditional process 11 | 432 | 801 | 18.3 | 14658.3 |
| 2 | A | | Ex.19 | 548 | 989 | 14.4 | 14241.6 |
| 3 | B | | Traditional process 12 | 487 | 898 | 16.9 | 15176.2 |
| 4 | B | | Ex.20 | 565 | 993 | 15 | 14895 |
| 5 | C | | Traditional process 13 | 479 | 873 | 16.2 | 14142.6 |
| 6 | C | | Ex.21 | 559 | 991 | 15.2 | 15063.2 |
| 7 | D | | Traditional process 14 | 470 | 877 | 16.5 | 14470.5 |
| 8 | D | Hot dip galvanized GI | Ex.22 | 564 | 1010 | 14.6 | 14746 |
| 9 | E | | Traditional process 15 | 451 | 853 | 16.9 | 14415.7 |
| 10 | E | | Ex.23 | 585 | 1021 | 13.9 | 14191.9 |
| 11 | N | | Ex. 18 | 620 | 1036 | 14.1 | 14607.6 |
| 12 | F | | Ex.24 | 543 | 998 | 14.4 | 14371.2 |
| 13 | K | | Ex.25 | 641 | 1108 | 13.4 | 14847.2 |
| 14 | R | | Ex.26 | 565 | 1088 | 13.9 | 15123.2 |
| 15 | G | | Ex.27 | 611 | 1013 | 14.7 | 14891.1 |
| 16 | P | | Ex.28 | 577 | 1010 | 14.7 | 14847 |
| 17 | S | | Ex.29 | 636 | 1040 | 13.4 | 13936 |
| 18 | O | | Ex.30 | 666 | 1076 | 13.6 | 14633.6 |
| 19 | O | | Traditional process 16 | 458 | 880 | 17.1 | 15048 |
| 20 | L | | Ex.31 | 626 | 1023 | 11.9 | 12173.7 |
| 21 | L | | Traditional process 17 | 444 | 842 | 16.8 | 14145.6 |
| 22 | H | Alloy galvannealed GA | Ex.32 | 627 | 1014 | 13.5 | 13689 |
| 23 | H | | Traditional process 18 | 435 | 897 | 16.3 | 14621.1 |
| 24 | Q | | Ex. 33 | 648 | 1024 | 14.5 | 14848 |
| 25 | Q | | Traditional process 19 | 434 | 858 | 16.9 | 14500.2 |
| 26 | I | | Ex.34 | 629 | 1038 | 13.5 | 14013 |
| 27 | J | | Traditional process 20 | 454 | 873 | 16.7 | 14579.1 |

Example V

The composition of the test steel of this Example is shown in Table 21. The specific parameters of the present example and the traditional processes are shown in Table 22 (heating in one stage) and Table 23 (heating in two stages). The main performances of the hot-dip galvanized dual phase steel GI and GA prepared from the test steel composition of the present disclosure according to the examples and the traditional processes in Table 22 and Table 23 are listed in Table 24 and Table 25.

It can be seen from Table 21-Table 25 that the process of the present disclosure can reduce the alloy content in the same grade of steel, refine grains, and obtain a matching of material structure and composition with strength and toughness. The dual-phase steel obtained by the process of the present disclosure has a yield strength of 665~854MPa, a tensile strength of 1182~1285MPa, an elongation of 11.5~12.8%, a product of strength and elongation of 13.6~15.2GPa%.

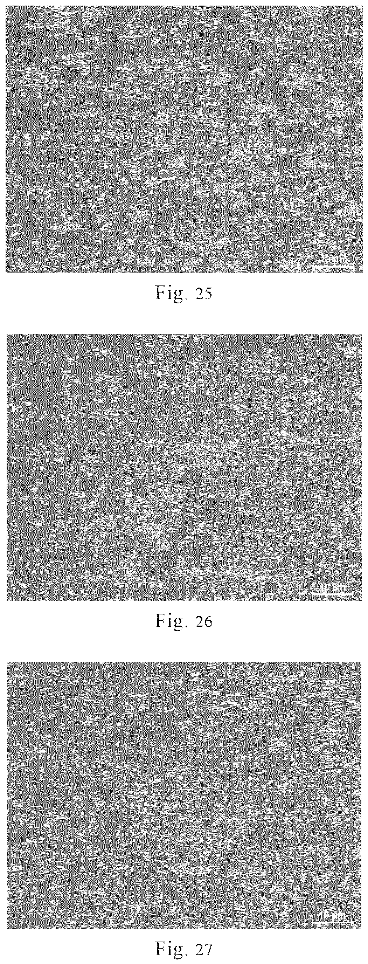

Figure 24 and Figure 25 are structure photos of A steel having a typical composition obtained by Example 1 and Comparative Traditional process 1. It can be seen from the two figures that there are significant differences in the structure after hot-dip galvanizing. The A steel after rapid heat treatment of the present disclosure (Figure 24) has a microstructure that is characterized in that ferritic, martensitic grain structure and carbide are very fine and evenly distributed in the matrix, which is very beneficial to the improvement of the strength and plasticity of the material.

The A steel after traditional process treatment (Figure 25) has a typical dual-phase steel structure. That is, there is a small amount of black martensitic structure on the grain boundary of large white ferritic structure. Due to element segregation and other reasons, the material structure treated by the traditional process shows a certain directionality with its ferrite structure distributed in long strips along the rolling direction. The steel obtained bythe traditional process treatment has a microstructure comprising coarse ferritic grains, with martensite and carbide distributed in a network along the ferrite grain boundaries, wherein the distribution is uneven.

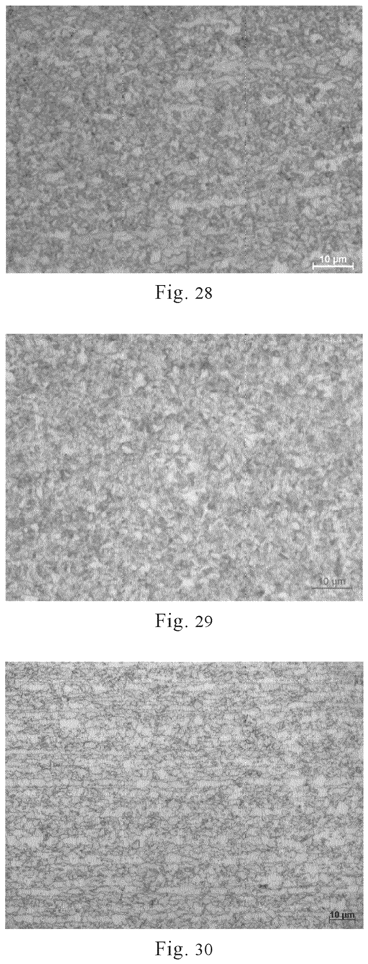

Figure 26 is a structure photo of I steel having a typical composition obtained by Example 17 (GA), and Figure 27 is a structure photo of D steel having a typical composition obtained by Example 22 (GI). Figure 28 is a structure photo of I steel having a typical composition obtained by Example 34 (GA). Examples 17, 22, 34 all adopt processes with short heat treatment cycles. It can be seen from the figures that the hot-dip galvanizing process by rapid heat treatment of the present disclosure can also provide a very uniform, fine, dispersed distribution of each phase structure after alloying (Figure 26), while Traditional process 9 provides coarse ferritic structure with a small amount of martensitic structure distributed on the ferrite grain boundary, which is a typical hot-dip galvanized dual-phase steel structure. Therefore, t he manufacturing process of the hot-dip galvanized dual-phase steel of the present disclosure can refine grains, make the structure of each phase of the material evenly distributed in the matrix, thereby improving the material structure and the material properties.

Table 21 (unit: mass percentage)

| Test steel | C | Si | Mn | Cr | Mo | Ti | Nb | P | S | Al |
|---|---|---|---|---|---|---|---|---|---|---|
| A | 0.05 | 0.45 | 2.50 | 0.304 | 0.400 | 0.020 | 0.040 | 0.010 | 0.0030 | 0.020 |
| B | 0.07 | 0.24 | 2.26 | 0.595 | 0.321 | 0.022 | 0.029 | 0.013 | 0.0025 | 0.035 |
| C | 0.09 | 0.33 | 2.32 | 0.417 | 0.254 | 0.023 | 0.021 | 0.015 | 0.0022 | 0.042 |
| D | 0.10 | 0.18 | 2.06 | 0.456 | 0.211 | 0.025 | 0.028 | 0.012 | 0.0018 | 0.050 |
| E | 0.05 | 0.34 | 2.41 | 0.453 | 0.282 | 0.029 | 0.036 | 0.010 | 0.0028 | 0.022 |
| F | 0.06 | 0.35 | 2.33 | 0.424 | 0.297 | 0.034 | 0.021 | 0.014 | 0.0026 | 0.024 |
| G | 0.09 | 0.25 | 2.35 | 0.546 | 0.201 | 0.040 | 0.023 | 0.015 | 0.0021 | 0.042 |
| H | 0.10 | 0.42 | 2.44 | 0.391 | 0.250 | 0.039 | 0.025 | 0.012 | 0.0050 | 0.050 |
| I | 0.09 | 0.26 | 2.21 | 0.585 | 0.241 | 0.028 | 0.024 | 0.012 | 0.0022 | 0.048 |
| J | 0.05 | 0.43 | 2.23 | 0.346 | 0.278 | 0.025 | 0.032 | 0.010 | 0.0043 | 0.027 |
| K | 0.06 | 0.27 | 2.50 | 0.322 | 0.392 | 0.025 | 0.040 | 0.012 | 0.0025 | 0.036 |
| L | 0.08 | 0.35 | 2.22 | 0.559 | 0.234 | 0.030 | 0.025 | 0.015 | 0.0032 | 0.043 |
| M | 0.10 | 0.26 | 2.13 | 0.491 | 0.273 | 0.033 | 0.034 | 0.013 | 0.0019 | 0.050 |
| N | 0.07 | 0.45 | 2.32 | 0.336 | 0.293 | 0.028 | 0.022 | 0.012 | 0.0023 | 0.043 |
| O | 0.08 | 0.15 | 2.01 | 0.583 | 0.201 | 0.030 | 0.040 | 0.011 | 0.0026 | 0.033 |
| P | 0.10 | 0.23 | 2.15 | 0.517 | 0.212 | 0.032 | 0.0345 | 0.015 | 0.0033 | 0.045 |
| Q | 0.08 | 0.19 | 2.39 | 0.388 | 0.335 | 0.025 | 0.030 | 0.012 | 0.0025 | 0.038 |

(continued)

| Test steel | C | Si | Mn | Cr | Mo | Ti | Nb | P | S | Al |
|---|---|---|---|---|---|---|---|---|---|---|
| R | 0.10 | 0.18 | 2.18 | 0.488 | 0.232 | 0.023 | 0.0345 | 0.015 | 0.0041 | 0.043 |
| S | 0.09 | 0.31 | 2.35 | 0.379 | 0.377 | 0.031 | 0.025 | 0.012 | 0.0018 | 0.05 |

Table 22

| | Hot rolling coiling temperature °C | Cold rolling reduction rate % | Rapid heating rate (one stage) °C/s | Soaking | | Slow cooling | | Rapid cooling | | Hot-dip galvanizing temperature °C | Alloying | | | Final cooling rate °C/s | Total time of rapid heat treatment and hot-dip galvanizing s |
|---|---|---|---|---|---|---|---|---|---|---|---|---|---|---|---|
| | | | | Soaking temperature °C | Soaking time s | Cooling rate °C/s | Temperature after cooling °C | Cooling rate °C/s | Temperature after cooling °C | | Heating rate °C/s | Temperature °C | Time s | | |
| Ex.1 | 680 | 40 | 50 | 750 | 60 | 15 | 670 | 50 | 460 | 460 | / | / | / | 100 | 88.53 |
| Ex.2 | 650 | 85 | 80 | 770 | 50 | 13 | 690 | 60 | 465 | 465 | / | / | / | 80 | 74.84 |
| Ex.3 | 610 | 70 | 150 | 790 | 40 | 11 | 700 | 80 | 470 | 470 | / | / | / | 75 | 62.19 |
| Ex.4 | 580 | 60 | 300 | 800 | 30 | 9 | 730 | 100 | 466 | 466 | / | / | / | 60 | 50.45 |
| Ex.5 | 550 | 65 | 500 | 840 | 10 | 15 | 770 | 120 | 467 | 467 | / | / | / | 50 | 29.58 |
| Ex.6 | 590 | 45 | 250 | 845 | 20 | 5 | 750 | 150 | 461 | 461 | / | / | / | 30 | 58.93 |
| Ex.7 | 640 | 55 | 350 | 795 | 55 | 12 | 695 | 140 | 468 | 468 | / | / | / | 140 | 70.37 |
| Ex.8 | 590 | 63 | 400 | 790 | 45 | 8 | 670 | 130 | 469 | 469 | / | / | / | 150 | 66.46 |
| Ex.9 | 570 | 55 | 230 | 815 | 35 | 10 | 675 | 100 | 460 | 460 | / | / | / | 120 | 58.27 |
| Ex.10 | 560 | 75 | 100 | 830 | 25 | 14 | 710 | 200 | 470 | 470 | / | / | / | 100 | 48.39 |
| Ex.11 | 600 | 72 | 180 | 820 | 30 | 7 | 675 | 170 | 465 | 465 | / | / | / | 130 | 61.36 |
| Ex.12 | 550 | 50 | 200 | 835 | 20 | 6 | 720 | 180 | 470 | 470 | / | / | / | 150 | 49.11 |
| Ex.13 | 680 | 40 | 50 | 750 | 60 | 15 | 670 | 50 | 460 | 460 | 30 | 480 | 20 | 30 | 122.93 |
| Ex.14 | 650 | 85 | 80 | 770 | 50 | 13 | 690 | 60 | 465 | 465 | 50 | 490 | 17 | 60 | 95.36 |
| Ex.15 | 610 | 70 | 150 | 790 | 40 | 11 | 710 | 80 | 470 | 470 | 100 | 510 | 15 | 90 | 76.25 |
| Ex.16 | 580 | 60 | 300 | 820 | 30 | 9 | 730 | 100 | 466 | 466 | 150 | 530 | 12 | 150 | 61.13 |
| Ex.17 | 550 | 65 | 500 | 845 | 10 | 6 | 770 | 120 | 467 | 467 | 200 | 550 | 10 | 250 | 39.21 |
| Traditional process 1 | 680 | 80 | 11 | 770 | 160 | 10 | 675 | 100 | 470 | 470 | / | / | / | 30 | 254.05 |
| Traditional process 2 | 650 | 76 | 10 | 790 | 130 | 9 | 675 | 80 | 465 | 465 | / | / | / | 60 | 229.82 |

| | Hot rolling coiling temperature °C | Cold rolling reduction rate % | Rapid heat treatment (one stage) | | | | | | | | | | | | Total time of rapid heat treatment and hot-dip galvanizing s |
| | | | Rapid heating rate (one stage) °C/s | Soaking | | Slow cooling | | Rapid cooling | | Hot-dip galvanizing temperature °C | Alloying | | | Final cooling rate °C/s | |
| | | | | Soaking temperature °C | Soaking time s | Cooling rate °C/s | Temperature after cooling °C | Cooling rate °C/s | Temperature after cooling °C | | Heating rate °C/s | Temperature °C | Time s | | |
| Traditional process 3 | 610 | 70 | 11 | 810 | 110 | 10 | 675 | 75 | 460 | 460 | / | / | / | 90 | 203.07 |
| Traditional process 4 | 580 | 65 | 13 | 830 | 90 | 8 | 675 | 60 | 470 | 470 | / | / | / | 120 | 178.85 |
| Traditional process 5 | 550 | 60 | 15 | 845 | 70 | 12 | 675 | 50 | 470 | 470 | / | / | / | 150 | 146.27 |
| Traditional process 6 | 680 | 80 | 12 | 770 | 160 | 10 | 675 | 100 | 470 | 470 | 12 | 480 | 20 | 30 | 270.22 |
| Traditional process 7 | 650 | 76 | 14 | 790 | 130 | 9 | 675 | 80 | 465 | 465 | 16 | 490 | 17 | 60 | 226.80 |
| Traditional process 8 | 610 | 70 | 10 | 810 | 110 | 10 | 675 | 75 | 460 | 460 | 10 | 510 | 15 | 90 | 230.81 |
| Traditional process 9 | 580 | 65 | 11 | 830 | 90 | 8 | 675 | 60 | 470 | 470 | 20 | 530 | 12 | 120 | 205.68 |
| Traditional process 10 | 550 | 60 | 15 | 845 | 70 | 12 | 675 | 50 | 470 | 470 | 25 | 550 | 10 | 150 | 160.00 |

EP 4 317 515 A1

Table 23

| | Hot rolling coiling temperature °C | Cold rolling reduction rate % | Rapid heating (two stage) | | | Soaking | | Slow cooling | | Rapid cooling | | Hot-dip galvanizing temperature °C | Alloying | | | Final cooling rate °C/s | Total time of rapid heat treatment and hot-dip galvanizing s |
|---|---|---|---|---|---|---|---|---|---|---|---|---|---|---|---|---|---|
| | | | Heating rate in the first stage °C/s | Temperature after heating in the first stage °C | Heating rate in the second stage °C/s | Soaking temperature °C | Soaking time s | Cooling rate °C/s | temperature after cooling °C | Cooling rate °C/s | Temperature after cooling °C | | Heating rate °C/s | Temperature °C | Time s | | |
| Ex.18 | 680 | 40 | 15 | 550 | 500 | 750 | 60 | 15 | 670 | 50 | 460 | 460 | / | / | / | 100 | 109.67 |
| Ex.19 | 650 | 85 | 30 | 570 | 300 | 770 | 50 | 13 | 690 | 60 | 465 | 465 | / | / | / | 80 | 84.47 |
| Ex.20 | 610 | 70 | 80 | 600 | 150 | 790 | 40 | 11 | 700 | 80 | 470 | 470 | / | / | / | 75 | 65.57 |
| Ex.21 | 580 | 60 | 150 | 630 | 80 | 800 | 30 | 9 | 730 | 100 | 466 | 466 | / | / | / | 60 | 54.04 |
| Ex.22 | 550 | 65 | 300 | 640 | 50 | 840 | 10 | 15 | 770 | 120 | 467 | 467 | / | / | / | 50 | 32.20 |
| Ex.23 | 590 | 45 | 500 | 650 | 30 | 845 | 20 | 5 | 750 | 150 | 461 | 461 | / | / | / | 30 | 63.39 |
| Ex.24 | 640 | 55 | 250 | 647 | 200 | 795 | 55 | 12 | 695 | 140 | 468 | 468 | / | / | / | 140 | 71.40 |
| Ex.25 | 590 | 63 | 350 | 635 | 450 | 790 | 45 | 8 | 670 | 130 | 469 | 469 | / | / | / | 150 | 66.64 |
| Ex.26 | 570 | 55 | 400 | 640 | 350 | 815 | 35 | 10 | 675 | 100 | 460 | 460 | / | / | / | 120 | 56.87 |
| Ex.27 | 560 | 75 | 250 | 620 | 250 | 830 | 25 | 14 | 710 | 200 | 470 | 470 | / | / | / | 100 | 43.01 |
| Ex.28 | 600 | 72 | 100 | 580 | 150 | 820 | 30 | 7 | 675 | 170 | 465 | 465 | / | / | / | 130 | 63.60 |
| Ex.29 | 550 | 50 | 200 | 610 | 200 | 835 | 20 | 6 | 720 | 180 | 470 | 470 | / | / | / | 150 | 48.23 |
| Ex.30 | 680 | 40 | 15 | 550 | 500 | 750 | 60 | 15 | 670 | 50 | 460 | 460 | 30 | 480 | 20 | 30 | 141.27 |
| Ex.31 | 650 | 85 | 30 | 570 | 300 | 770 | 50 | 13 | 690 | 60 | 465 | 465 | 50 | 490 | 17 | 60 | 104.24 |
| Ex.32 | 610 | 70 | 80 | 600 | 150 | 790 | 40 | 11 | 710 | 80 | 470 | 470 | 100 | 510 | 15 | 90 | 79.63 |
| Ex.33 | 580 | 60 | 150 | 630 | 80 | 820 | 30 | 9 | 730 | 100 | 466 | 466 | 150 | 530 | 12 | 150 | 64.91 |
| Ex.34 | 550 | 65 | 300 | 640 | 50 | 845 | 10 | 6 | 770 | 120 | 467 | 467 | 200 | 550 | 10 | 250 | 43.73 |
| Traditional process 11 | 680 | 80 | 11 | 150 | 8 | 770 | 160 | 10 | 675 | 100 | 470 | 470 | / | / | / | 30 | 275.87 |

| | Hot roll-ing coil-ing temperature °C | Cold rolling reduction rate % | Rapid heat treatment (two stage) | | | | | | | | | | | | | Final cooling rate °C/s | Total time of rapid heat treatment and hot-dip galvanizing s |
|---|---|---|---|---|---|---|---|---|---|---|---|---|---|---|---|---|---|
| | | | Rapid heating (two stage) | | | Soaking | | Slow cooling | | Rapid cooling | | Hot-dip galvanizing temperature °C | Alloying | | | | |
| | | | Heating rate in the first stage °C/s | Temperature after heating in the first stage °C | Heating rate in the second stage °C/s | Soaking temperature °C | Soaking time s | Cooling rate °C/s | temperature after cooling °C | Cooling rate °C/s | Temperature after cooling °C | | Heating rate °C/s | Temperature °C | Time s | | |
| Traditional process 12 | 650 | 76 | 10 | 150 | 7 | 790 | 130 | 9 | 675 | 80 | 465 | 465 | / | / | / | 60 | 257.25 |
| Traditional process 13 | 610 | 70 | 11 | 180 | 6 | 810 | 110 | 10 | 675 | 75 | 460 | 460 | / | / | / | 90 | 250.80 |
| Traditional process 14 | 580 | 65 | 13 | 210 | 5 | 830 | 90 | 8 | 675 | 60 | 470 | 470 | / | / | / | 120 | 255.16 |
| Traditional process 15 | 550 | 60 | 15 | 250 | 5 | 845 | 70 | 12 | 675 | 50 | 470 | 470 | / | / | / | 150 | 225.60 |
| Traditional process 16 | 680 | 80 | 11 | 150 | 8 | 770 | 160 | 10 | 675 | 100 | 470 | 470 | 12 | 480 | 20 | 30 | 297.03 |
| Traditional process 17 | 650 | 76 | 10 | 150 | 7 | 790 | 130 | 9 | 675 | 80 | 465 | 465 | 16 | 490 | 17 | 60 | 276.23 |
| Traditional process 18 | 610 | 70 | 11 | 180 | 6 | 810 | 110 | 10 | 675 | 75 | 460 | 460 | 10 | 510 | 15 | 90 | 271.36 |
| Traditional process 19 | 580 | 65 | 13 | 210 | 5 | 830 | 90 | 8 | 675 | 60 | 470 | 470 | 20 | 530 | 12 | 120 | 270.66 |
| Traditional process 20 | 550 | 60 | 15 | 250 | 5 | 845 | 70 | 12 | 675 | 50 | 470 | 470 | 25 | 550 | 10 | 150 | 239.33 |

EP 4 317 515 A1

Table 24

| No. | Test steel | Type of the product | Main process parameters (Rapid heating-one stage) | Yield strength MPa | Tensile strength MPa | Elongation % | Product of strength and elongation MPa% |
|---|---|---|---|---|---|---|---|
| 1 | A | hot dip galvanized GI | Traditional process 1 | 647 | 1014 | 12 | 12168 |
| 2 | A | | Ex.1 | 787.3 | 1184.3 | 11.5 | 13619.83 |
| 3 | B | | Traditional process 2 | 632 | 1009 | 12.1 | 12208.9 |
| 4 | B | | Ex.2 | 775 | 1188.5 | 11.75 | 13964.875 |
| 5 | C; | | Traditional process 3 | 687 | 1099 | 11.5 | 12638.5 |
| 6 | C | | Ex.3 | 774 | 1191 | 12.15 | 14470.65 |
| 7 | D | | Traditional process 4 | 630 | 1053 | 12.3 | 12951.9 |
| 8 | D | | Ex.4 | 774 | 1199 | 12.6 | 15107.4 |
| 9 | E | | Traditional process 5 | 658 | 1032 | 11.8 | 12177.6 |
| 10 | E | | Ex.5 | 808 | 1198 | 12.3 | 14735.4 |
| 11 | N | | Ex.6 | 854 | 1201 | 12.5 | 15012.5 |
| 12 | F | | Ex. 7 | 774 | 1188 | 11.9 | 14137.2 |
| 13 | K | | Ex. 8 | 784 | 1195 | 12.2 | 14579 |
| 14 | R | | Ex. 9 | 808 | 1256 | 11.5 | 14444 |
| 15 | CT | | Ex. 10 | 775 | 1184 | 12.4 | 14681.6 |
| 16 | P | | Ex.11 | 776 | 1192 | 12.6 | 15019.2 |
| 17 | S | | Ex. 12 | 802 | 1183 | 11.8 | 13959.4 |
| 18 | O | Alloy galvannealed GA | Ex.13 | 809 | 1201 | 12.2 | 14652.2 |
| 19 | O | | Traditional process 6 | 730 | 1043 | 12 | 12516 |
| 20 | L | | Ex.14 | 797 | 1190 | 11.8 | 14042 |
| 21 | L | | Traditional process 7 | 710 | 1031 | 12.2 | 12578.2 |
| 22 | H | | Ex.15 | 832 | 1205 | 11.9 | 14339.5 |
| 23 | H | | Traditional process 8 | 701 | 1033 | 12.5 | 12912.5 |
| 24 | Q | | Ex.16 | 798 | 1201 | 12.3 | 14772.3 |
| 25 | Q | | Traditional process 9 | 663 | 1079 | 11.2 | 12084.8 |
| 26 | I | | Ex. 17 | 843 | 1276 | 11.5 | 14674 |
| 27 | J | | Traditional process 10 | 713 | 1043 | 12.7 | 13246.1 |

Table 25

| No. | Test steel | Type of the coating | Main process parameters (Rapid heating-two stage) | Yield strength MPa | Tensile strength MPa | Elongation % | Product of strength and elongation MPa% |
|---|---|---|---|---|---|---|---|
| 1 | A | Hot dip galvanized GI | Traditional process 11 | 635 | 1004 | 13 | 13052 |
| 2 | A | | Ex. 19 | 775 | 1182 | 12.2 | 14420.4 |
| 3 | B | | Traditional process 12 | 630 | 1005 | 12.7 | 12763.5 |
| 4 | B | | Ex.20 | 755 | 1183.5 | 11.8 | 13965.3 |
| 5 | C | | Traditional process 13 | 667 | 1057 | 12.5 | 13212.5 |
| 6 | C | | Ex.21 | 724 | 1195 | 12.35 | 14758.25 |
| 7 | D | | Traditional process 14 | 632 | 1033 | 13.3 | 13738.9 |
| 8 | D | | Ex.22 | 766 | 1189 | 12.8 | 15219.2 |
| 9 | E | | Traditional process 15 | 647 | 1009 | 12.8 | 12915.2 |
| 10 | E | | Ex.23 | 746 | 1185 | 12.7 | 15049.5 |
| 11 | N | | Ex. 18 | 665 | 1202 | 12.4 | 14904.8 |
| 12 | F | | Ex.24 | 828 | 1189 | 12.2 | 14505.8 |
| 13 | K | | Ex.25 | 744 | 1185 | 12.3 | 14575.5 |
| 14 | R | | Ex.26 | 724 | 1185 | 12.7 | 15049.5 |
| 15 | G | | Ex.27 | 721 | 1187 | 12.5 | 14837.5 |
| 16 | P | | Ex.28 | 755 | 1231 | 11.6 | 14279.6 |
| 17 | S | | Ex.29 | 788 | 1194 | 12.6 | 15044.4 |
| 18 | O | Alloy galvannealed GA | Ex.30 | 732 | 1183 | 12 | 14196 |
| 19 | O | | Traditional process 16 | 659 | 1105 | 12.2 | 13481 |
| 20 | L | | Ex.31 | 765 | 1188 | 12.4 | 14731.2 |
| 21 | L | | Traditional process 17 | 668 | 1081 | 12.4 | 13404.4 |
| 22 | H | | Ex.32 | 805 | 1195 | 12.5 | 14937.5 |
| 23 | H | | Traditional process 18 | 671 | 1083 | 12.8 | 13862.4 |
| 24 | Q | | Ex.33 | 766 | 1285 | 11.7 | 15034 |
| 25 | Q | | Traditional process 19 | 688 | 1025 | 12.1 | 12402.5 |
| 26 | I | | Ex.34 | 811 | 1245 | 11.6 | 14442 |
| 27 | J | | Traditional process 20 | 655 | 1004 | 12.5 | 12550 |

Example VI

The composition of the test steel of this Example is shown in Table 26. The specific parameters of the present example and the traditional processes are shown in Table 27 (heating in one stage) and Table 28 (heating in two stages). The main performances of the hot-dip galvanized dual phase steel GI and GA prepared from the test steel composition of the present disclosure according to the examples and the traditional processes in Table 27 and Table 28 are listed in Table 29 and Table 30.

It can be seen from Table 26-Table 30 that the process of the present disclosure can reduce the alloy content in the same grade of steel, refine grains, and obtain a matching of material structure and composition with strength and toughness. The dual-phase steel obtained by the process of the present disclosure has a yield strength of 963~1109MPa, a tensile strength of 1282~1443MPa, an elongation of 7.1~8.8%, a product of strength and elongation of 10.0~11.8GPa%.

Figure 29 and Figure 30 are structure photos of A steel having a typical composition obtained by Example 1 and Comparative Traditional process 1. It can be seen from the figures that there are very big differences in the structure after hot-dip galvanizing. The A steel after rapid heat treatment of the present disclosure has a microstructure composed of fine, uniform martensitic structure and carbides dispersed on a fine ferritic matrix (Figure 29). The steel after the process treatment of the present disclosure has a microstructure that is characterized in that ferritic, martensitic grain structure and carbide are very fine and evenly distributed in the matrix, which is very beneficial to the improvement of the strength and plasticity of the material.

The A steel after traditional process treatment (Figure 30) has a typical dual-phase steel structure. The steel obtained by the traditional process treatment has a microstructure comprising coarse grains and a certain amount of banded structure, with martensite and carbide distributed in a network along the ferrite grain boundaries, wherein the distribution of dual-phase structure of ferrite and martensite is uneven.

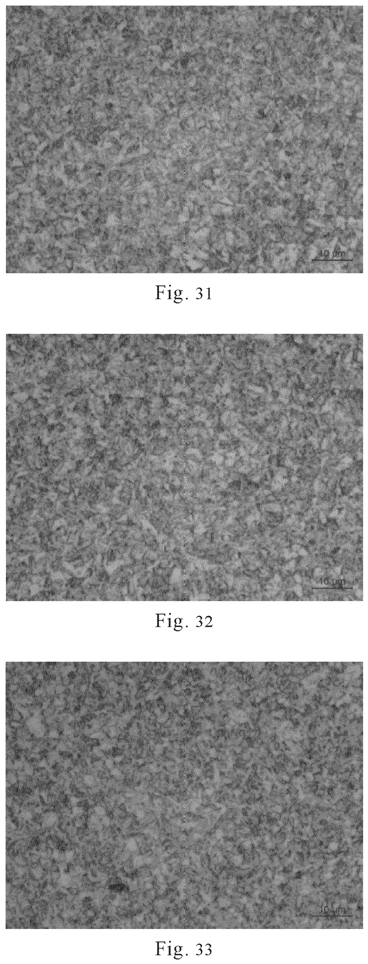

Figure 31 is a structure photo of I steel having a typical composition obtained by Example 17 (GA), and Figure 32 is a structure photo of D steel having a typical composition obtained by Example 22 (GI). Figure 33 is a structure photo of I steel having a typical composition obtained by Example 34 (GA). Examples 17, 22, 34 all adopt processes with short heat treatment cycles. It can be seen from the figures that the hot-dip galvanizing process by rapid heat treatment of the present disclosure can also provide a very uniform, fine, dispersed distribution of each phase structure after alloying (Figure 31), while Traditional process 9 provides coarse ferritic structure with a small amount of martensitic structure distributed on the ferrite grain boundary, which is a typical hot-dip galvanized dual-phase steel structure. The manufacturing process of the hot-galvanized dual-phase steel of the present disclosure can refine grains, and make the structure of each phase of the material evenly distributed in the matrix, thereby improving the material structure and the material properties.

Table 26 (unit: mass percentage)

| Test steel | C | Si | Mn | Cr | Ti | Nb | B | Mo | V | P | S | Al |
|---|---|---|---|---|---|---|---|---|---|---|---|---|
| A | 0.101 | 0.652 | 2.65 | 0.331 | 0.0219 | 0.0431 | 0.0025 | / | / | 0.0195 | 0.0050 | 0.0317 |
| B | 0.121 | 0.531 | 2.80 | 0.300 | 0.0303 | 0.0398 | 0.0020 | / | / | 0.0099 | 0.0043 | 0.0453 |
| C | 0.133 | 0.700 | 2.72 | 0.410 | 0.0325 | 0.0455 | 0.0036 | / | / | 0.0096 | 0.0037 | 0.0235 |
| D | 0.170 | 0.421 | 2.41 | 0.521 | 0.0658 | 0.0332 | 0.0027 | / | / | 0.0075 | 0.0021 | 0.0256 |
| E | 0.155 | 0.243 | 1.81 | 0.553 | 0.0700 | 0.0305 | 0.0043 | 0.13 | / | 0.0066 | 0.0034 | 0.0319 |
| F | 0.168 | 0.353 | 2.13 | 0.452 | 0.0401 | 0.0255 | 0.0029 | 0.14 | 0.0411 | 0.0116 | 0.0024 | 0.0323 |
| G | 0.112 | 0.258 | 1.967 | 0.481 | 0.0382 | 0.0673 | 0.0038 | 0.12 | / | 0.0061 | 0.0020 | 0.0294 |
| H | 0.129 | 0.421 | 2.44 | 0.621 | 0.0298 | 0.0661 | 0.0024 | / | / | 0.0099 | 0.0011 | 0.0200 |
| I | 0.141 | 0.265 | 2.61 | 0.505 | 0.0314 | 0.0356 | 0.0044 | / | 0.0315 | 0.0141 | 0.0007 | 0.0293 |
| J | 0.153 | 0.443 | 1.93 | 0.754 | 0.0500 | 0.0200 | 0.0035 | 0.11 | / | 0.0077 | 0.0032 | 0.0437 |
| K | 0.126 | 0.278 | 2.12 | 0.667 | 0.0309 | 0.0464 | 0.0050 | / | / | 0.0087 | 0.0027 | 0.0377 |
| L | 0.125 | 0.335 | 2.58 | 0.900 | 0.0327 | 0.0453 | 0.0035 | / | / | 0.0100 | 0.0042 | 0.0323 |
| M | 0.132 | 0.451 | 2.21 | 0.676 | 0.0356 | 0.0235 | 0.0028 | 0.13 | 0.0225 | 0.0100 | 0.0031 | 0.0397 |
| N | 0.147 | 0.501 | 1.812 | 0.573 | 0.0451 | 0.0345 | 0.0044 | 0.14 | / | 0.0074 | 0.0025 | 0.0299 |
| O | 0.115 | 0.601 | 2.24 | 0.838 | 0.0308 | 0.0682 | 0.0042 | / | / | 0.0062 | 0.0012 | 0.0285 |
| P | 0.124 | 0.265 | 2.32 | 0.822 | 0.0323 | 0.0471 | 0.0037 | / | 0.055 | 0.0067 | 0.0033 | 0.0396 |
| Q | 0.127 | 0.205 | 2.52 | 0.784 | 0.0331 | 0.0700 | 0.0025 | / | / | 0.0086 | 0.0017 | 0.0476 |
| R | 0.135 | 0.268 | 2.43 | 0.588 | 0.0314 | 0.0540 | 0.0048 | / | 0.0332 | 0.0061 | 0.0013 | 0.0500 |
| S | 0.132 | 0.315 | 2.65 | 0.764 | 0.0327 | 0.0574 | 0.0034 | / | 0.0343 | 0.0056 | 0.0014 | 0.029 |

Table 27

| | Hot roll-ing coil-ing tem-per ature °C | Cold rolling reducti on rate % | Rapid heat treatment (one stage) | | | | | | | | | | | | Final cooling rate °C/s | Total time of rapid heat treatment and hot-dip galvanizing s |
| | | | Rapid heating rate (one stage) °C/s | Soaking | | Slow cooling | | Rapid cooling | | Hot-dip galvani zing tem-pera ture °C | Alloying | | | | |
| | | | | Soaking temperat ure °C | Soaki ng time s | Cooling rate °C/s | Temperat ure after cooling °C | Cooling rate °C/s | Temperat ure after cooling °C | | Heating rate °C/s | Tempera ure °C | Time s | | |
|---|---|---|---|---|---|---|---|---|---|---|---|---|---|---|---|
| Ex. 1 | 680 | 40 | 50 | 750 | 60 | 15 | 670 | 50 | 460 | 460 | / | / | / | 100 | 88.53 |
| Ex.2 | 650 | 85 | 80 | 770 | 50 | 13 | 690 | 60 | 465 | 465 | / | / | / | 80 | 74.84 |
| Ex.3 | 610 | 70 | 150 | 790 | 40 | 11 | 700 | 80 | 470 | 470 | / | / | / | 75 | 62.19 |
| Ex.4 | 580 | 60 | 300 | 800 | 30 | 9 | 730 | 100 | 466 | 466 | / | / | / | 60 | 50.45 |
| Ex.5 | 550 | 65 | 500 | 840 | 10 | 15 | 770 | 120 | 467 | 467 | / | / | / | 50 | 29.58 |
| Ex.6 | 590 | 45 | 250 | 845 | 20 | 5 | 750 | 150 | 461 | 461 | / | / | / | 30 | 58.93 |
| Ex.7 | 640 | 55 | 350 | 795 | 55 | 12 | 695 | 140 | 468 | 468 | / | / | / | 140 | 70.37 |
| Ex.8 | 590 | 63 | 400 | 790 | 45 | 8 | 670 | 130 | 469 | 469 | / | / | / | 150 | 66.46 |
| Ex.9 | 570 | 55 | 230 | 815 | 35 | 10 | 675 | 100 | 460 | 460 | / | / | / | 120 | 58.27 |
| Ex.10 | 560 | 75 | 100 | 830 | 25 | 14 | 710 | 200 | 470 | 470 | / | / | / | 100 | 48.39 |
| Ex.11 | 600 | 72 | 180 | 820 | 30 | 7 | 675 | 170 | 465 | 465 | / | / | / | 130 | 61.36 |
| Ex.12 | 550 | 50 | 200 | 835 | 20 | 6 | 720 | 180 | 470 | 470 | / | / | / | 150 | 49.11 |
| Ex.13 | 680 | 40 | 50 | 750 | 60 | 15 | 670 | 50 | 460 | 460 | 30 | 480 | 20 | 30 | 122.93 |
| Ex.14 | 650 | 85 | 80 | 770 | 50 | 13 | 690 | 60 | 465 | 465 | 50 | 490 | 17 | 60 | 95.36 |
| Ex.15 | 610 | 70 | 150 | 790 | 40 | 11 | 710 | 80 | 470 | 470 | 100 | 510 | 15 | 90 | 76.25 |
| Ex.16 | 580 | 60 | 300 | 820 | 30 | 9 | 730 | 100 | 466 | 466 | 150 | 530 | 12 | 150 | 61.13 |
| Ex.17 | 550 | 65 | 500 | 845 | 10 | 6 | 770 | 120 | 467 | 467 | 200 | 550 | 10 | 250 | 39.21 |
| Traditional process 1 | 680 | 80 | 11 | 770 | 160 | 10 | 675 | 100 | 470 | 470 | / | / | / | 30 | 254.05 |
| Traditional process 2 | 650 | 76 | 10 | 790 | 130 | 9 | 675 | 80 | 465 | 465 | / | / | / | 60 | 229.82 |

EP 4 317 515 A1

54

(continued)

| | Hot rolling coiling temperature °C | Cold rolling reduction rate % | Rapid heating rate (one stage) °C/s | Rapid heat treatment (one stage) | | | | | | | | | | | Final cooling rate °C/s | Total time of rapid heat treatment and hot-dip galvanizing s |
| | | | | Soaking | | Slow cooling | | Rapid cooling | | Hot-dip galvanizing temperature °C | Alloying | | | | |
| | | | | Soaking temperature °C | Soaking time s | Cooling rate °C/s | Temperature after cooling °C | Cooling rate °C/s | Temperature after cooling °C | | Heating rate °C/s | Temperature °C | Time s | | |
|---|---|---|---|---|---|---|---|---|---|---|---|---|---|---|---|
| Traditional process 3 | 610 | 70 | 11 | 810 | 110 | 10 | 675 | 75 | 460 | 460 | / | / | / | 90 | 203.07 |
| Traditional process 4 | 580 | 65 | 13 | 830 | 90 | 8 | 675 | 60 | 470 | 470 | / | / | / | 120 | 178.85 |
| Traditional process 5 | 550 | 60 | 15 | 845 | 70 | 12 | 675 | 50 | 470 | 470 | / | / | / | 150 | 146.27 |
| Traditional process 6 | 680 | 80 | 12 | 770 | 160 | 10 | 675 | 100 | 470 | 470 | 12 | 480 | 20 | 30 | 270.22 |
| Traditional process 7 | 650 | 76 | 14 | 790 | 130 | 9 | 675 | 80 | 465 | 465 | 16 | 490 | 17 | 60 | 226.80 |
| Traditional process 8 | 610 | 70 | 10 | 810 | 110 | 10 | 675 | 75 | 460 | 460 | 10 | 510 | 15 | 90 | 230.81 |
| Traditional process 9 | 580 | 65 | 11 | 830 | 90 | 8 | 675 | 60 | 470 | 470 | 20 | 530 | 12 | 120 | 205.68 |
| Traditional process 10 | 550 | 60 | 15 | 845 | 70 | 12 | 675 | 50 | 470 | 470 | 25 | 550 | 10 | 150 | 160.00 |

Table 28

| | Hot-rolling coiling temperature °C | Cold rolling reduction rate % | Rapid heating (two stage) | | | Soaking | | Slow cooling | | Rapid cooling | | Hot-dip galvanizing temperature °C | Alloying | | | Final cooling rate °C/s | Total time of rapid heat treatment and hot-dip galvanizing s |
|---|---|---|---|---|---|---|---|---|---|---|---|---|---|---|---|---|---|
| | | | Heating rate in the first stage °C/s | Temperature after heating in the first stage °C | Heating rate in the second stage °C/s | Soaking temperature °C | Soaking time a | Cooling rate °C/s | Temperature after cooling °C | Cooling rate °C/s | Temperature after cooling °C | | Heating rate °C/s | Temperature °C | Time s | | |
| Ex. 18 | 680 | 40 | 15 | 550 | 500 | 750 | 60 | 15 | 670 | 50 | 460 | 460 | / | / | / | 100 | 109.67 |
| Ex. 19 | 650 | 85 | 30 | 570 | 300 | 770 | 50 | 13 | 690 | 60 | 465 | 465 | / | / | / | 80 | 84.47 |
| Ex.20 | 610 | 70 | 80 | 600 | 150 | 790 | 40 | 11 | 700 | 80 | 470 | 470 | / | / | / | 75 | 65.57 |
| Ex.21 | 580 | 60 | 150 | 630 | 80 | 800 | 30 | 9 | 730 | 100 | 466 | 466 | / | / | / | 60 | 54.04 |
| Ex.22 | 550 | 65 | 300 | 640 | 50 | 840 | 10 | 15 | 770 | 120 | 467 | 467 | / | / | / | 50 | 32.20 |
| Ex.23 | 590 | 45 | 500 | 650 | 30 | 845 | 20 | 5 | 750 | 150 | 461 | 461 | / | / | / | 30 | 63.39 |
| Ex. 24 | 640 | 55 | 250 | 647 | 200 | 795 | 55 | 12 | 695 | 140 | 468 | 468 | / | / | / | 140 | 71.40 |
| Ex.25 | 590 | 63 | 350 | 635 | 450 | 790 | 45 | 8 | 670 | 130 | 469 | 469 | / | / | / | 150 | 66.64 |
| Ex.26 | 570 | 55 | 400 | 640 | 350 | 815 | 35 | 10 | 675 | 100 | 460 | 460 | / | / | / | 120 | 56.87 |
| Ex.27 | 560 | 75 | 250 | 620 | 250 | 830 | 25 | 14 | 710 | 200 | 470 | 470 | / | / | / | 100 | 43.01 |
| Ex.28 | 600 | 72 | 100 | 580 | 150 | 820 | 30 | 7 | 675 | 170 | 465 | 465 | / | / | / | 130 | 63.60 |
| Ex.29 | 550 | 50 | 200 | 610 | 200 | 835 | 20 | 6 | 720 | 180 | 470 | 470 | / | / | / | 150 | 48.23 |
| Ex.30 | 680 | 40 | 15 | 550 | 500 | 750 | 60 | 15 | 670 | 50 | 460 | 460 | 30 | 480 | 20 | 30 | 141.27 |
| Ex.31 | 650 | 85 | 30 | 570 | 300 | 770 | 50 | 13 | 690 | 60 | 465 | 465 | 50 | 490 | 17 | 60 | 104.24 |
| Ex.32 | 610 | 70 | 80 | 600 | 150 | 790 | 40 | 11 | 710 | 80 | 470 | 470 | 100 | 510 | 15 | 90 | 79.63 |
| Ex.33 | 580 | 60 | 150 | 630 | 80 | 820 | 30 | 9 | 730 | 100 | 466 | 466 | 150 | 530 | 12 | 150 | 64.91 |
| Ex.34 | 550 | 65 | 300 | 640 | 50 | 845 | 10 | 6 | 770 | 120 | 467 | 467 | 200 | 550 | 10 | 250 | 43.73 |
| Traditional process 11 | 680 | 80 | 11 | 150 | 8 | 770 | 160 | 10 | 675 | 100 | 470 | 470 | / | / | / | 30 | 275.87 |

| | Hot rolling coiling temperature °C | Cold rolling reduction rate % | Rapid heat treatment (two stage) | | | | | | | | | | | | | | Total time of rapid heat treatment and hot-dip galvanizing s |
|---|---|---|---|---|---|---|---|---|---|---|---|---|---|---|---|---|---|
| | | | Rapid heating (two stage) | | | Soaking | | Slow cooling | | Rapid cooling | | Hot-dip galvanizing temperature °C | Alloying | | | Final cooling rate °C/s | |
| | | | Heating rate in the first stage °C/s | Temperature after heating in the first stage °C | Heating rate in the second stage °C/s | Soaking temperature °C | Soaking time a | Cooling rate °C/s | Temperature after cooling °C | Cooling rate °C/s | Temperature after cooling °C | | Heating rate °C/s | Temperature °C | Time s | | |
| Traditional process 12 | 650 | 76 | 10 | 150 | 7 | 790 | 130 | 9 | 675 | 80 | 465 | 465 | / | / | / | 60 | 257.25 |
| Traditional process 13 | 610 | 70 | 11 | 180 | 6 | 810 | 110 | 10 | 675 | 75 | 460 | 460 | / | / | / | 90 | 250.80 |
| Traditional process 14 | 580 | 65 | 13 | 210 | 5 | 830 | 90 | 8 | 675 | 60 | 470 | 470 | / | / | / | 120 | 255.16 |
| Traditional process 15 | 550 | 60 | 15 | 250 | 5 | 845 | 70 | 12 | 675 | 50 | 470 | 470 | / | / | / | 150 | 225.60 |
| Traditional process 16 | 680 | 80 | 11 | 150 | 8 | 770 | 160 | 10 | 675 | 100 | 470 | 470 | 12 | 480 | 20 | 30 | 297.03 |
| Traditional process 17 | 650 | 76 | 10 | 150 | 7 | 790 | 130 | 9 | 675 | 80 | 465 | 465 | 16 | 490 | 17 | 60 | 276.23 |
| Traditional process 18 | 610 | 70 | 11 | 180 | 6 | 810 | 110 | 10 | 675 | 75 | 460 | 460 | 10 | 510 | 15 | 90 | 271.36 |
| Traditional process 19 | 580 | 65 | 13 | 210 | 5 | 830 | 90 | 8 | 675 | 60 | 470 | 470 | 20 | 530 | 12 | 120 | 270.66 |
| Traditional process 20 | 550 | 60 | 15 | 250 | 5 | 845 | 70 | 12 | 675 | 50 | 470 | 470 | 25 | 550 | 10 | 150 | 239.33 |

EP 4 317 515 A1

Table 29

| No. | Test steel | Type of the product | Main process parameters (Rapid heating-one stage) | Yield strength MPa | Tensile strength MPa | Elongation % | Product of strength and elongation MPa% |
|---|---|---|---|---|---|---|---|
| 1 | A | Hot dip galvanized GI | Traditional process 1 | 865 | 1257 | 8.3 | 10433.1 |
| 2 | A | | Ex.1 | 963 | 1282 | 8.8 | 11281.6 |
| 3 | B | | Traditional process 2 | 894 | 1265 | 7.9 | 9993.5 |
| 4 | B | | Ex.2 | 978 | 1419 | 7.97 | 11309.43 |
| 5 | C | | Traditional process 3 | 923 | 1265 | 8.7 | 11005.5 |
| 6 | C | | Ex.3 | 984 | 1415 | 7.87 | 11136.05 |
| 7 | D | | Traditional process 4 | 893 | 1275 | 7.5 | 9562.5 |
| 8 | D | | Ex.4 | 998 | 1368 | 7.9 | 10807.2 |
| 9 | E | | Traditional process 5 | 864 | 1246 | 7.7 | 9594.2 |
| 10 | E | | Ex.5 | 982 | 1328 | 8.2 | 10889.6 |
| 11 | N | | Ex.6 | 996 | 1435 | 7.77 | 11149.95 |
| 12 | F | | Ex.7 | 1050 | 1341 | 8.2 | 10996.2 |
| 13 | K | | Ex.8 | 989 | 1443 | 7.97 | 11500.71 |
| 14 | R | | Ex.9 | 1041 | 1378 | 8.3 | 11437.4 |
| 15 | G | | Ex.10 | 1018 | 1319 | 7.7 | 10156.3 |
| 16 | P | | Ex.11 | 1068 | 1407 | 7.95 | 11185.65 |
| 17 | S | | Ex.12 | 1080 | 1401 | 8.3 | 11628.3 |
| 18 | O | Alloy galvannealed GA | Ex.13 | 1090 | 1383 | 7.3 | 10095.9 |
| 19 | O | | Traditional process 6 | 914 | 1272 | 7.1 | 9031.2 |
| 20 | L | | Ex.14 | 1069 | 1358 | 8.5 | 11543 |
| 21 | L | | Traditional process 7 | 902 | 1260 | 7.4 | 9324 |
| 22 | H | | Ex.15 | 1109 | 1422 | 8.1 | 11518.2 |
| 23 | H | | Traditional process 8 | 907 | 1279 | 7.3 | 9336.7 |
| 24 | Q | | Ex.16 | 1006 | 1317 | 8.8 | 11589.6 |
| 25 | Q | | Traditional process 9 | 893 | 1253 | 8.4 | 10525.2 |
| 26 | I | | Ex.17 | 1031 | 1388 | 8.5 | 11798 |
| 27 | J | | Traditional process 10 | 898 | 1261 | 8.4 | 10592.4 |

Table 30

| No. | Test steel | Type pf the product | Main process parameters (Rapid heating-two stage) | Yield strength MPa | Tensile strength MPa | Elongation % | Product of strength and elongation MPa% |
|---|---|---|---|---|---|---|---|
| 1 | A | Hot dip galvanized GI | Traditional process 11 | 892 | 1260 | 8.5 | 10710 |
| 2 | A | | Ex. 19 | 975 | 1355 | 8.6 | 11653 |
| 3 | B | | Traditional process 12 | 817 | 1266 | 8.6 | 10887.6 |
| 4 | B | | Ex.20 | 976 | 1441 | 7.3 | 10519.3 |
| 5 | C | | Traditional process 13 | 819 | 1272 | 9.2 | 11702.4 |
| 6 | C | | Ex.21 | 971 | 1321 | 7.6 | 10039.6 |
| 7 | D | | Traditional process 14 | 805 | 1260 | 8.7 | 10962 |
| 8 | D | | Ex.22 | 990 | 1371 | 8.3 | 11379.3 |
| 9 | E | | Traditional process 15 | 813 | 1241 | 8.9 | 11044.9 |
| 10 | E | | Ex.23 | 1093 | 1397 | 8.4 | 11734.8 |
| 11 | N | | Ex.18 | 1092 | 1377 | 7.6 | 10465.2 |
| 12 | F | | Ex.24 | 1040 | 1390 | 8.1 | 11259 |
| 13 | K | | Ex.25 | 1007 | 1326 | 7.8 | 10342.8 |
| 14 | R | | Ex. 26 | 1098 | 1381 | 8.1 | 11186.1 |
| 15 | G | | Ex.27 | 1093 | 1331 | 7.7 | 10248.7 |
| 16 | P | | Ex.28 | 1013 | 1388 | 8.1 | 11242.8 |
| 17 | S | | Ex.29 | 1038 | 1381 | 8.1 | 11186.1 |
| 18 | O | Alloy galvannealed GA | Ex.30 | 1094 | 1435 | 7.1 | 10188.5 |
| 19 | O | | Traditional process 16 | 839 | 1250 | 9.1 | 11375 |
| 20 | L | | Ex.31 | 1019 | 1326 | 7.9 | 10475.4 |
| 21 | L | | Traditional process 17 | 823 | 1275 | 8.9 | 11347.5 |
| 22 | H | | Ex. 32 | 1021 | 1317 | 8.1 | 10667.7 |
| 23 | H | | Traditional process 18 | 806 | 1270 | 8.6 | 10922 |
| 24 | Q | | Ex.33 | 1094 | 1333 | 8.1 | 10797.3 |
| 25 | Q | | Traditional process 19 | 817 | 1302 | 6.8 | 8853.6 |
| 26 | I | | Ex.34 | 1085 | 1331 | 8.2 | 10914.2 |
| 27 | J | | Traditional process 20 | 858 | 1254 | 8.8 | 11035.2 |

The present disclosure modifies the traditional continuous annealing hot-dip plating unit by using rapid heating and rapid cooling process to realize the rapid heat treatment hot-dip galvanizing process, which can greatly shorten the length of the heating section and soaking section of the traditional continuous annealing hot-dip galvanizing furnace, improve the production efficiency of the traditional continuous annealing hot-dip galvanizing unit, reduce production costs and energy consumption, and reduce the number of rollers in the continuous annealing hot-dip galvanizing furnace. This can improve the quality control ability of strip steel surface to obtain strip steel products with high surface quality. At the same time, through the establishment of a new continuous annealing hot-dip galvanizing unit using the rapid heat treatment hot-dip galvanizing process technology, it can provide short and compact unit, flexible product specifications and varieties, and strong regulation ability. For materials, strip steel grains can be refined to further improve material strength, reduce alloy cost and manufacturing difficulty in the process before- heat treatment, and improve the use performance of materials such as forming and welding.

In summary, the present disclosure has greatly promoted the technological progress of continuous annealing hot-dip galvanizing process of cold-rolled strip steel by adopting the rapid heat treatment hot-dip galvanizing process. The austenitization of cold-rolled strip steel from room temperature to the final completion can be expected to be completed in more than ten seconds or even a few seconds, which greatly shortens the length of the heating section of the continuous annealing hot-dip galvanizing furnace. It is convenient to improve the speed and production efficiency of the continuous annealing hot-dip galvanizing unit, and significantly reduces the number of rolls in the furnace of the continuous annealing hot-dip galvanizing unit. For the rapid heat treatment hot-dip galvanizing production line with a unit speed of about 180 m/min, the number of rollers in the high-temperature furnace section does not exceed 10, which can significantly improve the quality of the strip steel surface. At the same time, the rapid heat treatment hot-dip galvanizing process can complete the recrystallization and austenitization in a very short time. It will also provide a more flexible microstructure design method of high-strength steel, so as to improve the material structure and the material properties without changing the alloy composition and pre-process conditions such as rolling process.

Advanced high-strength steel represented by dual-phase steel has broad application prospects. The rapid heat treatment hot-dip galvanizing technology has great development value. Their combination will surely provide more space for the development and production of hot-dip galvanized dual-phase steel.

**Claims**

1. A dual-phase steel having a tensile strength of ≥ 980MPa or a hot-galvanized dual-phase steel having a tensile strength of ≥ 980MPa, which comprises the following chemical components in mass percentages: C: 0.05~0.17%, Si: 0.1~0.7%, Mn: 1.4~2.8%, P≤0.020%, S≤0.005%, B≤0.005%, Al: 0.02~0.055%, optionally two or more of Nb, Ti, Cr, Mo and V, and Cr+Mo+Ti+Nb+V≤1.1%, with a balance of Fe and other unavoidable impurities;

   preferably, in the dual-phase steel or the hot-galvanized dual-phase steel, the content of C is selected from the group consisting of 0.05~0.12%, 0.05~0.10% and 0.10~0.17%;
   preferably, in the dual-phase steel or the hot-galvanized dual-phase steel, the content of Si is 0.1~0.5% or 0.2~0.7%;
   preferably, in the dual-phase steel or the hot-galvanized dual-phase steel, the content of Mn is selected from the group consisting of 1.4~2.2%, 1.6~2.5% and 1.8~2.8%;
   preferably, the dual-phase steel or the hot-galvanized dual-phase steel comprises 0.002~0.005% of B;
   preferably, the dual-phase steel or the hot-galvanized dual-phase steel comprises 0.02~0.05% of Al;
   preferably, in the dual-phase steel or the hot-galvanized dual-phase steel, Cr+Mo+Ti+Nb+V≤0.5%.

2. The dual-phase steel or hot-galvanized dual-phase steel according to claim 1, wherein the content of Ti, Nb, Cr, Mo and V is as follows:

   Ti≤0.07% or ≤0.05%;
   Nb≤0.07% or ≤0.04%;
   Cr≤0.9%, such as ≤0.6% or ≤0.4%;
   Mo≤0.4%, such as ≤0.15%;
   V≤0.05%.

3. The dual-phase steel or hot-galvanized dual-phase steel according to claim 1 or 2, wherein the dual-phase steel has a yield strength of ≥ 590MPa, a tensile strength of ≥ 980MPa, an elongation of ≥ 7.5%, and a product of strength and elongation of ≥ 9.0GPa%, preferably, the dual-phase steel has a microstructure of a uniformly distributed ferrite and martensitic dual-phase structure having an average grain size of 1~5μm;
   wherein the hot-galvanized dual-phase steel has a yield strength of ≥ 540MPa, a tensile strength of ≥ 980MPa, an elongation of ≥ 7.0%, and a product of strength and elongation of ≥ 10.0GPa%; preferably, the hot-galvanized dual-phase steel has a microstructure of a uniformly distributed ferrite and martensitic dual-phase structure having an average grain size of 1~3μm.

4. The dual-phase steel or hot-galvanized dual-phase steel according to any of claims 1-3, wherein the dual-phase steel comprises the following chemical components in mass percentages: C: 0.05~0.12%, Si: 0.1~0.5%, Mn: 1.4~2.2%, Nb: 0.02~0.04%, Ti: 0.03~0.05%, P≤0.015%, S≤0.003%, Al: 0.02~0.05%, optionally one or two of Cr, Mo and V, and Cr+Mo+Ti+Nb+V≤0.5%; preferably, the content of C is 0.055~0.110%; preferably, the content of Si is 0.15~0.45%; preferably, the content of Mn is 1.6~2.0%; preferably, the dual-phase steel has a yield strength of 590~750MPa, such as 598~749MPa, a tensile strength of 980~1000MPa, such as 1030~1090MPa, an elongation of 10.0~17.0%, such as 10.6~16.6%, a product of strength and elongation of 10.5~18.0GPa%, such as 10.9~17.4GPa%, and a strain hardening index n90 value greater than 0.21; or

the dual-phase steel has a yield strength of ≥ 1180MPa, wherein it comprises the following chemical components in mass percentages: C: 0.05~0.10%, Si: 0.1~0.5%, Mn: 1.6~2.5%, Cr: 0.2~0.6%, Mo: 0.1~0.4%, Ti: 0.01~0.05%, P≤0.015%, S≤0.003%, Al: 0.02~0.05%, optionally one or two of Nb and V, and Cr+Mo+Ti+Nb+V≤0.5%, with a balance of Fe and other unavoidable impurities; preferably, the content of C is 0.07~0.10%; preferably, the content of Si is 0.1~0.4%; preferably, the content of Mn is 1.8~2.3%; preferably, the content of Cr is 0.25~0.35%; preferably, the content of Mo is 0.15~0.25%; preferably, the dual-phase steel has a yield strength of 710~920MPa, such as 714-919 MPa, a tensile strength of 1180-1300 MPa, such as 1188-1296 MPa, an elongation of 10.0~13.0%, such as 10.4~12.8%, a product of strength and elongation of 12~16 GPa%; or

wherein the dual-phase steel has a yield strength of ≥1260MPa, preferably comprises the following chemical components in mass percentages: C: 0.10~0.17%, Si: 0.2~0.7%, Mn: 1.8~2.8%, Cr: 0.3~0.9%, Nb: 0.02~0.07%, Ti: 0.02~0.07%, B: 0.002~0.005%, P≤0.02%, S≤0.005%, Al: 0.02~0.05%; optionally one or two of Mo and V, and Cr+Mo+Ti+Nb+V≤1.1%, with a balance of Fe and other unavoidable impurities; preferably, the content of C is 0.055~0.110%; preferably, the content of Si is 0.15~0.45%; preferably, the content of Mn is 1.6~2.0%; preferably, the content of Cr is 0.5~0.7%; preferably, the content of Ti is 0.02~0.05%; preferably, the content of Nb is 0.02~0.05%; preferably, the dual-phase steel has a yield strength of 900-1120 MPa, such as 902-1114 MPa, a tensile strength of 1260-1450 MPa, such as 1264-1443 MPa, an elongation of 7.0~10.0%, such as 7.0~9.8%%, a product of strength and elongation of 9.0-12.5 GPa%, such as 9.5~12.1GPa%.

5. The dual-phase steel or hot-galvanized dual-phase steel according to any of claims 1-4, wherein the dual phase steel is obtained by the following process:

1) Smelting, casting
wherein the above components are subjected to smelting and casting to form a slab;
2) Hot rolling, coiling
wherein a hot rolling finishing temperature is ≥$A_{r3}$; and a coiling temperature is 550~680°C;
3) Cold rolling
wherein a cold rolling reduction rate is 40-85%;
4) Rapid heat treatment

wherein the steel plate after cold rolling is rapidly heated to 750~845°C, wherein the rapid heating is performed in one stage or two stages; when the rapid heating is performed in one stage, a heating rate is 50-500 °C/s; when the rapid heating is performed in two stages, the steel plate is heated in the first stage from room temperature to 550~650°C at a heating rate of 15~500°C/s, heated in the second stage from 550~650°C to 750~845°C at a heating rate of 30~500°C/s (such as 50~500°C/s); then soaked at a soaking temperature of 750-845 °C for a soaking time of 10~60s;
wherein after soaking, the steel plate is slowly cooled to 670-770 °C at a cooling rate of 5~15°C/s, then rapidly cooled from 670-770 °C to room temperature at a cooling rate of 50~200°C/s;
or the steel plate is rapidly cooled from 670-770 °C to 230~280°C at a cooling rate of 50~200°C/s, and over-aged in the temperature range, wherein an over-ageing treating time is less than or equal to 200s, such as less than or equal to 175s; and finally cooled to room temperature at a cooling rate of 30~50°C/s; preferably, in step 4), the rapid heating is performed in two stages, wherein the strip steel or steel plate is heated in the first stage from room temperature to 550~650°C at a heating rate of 15~300°C/s, heated in the second stage from 550~650°C to 750~845°C at a heating rate of 50~300°C/s.

6. The dual-phase steel or hot-galvanized dual-phase steel according to claim 5, wherein the process has one or more of the following features:

in step 2), the coiling temperature is 580~650°C;
in step 3), the cold rolling reduction rate is 60-80%;
in step 4), a total time of the rapid heat treatment is 41~297s, such as 41~295s;
in step 4), when the rapid heating is performed in one stage, the heating rate is 50~300°C/s;
in step 4), the rapid heating is performed in two stages, wherein the strip steel or steel plate is heated in the first stage from room temperature to 550~650°C at a heating rate of 15~300°C/s, heated in the second stage from 550~650°C to 750~845°C at a heating rate of 50~300°C/s; preferably, the steel plate is heated in the first stage from room temperature to 550~650°C at a heating rate of 50~300°C/s, heated in the second stage from 550~650°C to 750~845°C at a heating rate of 80~300°C/s;

in step 4), the soaking time is 10~40s;
in step 4), the rapid cooling rate is 50~150°C/s;
the over ageing time is 20-200s or 20~175s.

**7.** The dual-phase steel or hot-galvanized dual-phase steel according to claim 5 or 6, wherein the dual-phase steel is slowly cooled to 670~770°C at a cooling rate of 5~15°C/s after soaking, then rapidly cooled to 460~470°C at a cooling rate of 50~150°C/s, and immersed in a zinc pot for hot galvanizing, thereby obtaining the hot-galvanized dual-phase steel.

**8.** The dual-phase steel or hot-galvanized dual-phase steel according to any of claims 1-3 and 7, wherein the hot-galvanized dual-phase steel comprises the following chemical components in mass percentages: C: 0.05~0.12%, Si: 0.1~0.5%, Mn: 1.4~2.2%, Nb: 0.02~0.04%, Ti: 0.03~0.05%, P≤0.015%, S≤0.003%, Al: 0.02~0.055%, optionally one or two of Cr, Mo and V, and Cr+Mo+Ti+Nb+V≤0.5%, with a balance of Fe and other unavoidable impurities; preferably, the content of C is 0.05~0.10%; preferably, the content of Si is 0.15~0.45%; preferably, the content of Mn is 1.6~2.0%; preferably, Cr is ≤0.4%; preferably, Mo is ≤0.15%; preferably, V is ≤0.05%; preferably, the hot-galvanized dual-phase steel has a yield strength of 540~710MPa, such as 543~709MPa, a tensile strength of 980~1100MPa, such as 989~1108MPa, an elongation of 11.0~15.5%, such as 11.9~15.2%, a product of strength and elongation of 12.0~15.5GPa%, such as 12.2~15.2GPa%; or

the hot-galvanized dual-phase steel has a yield strength of ≥ 1180MPa, preferably comprises the following chemical components in mass percentages: C: 0.05~0.10%, Si: 0.15~0.45%, Mn: 2.0~2.5%, Nb: 0.02~0.04%, Ti: 0.02~0.04%, Cr: 0.3~0.6%, Mo: 0.2~0.4%, P≤0.015%, S≤0.005%, Al: 0.02~0.05%, with a balance of Fe and other unavoidable impurities; preferably, the content of C is 0.07~0.10%; preferably, the content of Si is 0.25~0.35%; preferably, the content of Mn is 2.2%~2.35%; preferably, the content of Cr is 0.35%~0.50%; preferably, the content of Mo is 0.25%~0.35%; preferably, the hot-galvanized dual-phase steel has a yield strength of 660~860MPa, such as 665~854MPa, a tensile strength of 1180-1290 MPa, such as 1182-1285 MPa, an elongation of 11.0~13.0%, such as 11.5~12.8%, a product of strength and elongation of 13.0~15.5GPa%, such as 13.6~15.2GPa%; or

the hot-galvanized dual-phase steel has a tensile strength of ≥1280MPa, preferably comprises the following chemical components in mass percentages: C: 0.10~0.17%, Si: 0.2~0.7%, Mn: 1.8~2.8%, Cr: 0.3~0.9%, Nb: 0.02~0.07%, Ti: 0.02~0.07%, B: 0.002~0.005%, P≤0.02%, S≤0.005%, Al: 0.02~0.05%, optionally one or two of Mo and V, and Cr+Mo+Ti+Nb+V≤1.1%, with a balance of Fe and other unavoidable impurities; preferably, the content of C is 0.10~0.15%; preferably, the content of Si is 0.2~0.5%; preferably, the content of Mn is 2.0~2.6%; preferably, the content of Cr is 0.5%~0.7%; preferably, the content of Ti is 0.02%~0.05%; preferably, the content of Nb is 0.02%~0.05%; preferably, Mo is ≤0.15%; preferably, V is ≤0.055%; preferably, the hot-galvanized dual-phase steel has a yield strength of 960~1110MPa, such as 963-1109 MPa, a tensile strength of 1280~1450MPa, such as 1282-1443 MPa, an elongation of 7.0~9.0%, such as 7.1~8.8%, a product of strength and elongation of 10.0~12.0GPa%, such as 10.0~11.8GPa%.

**9.** The dual-phase steel or hot-galvanized dual-phase steel according to any of claims 1-3, 7 and 8, wherein the hot-galvanized dual phase steel is obtained by the following process:

A) Smelting, casting
wherein the above components are subjected to smelting and casting to form a slab;
B) Hot rolling, coiling
wherein a hot rolling finishing temperature is ≥A$_{r3}$; and a coiling temperature is 550~680°C;
C) Cold rolling
wherein a cold rolling reduction rate is 40-85%;
D) Rapid heat treatment, hot-galvanizing

wherein the steel plate after cold rolling is rapidly heated to 750~845°C, wherein the rapid heating is performed in one stage or two stages; when the rapid heating is performed in one stage, a heating rate is 50-500 °C/s; when the rapid heating is performed in two stages, the steel plate is heated in the first stage from room temperature to 550~650°C at a heating rate of 15~500°C/s, heated in the second stage from 550~650°C to 750~845°C at a heating rate of 30~500°C/s (such as 50~500°C/s); then soaked at a soaking temperature of 750~845 °C for a soaking time of 10~60s;
wherein after soaking, the steel plate is slowly cooled to 670-770 °C at a cooling rate of 5~15°C/s, then rapidly cooled to 460~470°C at a cooling rate of 50~150°C/s, and immersed in a zinc pot for hot galvanizing;

wherein after hot galvanizing, the steel plate is rapidly cooled to room temperature at a cooling rate of 30-150°C/s to obtain a hot dip galvanized GI product; or

after hot galvanizing, the steel plate is heated to 480~550°C at a heating rate of 30~200°C/s and alloyed for 10-20s; after alloying, the steel plate is rapidly cooled to room temperature at a cooling rate of 30~250°C/s to obtain an alloy galvannealed GA product.

10. The dual-phase steel or hot-galvanized dual-phase steel according to claim 9, wherein the process has one or more of the following features:

a total time of the rapid heat treatment and hot-galvanizing of step D) is 30~142s;

in step B), the coiling temperature is 580~650°C;

in step C), the cold rolling reduction rate is 60-80%;

in step D), when the rapid heating is performed in one stage, the heating rate is 50~300°C/s;

in step D), the rapid heating is performed in two stages, wherein the steel plate is heated in the first stage from room temperature to 550~650°C at a heating rate of 15~300°C/s, heated in the second stage from 550~650°C to 750~845°C at a heating rate of 50~300°C/s; preferably, the strip steel or steel plate is heated in the first stage from room temperature to 550~650°C at a heating rate of 30~300°C/s, heated in the second stage from 550~650°C to 750~845°C at a heating rate of 80~300°C/s;

in step D), the final temperature after rapid heating is 790~845°C or 790~830°C;

in the soaking process of step D), after the steel plate is heated to the target temperature of dual phase region of austenite and ferrite, the temperature is kept unchanged for soaking;

in the soaking process of step D), the steel plate is slightly heated up or cooled down in the soaking time, wherein the temperature after heating is no more than 845°C and the temperature after cooling is no less than 750°C; the soaking time is 10~40s;

in step D), the steel plate after alloying is rapidly cooled to room temperature at a cooling rate of 30~200°C/s, thereby obtaining the alloy galvannealed GA product.

11. A manufacturing process by rapid heat treatment of the dual-phase steel having a biaxial tensile strength of ≥980MPa according to any of claims 1-4, which comprises the following steps:

1) Smelting, casting

wherein the above components are subjected to smelting and casting to form a slab;

2) hot rolling, coiling

wherein a hot rolling finishing temperature is $\geq A_{r3}$; and a coiling temperature is 550~680°C;

3) cold rolling

wherein a cold rolling reduction rate is 40~85%, thereby obtaining a rolled hard strip steel or steel plate;

4) Rapid heat treatment

a) Rapid heating

wherein the strip steel or steel plate after cold rolling is rapidly heated from room temperature to 750~845°C, which is the target temperature of the dual phase region of austenite and ferrite, wherein the rapid heating is performed in one stage or two stages; when the rapid heating is performed in one stage, a heating rate is 50-500 °C/s; when the rapid heating is performed in two stages, the steel plate is heated in the first stage from room temperature to 550~650°C at a heating rate of 15~500°C/s, heated in the second stage from 550~650°C to 750~845°C at a heating rate of 30~500°C/s (such as 50~500°C/s);

b) Soaking

wherein the strip steel or steel plate is soaked at a temperature of 750-845 °C, which is the target temperature of the dual phase region of austenite and ferrite, for a soaking time of 10~60s;

c) Cooling

wherein after soaking, the strip steel or steel plate is slowly cooled to 670-770 °C at a cooling rate of 5~15°C/s, then rapidly cooled from 670-770 °C to room temperature at a cooling rate of 50~200°C/s; or the strip steel or steel plate is rapidly cooled from 670-770 °C to 230~280°C at a cooling rate of 50~200°C/s for over-ageing treatment, wherein an over-ageing treating time is less than or equal to 200s, such as less than or equal to 175s; after over-ageing treatment, it is finally cooled to room temperature at a cooling rate of 30~50°C/s.

12. The process according to claim 11, which comprises one or more of the following features:

in step 4), a total time of the rapid heat treatment is 41~297s, such as 41~295s;

in step 2), the coiling temperature is 580~650°C;

in step 3), the cold rolling reduction rate is 60-80%;

in step 4), when the rapid heating is performed in one stage, the heating rate is 50~300°C/s;

in step 4), the rapid heating is performed in two stages, wherein the strip steel or steel plate is heated in the first stage from room temperature to 550~650°C at a heating rate of 15~300°C/s, and heated in the second stage from 550~650°C to 750~845°C at a heating rate of 50~300°C/s; preferably, the steel plate is heated in the first stage from room temperature to 550~650°C at a heating rate of 50~300°C/s, and heated in the second stage from 550~650°C to 750~845°C at a heating rate of 80~300°C/s;

in step 4), the final temperature after rapid heating is 790~845°C or 790~830°C;

in step 4), the strip steel or steel plate is rapidly cooled at a cooling rate of 50~150°C/s;

in the soaking process of step 4), after the strip steel or steel plate is heated to the target temperature of dual phase region of austenite and ferrite, the temperature is kept unchanged for soaking;

in the soaking process of step 4), the strip steel or steel plate is slightly heated up or cooled down in the soaking time, wherein the temperature after heating is no more than 845°C and the temperature after cooling is no less than 750°C;

in step 4), the soaking time is 10~40s;

the over ageing time is 20~200s or 20~175s.

13. The hot-galvanized manufacturing process by rapid heat treatment of the hot-galvanized dual-phase steel having a tensile strength of >980MPa according to any of claims 1-3 and 8, which comprises the following steps:

A) Smelting, casting

wherein the above components are subjected to smelting and casting to form a slab;

B) Hot rolling, coiling

wherein a hot rolling finishing temperature is ≥$A_{r3}$; and a coiling temperature is 550~680°C;

C) Cold rolling

wherein a cold rolling reduction rate is 40~85%, thereby obtaining a rolled hard strip steel or steel plate after cold rolling;

D) Rapid heat treatment, hot-galvanizing

a) Rapid heating

wherein the strip steel or steel plate after cold rolling is rapidly heated from room temperature to 750~845°C, which is the target temperature of the dual phase region of austenite and ferrite, wherein the rapid heating is performed in one stage or two stages;

when the rapid heating is performed in one stage, and the heating rate is 50-500 °C/s;

when the rapid heating is performed in two stages, the steel plate is heated in the first stage from room temperature to 550~650°C at a heating rate of 15~500°C/s, and heated in the second stage from 550~650°C to 750~845°C at a heating rate of 30~500°C/s (such as 50~500°C/s);

b) Soaking

wherein the strip steel or steel plate is soaked at a temperature of 750-845 °C, which is the target temperature of the dual phase region of austenite and ferrite, for a soaking time of 10~60s;

c) Cooling, hot-galvanizing

wherein after soaking, the strip steel or steel plate is slowly cooled to 670-770 °C at a cooling rate of 5~15°C/s, then rapidly cooled to 460~470°C at a cooling rate of 50~150°C/s and immersed in a zinc pot for hot galvanizing;

d) after hot galvanizing, the strip steel or steel plate is rapidly cooled to room temperature at a cooling rate of 50~150°C/s to obtain a hot dip galvanized GI product; or

after hot galvanizing, the strip steel orsteel plate is heated to 480~550°C at a heating rate of 30~200°C/s and alloyed for 10-20s; after alloying, the strip steel or steel plate is rapidly cooled to room temperature at a cooling rate of 30~250°C/s to obtain an alloy galvannealed GA product.

14. The process according to claim 13, which comprises one or more of the following features:

a total time of the rapid heat treatment and hot-galvanizing of step D) is 30~142s;

in step B), the coiling temperature is 580~650°C;

in step C), the cold rolling reduction rate is 60-80%;

in step D), when the rapid heating is performed in one stage, and the heating rate is 50~300°C/s;

in step D), the rapid heating is performed in two stages, wherein the strip steel or steel plate is heated in the first stage from room temperature to 550~650°C at a heating rate of 15~300°C/s, and heated in the second stage from 550~650°C to 750~845°C at a heating rate of 50~300°C/s; preferably, the strip steel or steel plate is heated in the first stage from room temperature to 550~650°C at a heating rate of 30~300°C/s, and heated in the second stage from 550~650°C to 750~845°C at a heating rate of 80~300°C/s;

in step D), the final temperature after rapid heating is 790~845°C or 790~830°C;

in the soaking process of step D), after the strip steel or steel plate is heated to the target temperature of dual phase region of austenite and ferrite, the temperature is kept unchanged for soaking;

in the soaking process of step D), the strip steel or steel plate is slightly heated up or cooled down in the soaking time, wherein the temperature after heating is no more than 845°C and the temperature after cooling is no less than 750°C;

the soaking time is 10~40s;

in step D), after alloying, the strip steel or steel plate is rapidly cooled to room temperature at a cooling rate of 30~200°C/s or 30~100°C/s to obtain an alloy galvannealed GA product.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

Fig. 23

Fig. 24

Fig. 25

Fig. 26

Fig. 27

Fig. 28

Fig. 29

Fig. 30

Fig. 31

Fig. 32

Fig. 33

## INTERNATIONAL SEARCH REPORT

| International application No. |
|---|
| **PCT/CN2022/084529** |

**A. CLASSIFICATION OF SUBJECT MATTER**

C22C 38/22(2006.01)i; C22C 38/24(2006.01)i; C22C 38/26(2006.01)i; C22C 38/28(2006.01)i; C21D 8/02(2006.01)i

According to International Patent Classification (IPC) or to both national classification and IPC

**B. FIELDS SEARCHED**

Minimum documentation searched (classification system followed by classification symbols)

C22C; C21D

Documentation searched other than minimum documentation to the extent that such documents are included in the fields searched

Electronic data base consulted during the international search (name of data base and, where practicable, search terms used)

CNABS, CNTXT, CNKI, EPODOC, DWPI, SIPOABS: 980MPa, 双相, 复相, 钢, 碳, 硅, 锰, 铝, dual phase steel, double-phase steel, carbon, silicon, manganese, aluminium, aluminum, C, Si, Mn, Al

**C. DOCUMENTS CONSIDERED TO BE RELEVANT**

| Category* | Citation of document, with indication, where appropriate, of the relevant passages | Relevant to claim No. |
|---|---|---|
| X | CN 105803321 A (PANZHIHUA IRON & STEEL RESEARCH INSTITUTE, PANGANG GROUP) 27 July 2016 (2016-07-27)<br>claims 1 and 6 | 1-14 |
| X | CN 109280854 A (PANZHIHUA IRON & STEEL RESEARCH INSTITUTE, PANGANG GROUP) 29 January 2019 (2019-01-29)<br>claims 1-10 | 1-14 |
| X | CN 109023149 A (WUHAN IRON & STEEL CO., LTD.) 18 December 2018 (2018-12-18)<br>claims 1-9 | 1-14 |
| X | CN 102586688 A (BAOSHAN IRON & STEEL CO., LTD.) 18 July 2012 (2012-07-18)<br>claims 1-11 | 1-14 |
| A | CN 112126852 A (TANGSHAN IRON & STEEL GROUP CO., LTD. et al.) 25 December 2020 (2020-12-25)<br>entire document | 1-14 |
| A | JP 6176620 A (KOBE STEEL LTD.) 19 April 1986 (1986-04-19)<br>entire document | 1-14 |
| A | US 2020123630 A1 (TATA STEEL LTD.) 23 April 2020 (2020-04-23)<br>entire document | 1-14 |

☑ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 June 2022** | **24 June 2022** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/084529**

**C.    DOCUMENTS CONSIDERED TO BE RELEVANT**

| Category* | Citation of document, with indication, where appropriate, of the relevant passages | Relevant to claim No. |
|---|---|---|
| A | US 2004035500 A1 (KOBE STEEL LTD.) 26 February 2004 (2004-02-26)<br>entire document | 1-14 |

Form PCT/ISA/210 (second sheet) (January 2015)

**INTERNATIONAL SEARCH REPORT**
Information on patent family members

International application No.

**PCT/CN2022/084529**

| Patent document cited in search report | | | Publication date (day/month/year) | Patent family member(s) | | | Publication date (day/month/year) |
|---|---|---|---|---|---|---|---|
| CN | 105803321 | A | 27 July 2016 | None | | | |
| CN | 109280854 | A | 29 January 2019 | None | | | |
| CN | 109023149 | A | 18 December 2018 | CN | 109023149 | B | 04 September 2020 |
| CN | 102586688 | A | 18 July 2012 | CN | 102586688 | B | 30 March 2016 |
| CN | 112126852 | A | 25 December 2020 | None | | | |
| JP | 6176620 | A | 19 April 1986 | None | | | |
| US | 2020123630 | A1 | 23 April 2020 | JP | 2020509151 | A | 26 March 2020 |
| | | | | EP | 3408418 | A1 | 05 December 2018 |
| | | | | KR | 20190131408 | A | 26 November 2019 |
| | | | | WO | 2018146695 | A1 | 16 August 2018 |
| US | 2004035500 | A1 | 26 February 2004 | DE | 60334761 | D1 | 16 December 2010 |
| | | | | JP | 2004076114 | A | 11 March 2004 |
| | | | | US | 2009242085 | A1 | 01 October 2009 |
| | | | | EP | 1391526 | A2 | 25 February 2004 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101802233 B
- CN 101768695 B
- CN 108486477 A
- CN 105543674 B
- CN 201711385126
- CN 108774681 A
- CN 106811698 B
- CN 107794357 B
- US 20190153558 A1